(19) Europäisches Patentamt
European Patent Office
Office européen des brevets

(11) EP 4 692 220 A1

(12) EUROPEAN PATENT APPLICATION
published in accordance with Art. 153(4) EPC

(43) Date of publication:
11.02.2026 Bulletin 2026/07

(21) Application number: 24784966.4

(22) Date of filing: 04.04.2024

(51) International Patent Classification (IPC):
*C08L 25/08* (2006.01) *C08K 5/01* (2006.01)
*C08L 51/04* (2006.01) *C08L 83/04* (2006.01)

(52) Cooperative Patent Classification (CPC):
**B29C 45/00; C08K 5/01; C08L 25/08; C08L 33/00; C08L 51/04; C08L 83/04**

(86) International application number:
**PCT/JP2024/013996**

(87) International publication number:
**WO 2024/210184 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.04.2023 JP 2023061012**

(71) Applicant: **PS Japan Corporation**
**Tokyo 112-0002 (JP)**

(72) Inventors:
- **KOBAYASHI, Matsutaro**
  **Tokyo 100-0006 (JP)**
- **IWAMOTO, Hirokazu**
  **Tokyo 100-0006 (JP)**
- **MATSUMOTO, Tatsuya**
  **Tokyo 100-0006 (JP)**

(74) Representative: **D Young & Co LLP**
**3 Noble Street**
**London EC2V 7BQ (GB)**

# (54) STYRENE-BASED RESIN COMPOSITION, INJECTION MOLDED BODY, IN-VEHICLE COMPONENT AND DISSIMILAR RESIN COMPOSITE MEMBER

(57) The problem solved by this disclosure is to provide a styrene-based resin composition excellent in heat resistance, toughness, rigidity, and weldability with acrylic resin materials. This disclosure is a styrene-based resin composition including a styrene-unsaturated carboxylic acid-based resin (A) containing styrene-based monomer units (al) and unsaturated carboxylic acid-based monomer units (a2), and core-shell structured rubbery particles (B) containing (meth)acrylic acid ester monomer units (b1), wherein the content of the styrene-unsaturated carboxylic acid-based resin (A) is 40 mass% to 95 mass%, and the content of the rubbery particles (B) is 5 mass% to 60 mass%, relative to the total amount (100 mass%) of the styrene-based resin composition.



Processed by Luminess, 75001 PARIS (FR)

## Description

TECHNICAL FIELD

The present disclosure relates to a styrene-based resin composition, an injection molded article molded using the styrene-based resin composition, a vehicle component including the injection molded article, and a dissimilar resin composite member.

BACKGROUND

Styrene-unsaturated carboxylic acid resins, typified by styrene-methacrylic acid copolymer resins, are excellent in heat resistance, transparency, rigidity, and appearance, and are also inexpensive, and since they are easily reusable through thermal decomposition into styrene monomers and also have excellent chemical recycling characteristics, they are widely used in packaging materials for food containers such as bento boxes and prepared foods, foam boards for thermal insulation of houses, and diffusion plates for liquid crystal televisions containing diffusers. Accordingly, their future application is also expected in uses that require heat resistance, such as vehicle lighting devices, including headlamps, rear lamps, fog lamps, and turn lamps, or interior and exterior vehicle materials, home appliances, or OA equipment.

However, compared to general-purpose styrene-based resins, styrene-unsaturated carboxylic acid resins are inferior in terms of mechanical strength, which is an issue. Therefore, a technique for imparting mechanical strength to the styrene-unsaturated carboxylic acid resin is required.

For example, PTL 1 discloses a technique for improving toughness while maintaining practical heat resistance by blending impact-resistant polystyrene and methyl methacrylate-butadiene-styrene copolymer (hereinafter also referred to as MBS resin) into a styrene-methacrylic acid copolymer.

On the other hand, as technologies related to materials used for vehicle lighting devices, PTLs 2 and 3 can be cited. PTL 2 discloses a technique for solving the problem that a lamp, in which a methyl methacrylate resin having a molecular weight of about 100,000 as a lens material and an ABS resin as a lamp body material are joined by thermal welding, has a crack-prone junction in the lens due to welding distortion. More specifically, it discloses a technology relating to a resin composition obtained by blending a methacrylic resin with a multilayer-structure polymer including a soft rubber layer. PTL 3 discloses a technique relating to a resin composition in which a maleimide-based copolymer composed of aromatic vinyl monomer units, vinyl cyanide monomer units, and maleimide monomer units is kneaded and mixed with one or two or more resins selected from ABS resin, ASA resin, AES resin, or SAN resin.

CITATION LIST

Patent Literature

PTL 1: JP 2018-44086 A
PTL 2: JP H07-282602 A
PTL 3: WO 2021/006265 A1

SUMMARY

(Technical Problem)

However, in the technology of the above PTL 1, the improvement in mechanical strength was insufficient. In particular, the improvement in impact resistance when a notch is present was insufficient, and it was confirmed that increasing the amount of MBS resin to improve impact resistance resulted in insufficient heat resistance and rigidity. Further, as also described in the above PTL 2, thermal welding, such as hot plate welding, has conventionally been used as a means of bonding a resin lamp lens and a resin lamp body. However, in bonding between resin molded articles, a new problem arises in that the lamp lens and the lamp body may peel off due to the compatibility between dissimilar resins. Furthermore, in the technology of PTL 3, although chemical resistance, heat resistance, impact resistance, and fluidity are considered, toughness, rigidity, and thermal weldability between different resins are not considered.

In addition, in response to the recent trend of forming a recycling-oriented society, chemical recycling of resin materials and the like is required. However, since ABS resin is difficult to recycle due to the generation of cyanide gas, an alternative to ABS resin is needed.

Therefore, the problem to be solved by the present disclosure is to provide a styrene-based resin composition

that is excellent in heat resistance, toughness, rigidity, and weldability with acrylic resin materials. Another problem to be solved by the present disclosure is to provide an injection molded article that is excellent in heat resistance, toughness, rigidity, and weldability with acrylic resin materials, a vehicle component including the injection molded article, and a dissimilar resin composite member bonded with the acrylic resin material.

(Solution to Problem)

In view of the above problem, the present inventor conducted intensive research and, as a result, succeeded in producing a styrene-based resin composition excellent in heat resistance, toughness, rigidity, and weldability with acrylic resin materials, by containing a predetermined amount of a styrene-unsaturated carboxylic acid-based resin (A) and core-shell structured rubbery particles (B), and also succeeded in producing an injection molded article using the composition and a vehicle component including the injection molded article, thereby completing the present disclosure. Specifically, the present disclosure is as follows:

[1] A styrene-based resin composition comprising a styrene-unsaturated carboxylic acid-based resin (A) containing a styrene-based monomer unit (a1) and an unsaturated carboxylic acid-based monomer unit (a2), and core-shell structured rubbery particles (B) containing a (meth)acrylic acid ester monomer unit (b1),
wherein a content of the styrene-unsaturated carboxylic acid-based resin (A) is 40 to 95 mass% and a content of the rubbery particles (B) is 5 to 60 mass%, relative to a total amount (100 mass%) of the styrene-based resin composition.
[2] The styrene-based resin composition according to the above [1], wherein the core-shell structured rubbery particles (B) further contain a styrene-based monomer unit (b4), and a content of the styrene-based monomer unit (b4) is 5 mass% or less relative to a total amount (100 mass%) of the core-shell structured rubbery particles (B).
[3] The styrene-based resin composition according to above [1] or [2], wherein a content of the (meth)acrylic acid ester monomer unit (b1) contained in the core-shell structured rubbery particles (B) is 3 to 40 mass% relative to the total amount (100 mass%) of the core-shell structured rubbery particles (B).
[4] The styrene-based resin composition according to any one of the above [1] to [3], wherein the core-shell structured rubbery particles (B) further contain a conjugated diene-based monomer unit (b2), and a content of the conjugated diene-based monomer unit (b2) is 50 to 90 mass% relative to the total amount (100 mass%) of the core-shell structured rubbery particles (B).
[5] The styrene-based resin composition according to any one of the above [1] to [4], wherein the styrene-based resin composition further contains 0.5 to 30 mass% of an impact-resistant styrene-based resin (C), relative to the total amount (100 mass%) of the styrene-based resin composition.
[6] The styrene-based resin composition according to any one of the above [1] to [5], further comprising 0.05 to 3.00 mass% of a lubricating oil (G).
[7] The styrene-based resin composition according to any one of the above [1] to [6], wherein the styrene-based resin composition further contains a lubricating oil (G) and the core-shell structured rubbery particles (B) further contain a styrene-based monomer unit (b4), and
$Y/X \leq 10$ is satisfied where a content of the styrene-based monomer units (b4) is denoted as Y and a content of the lubricating oil (G) is denoted as X.
[8] The styrene-based resin composition according to any one of the above [1] to [7], wherein the lubricating oil (G) is a silicone oil.
[9] The styrene-based resin composition according to any one of the above [1] to [8], wherein the core-shell structured rubbery particles (B) further contain one or two or more selected from the group consisting of a conjugated diene-based monomer unit (b2) and a siloxane-based monomer unit (b3), and a total content of the conjugated diene-based monomer unit (b2) and the siloxane-based monomer unit (b3) is 50 mass% or more relative to the total amount (100 mass%) of the core-shell structured rubbery particles (B).
[10] The styrene-based resin composition according to any one of the above [1] to [9], wherein a notched Charpy impact strength (in accordance with ISO 179, under a test condition of 1 eA) is 4.0 $kJ/m^2$ or more.
[11] The styrene-based resin composition according to any one of the above [1] to [10], wherein a content of all styrene-based monomer units is 72 mass% or less relative to the total amount (100 mass%) of the styrene-based resin composition.
[12] The styrene-based resin composition according to any one of the above [1] to [11], further comprising 0.5 mass% or more of one or two or more selected from the group consisting of an impact-resistant styrene-based resin (C), a styrene-based elastomer (D), and an acrylic elastomer (E), relative to the total amount (100 mass%) of the styrene-based resin composition.
[13] The styrene-based resin composition according to any one of the above [1] to [12], further comprising 1.0 mass% or more of an acrylic resin (F) relative to the total amount (100 mass%) of the styrene-based resin composition.
[14] The styrene-based resin composition according to any one of the above [1] to [12], having a lightness (L*) of 50 or

less.

[15] An injection molded article produced by injection molding the styrene-based resin composition according to any one of the above [1] to [14].

[16] The injection molded article according to the above [15], which is to be welded with an acrylic resin member produced from an acrylic resin composition.

[17] The injection molded article according to the above [14] or [15], which is used for vehicles.

[18] A dissimilar resin composite member comprising an acrylic resin member produced from an acrylic resin composition and a styrene-based resin member made of the styrene-based resin composition according to any one of the above [1] to [14], welded together,

wherein a content of all methyl methacrylate monomer units in the acrylic resin composition is more than 50 mass%,

a content of all styrene-based monomer units included in the styrene-based resin composition is more than 50 mass%, and a content of all methacrylic acid monomer units included in the styrene-based resin composition is 3 mass% or more, and

a three-dimensional plot distance (HSP distance) between Hansen solubility parameter (HSP) values [($\delta_{ds}$, $\delta_{ps}$, $\delta_{hs}$) $(J/cm^3)^{1/2}$] of a methyl ethyl ketone-soluble fraction of the styrene-based resin composition and Hansen solubility parameter (HSP) values [($\delta_{da}$, $\delta_{pa}$, $\delta_{ha}$) $(J/cm^3)^{1/2}$] of a chloroform-soluble fraction of the acrylic resin composition satisfy the following mathematical formula (I):

[Math. 1]

$$\text{HSP distance} = \{(\delta_{ds} - \delta_{da})^2 + (\delta_{ps} - \delta_{pa})^2 + (\delta_{hs} - \delta_{ha})^2\}^{1/2} \leq 4.0 \quad \text{... (Formula 1)}$$

in the above formula 1, $\delta_{ds}$ represents a dispersion force component $(J/cm^3)^{1/2}$ of the styrene-based resin composition, $\delta_{ps}$ $(J/cm^3)^{1/2}$ represents a polar component of the styrene-based resin composition, $\delta_{hs}$ $(J/cm^3)^{1/2}$ represents a hydrogen bonding component of the styrene-based resin composition, $\delta_{da}$ $(J/cm^3)^{1/2}$ represents a dispersion force component of the acrylic resin composition, $\delta_{pa}$ $(J/cm^3)^{1/2}$ represents a polar component of the acrylic resin composition, and $\delta_{ha}$ $(J/cm^3)^{1/2}$ represents a hydrogen bonding component of the acrylic resin composition.

[19] The dissimilar resin composite member according to the above [18], wherein a Vicat softening temperature of the styrene-based resin composition is 105 °C or higher.

(Advantageous Effect)

According to the present disclosure, a styrene-based resin composition to be used for a molded article excellent in heat resistance, toughness, rigidity, and weldability with acrylic resin materials is provided.

According to the present disclosure, it is possible to provide an injection molded article excellent in heat resistance, toughness, rigidity, and weldability with acrylic resin materials, a vehicle component including the injection molded article, and a dissimilar resin composite member bonded with the acrylic resin material.

## BRIEF DESCRIPTION OF THE DRAWINGS

In the accompanying drawings:

FIG. 1 is a schematic diagram of a welded component;

FIG. 2 is a schematic diagram of a welded component;

FIG. 3 is a schematic diagram of a mode in which a dissimilar resin composite member of the present embodiment is used for a vehicle rear lamp housing; and

FIG. 4 is a schematic diagram of one example of a test piece of the dissimilar resin composite member produced in the examples.

## DETAILED DESCRIPTION

The following provides a detailed description of an embodiment of the present disclosure (hereinafter referred to as "the present embodiment"). The present disclosure is, however, not limited to the embodiments disclosed herein, and

various modifications can be made within the spirit and scope of the disclosure.

[Styrene-Based Resin Composition]

The styrene-based resin composition (hereinafter sometimes simply referred to as the resin composition) in the present embodiment contains a styrene-unsaturated carboxylic acid-based resin (A) having styrene-based monomer units (a1) and unsaturated carboxylic acid-based monomer units (a2), and core-shell structured rubbery particles (B) including (meth)acrylic acid ester monomer units (b1), wherein the content of the styrene-unsaturated carboxylic acid-based resin (A) is 40 mass% to 95 mass%, and the content of the rubbery particles (B) is 5 mass% to 60 mass%, relative to the total amount (100 mass%) of the styrene-based resin composition.

The styrene-based resin composition in the present embodiment may further contain, as necessary, one or two or more selected from the group consisting of an impact-resistant styrene-based resin (C), a styrene-based elastomer (D), an acrylic elastomer (E), an acrylic resin (F), and a lubricating oil (G).

In this way, a styrene-based resin composition excellent in heat resistance, toughness, rigidity, and weldability with acrylic resin materials, particularly in thermal weldability, can be provided.

As general methods for welding or joining resin molded articles (particularly thermal welding or thermal joining), examples include joining using adhesives such as hot melt, thermal joining by thermally melting such as thermal plate welding, vibration welding utilizing frictional heat generated by vibrating the joint portion between resin molded articles, and laser welding by irradiating laser light onto the joint portion between resin molded articles and utilizing the heat generated by light absorption at the joint. However, regardless of the welding or joining method used, when welding or joining molded articles made of different types of resins, the weldability or joint strength is greatly influenced by the compatibility between the respective resins. Since the styrene-based resin composition of the present embodiment contains, in specific compounding ratios, the styrene-unsaturated carboxylic acid-based resin (A) of a specific composition and the core-shell structured rubbery particles (B) containing (meth)acrylic acid ester monomer units (b1), it is considered that the composition exhibits favorable weldability (for example, thermal weldability) particularly with acrylic resin materials, and also provides a styrene-based resin composition excellent in toughness and rigidity due to the presence of the core-shell structured rubbery particles (B).

Hereinafter, each component contained in the styrene-based resin composition of the present embodiment will be described.

"Styrene-Unsaturated Carboxylic Acid-Based Resin (A)"

In the present embodiment, the styrene-unsaturated carboxylic acid-based resin (A) is a copolymer resin (hereinafter also simply referred to as "Resin (A)") made of styrene-based monomer units (1) and unsaturated carboxylic acid-based monomer units (a2), as essential components, and contributes to improving the heat resistance of the styrene-based resin composition. Further, the styrene-unsaturated carboxylic acid-based resin (A) may additionally contain, as necessary, (meth)acrylic acid ester monomer units (a2-2) and/or other monomer units (a3), in addition to essential components, which are styrene-based monomer units (a1) and (meth)acrylic acid monomer units (a2-1). The content of the styrene-unsaturated carboxylic acid-based resin (A) is 40 to 95 mass%, preferably 45 to 94 mass%, more preferably 50 to 93 mass%, and even more preferably 55 to 92 mass%, relative to the total amount (100 mass%) of the styrene-based resin composition. By setting the content of the styrene-unsaturated carboxylic acid-based resin (A) to 40 mass% or more, a sufficient effect of imparting heat resistance can be obtained, and by setting it to 95 mass% or less, the effect of improving impact resistance due to the rubbery particles (B), which will be described later, can be obtained.

The styrene-unsaturated carboxylic acid-based resin (A) of the present embodiment is preferably a random copolymer or an alternating copolymer.

<Styrene-Based Monomer Unit (a1)>

In the styrene-unsaturated carboxylic acid-based resin (A) of the present embodiment, the content of the styrene-based monomer units (a1) is 60 to 98 mass%, preferably 70 to 97 mass%, more preferably 75 to 95 mass%, even more preferably 80 to 95 mass%, and most preferably in the range of 82 to 90 mass%, relative to the total amount of the styrene-unsaturated carboxylic acid-based resin (A). If the content of the styrene-based monomer units (a1) is less than 60 mass%, the fluidity and moldability is decreased, and if it exceeds 98 mass%, it becomes difficult to include the (meth)acrylic acid monomer units (a2-1), described later, in a desired amount, and particularly, the effect of improving heat resistance by the (meth)acrylic acid monomer units (a2-1) cannot be sufficiently obtained.

In the present embodiment, the styrene-based monomer units (a1) is not particularly limited and examples include, for example, styrene, $\alpha$-methylstyrene, $\beta$-methylstyrene, paramethylstyrene, orthomethylstyrene, metamethylstyrene, chlorostyrene, and bromostyrene. In particular, from an industrial perspective, styrene and $\alpha$-methylstyrene are

preferred, with styrene being more preferred. These may be used alone or in combination with two or more, as the styrene-based monomer units (a1).

The proportion of styrene monomer present in the styrene-based monomer units (a1) (i.e., the styrene content) is preferably 90.0 mass% or more, more preferably 95.0 mass% or more, further preferably 99.0 mass% or more, still more preferably 99.5 mass% or more, and most preferably 99.9 mass% or more. By setting the content of the styrene monomer in the styrene-based monomer units (a1) to 90.0 mass% or more, it becomes easier to control the polymerization reaction in an industrial process during the production of the styrene-unsaturated carboxylic acid-based resin (A), and the polymerization conversion rate can be maintained at a high level.

It should be noted that in the present specification, "styrene-based monomer unit (a1)" refers to a repeating unit that constitutes a polymer resulting from the polymerization of the styrene-based monomer units (a1), and is formed by the polymerization or cross-linking reaction of the styrene-based monomer units (a1) where the carbon-carbon double bond in the styrene-based monomer units (a1) is changed into a single bond (-C-C-). The same definition applies to other monomer units described in this specification.

<Unsaturated Carboxylic Acid-Based Monomer Unit (a2)>

In the styrene-unsaturated carboxylic acid-based resin (A) of the present embodiment, the unsaturated carboxylic acid-based monomer units (a2) serve to improve heat resistance, heat resistance, oil resistance, mechanical strength, scratch resistance, and the compatibility with the rubbery particles (B) and the acrylic resin (F), which will be described later, as well as to improve the weldability of the styrene-based resin composition with acrylic resin materials, particularly thermal weldability.

The unsaturated carboxylic acid-based monomer (a2) includes (meth)acrylic acid monomer (a2-1) and (meth) acrylic acid ester monomer (a2-2).

<(Meth)acrylic Acid Monomer (a2-1)>

In the styrene-unsaturated carboxylic acid-based resin (A) of the present embodiment, the (meth)acrylic acid monomer units (a2-1) function to improve heat resistance, oil resistance, and compatibility with the rubbery particles (B) and the acrylic resin (F), which will be described later, or to improve the weldability of the entire styrene-based resin composition to acrylic resin materials, particularly thermal weldability.

When the styrene-unsaturated carboxylic acid-based resin (A) of the present embodiment contains the (meth) acrylic acid monomer units (a2-1), the content of the (meth)acrylic acid monomer units (a2-1) relative to the total amount of the styrene-unsaturated carboxylic acid-based resin (A) is preferably 2 to 40 mass%, more preferably 3 to 35 mass%, even more preferably 5 to 30 mass%, still more preferably 8 to 25 mass%, and most preferably in the range of 10.5 to 20 mass%. In another aspect, the content of the (meth)acrylic acid monomer units (a2-1) is preferably 3 to 20 mass%, more preferably 4 to 17 mass%, and even more preferably 8 to 14 mass%. If the content of the (meth)acrylic acid monomer units (a2-1) is less than 2 mass%, the effect of significantly improving heat resistance becomes insufficient. On the other hand, a content of the (meth)acrylic acid monomer units (a2-1) exceeds 40 mass% is not preferred because reduced processability due to increased resin viscosity, bubble generation during molding due to increased moisture absorption, and excessively high viscosity during production. By setting the content of the (meth)acrylic acid monomer units (a2-1) to 2 mass% or more, the effect of improving heat resistance can be achieved, and by setting the content to 40 mass% or less, an excessive increase in viscosity can be suppressed. Particularly, by setting the content of the (meth)acrylic acid monomer units (a2-1) to 8 to 25 mass%, good compatibility with the acrylic resin (F) can be obtained. Moreover, when the acrylic resin (F) is further kneaded into the styrene-based resin composition, it becomes possible to efficiently obtain the effect of further improving the weldability of the entire styrene-based resin composition to acrylic resin materials, particularly thermal weldability and strength.

In the present embodiment, examples of the (meth)acrylic acid monomers (a2-1) include acrylic acid or methacrylic acid and the like. From an industrial perspective, it is particularly preferable to use these either alone or in combination of two or more as the (meth)acrylic acid monomer units (a2-1). Methacrylic acid, which has a high effect in improving heat resistance, is particularly preferred as the (meth)acrylic acid monomer units (a2-1).

<(Meth)acrylic Acid Ester Monomer Unit (a2-2)>

In the present embodiment, the styrene-unsaturated carboxylic acid-based resin (A) may further contain (meth) acrylic acid ester monomer units (a2-2). The (meth)acrylic acid ester monomer units (a2-2) serve the role of improving the weldability, particularly the thermal weldability, to acrylic resins which cannot be sufficiently achieved by the (meth)acrylic acid monomer units (a2-1) alone, and also serve to improve compatibility with the rubbery particles (B) and/or the acrylic resin (F), oil resistance, mechanical strength, and scratch resistance. It is preferable that the (meth)acrylic acid ester

monomer units (a2-2) are represented by the following general formula (1):

[Chem. 1]

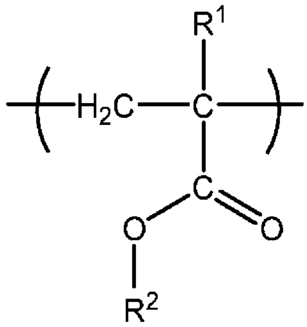

(1)

in the above general formula (i), $R^1$ represents a hydrogen atom or an alkyl group having 1 to 3 carbon atoms, and $R^2$ represents an ester substituent, specifically an alkyl group having 1 to 12 carbon atoms.

In the present embodiment, the number of carbon atoms in the ester substituent group ($R^2$ in the above general formula (1)) of the (meth)acrylic acid ester monomer units (a2-2) is preferably 10 or less, more preferably 8 or less, and still more preferably 4 or less. If the number of carbon atoms in the ester substituent group exceeds 10, the effect of lowering heat resistance becomes significant, which is undesirable.

Examples of the (meth)acrylic acid ester monomer (a2-2) used in the present embodiment include methyl (meth) acrylate, ethyl (meth)acrylate, propyl (meth)acrylate, butyl (meth)acrylate, cyclohexyl (meth)acrylate, (n-octyl) (meth) acrylate, (2-ethylhexyl) (meth)acrylate, and decyl (meth)acrylate. These may be used either alone or in combination. As the (meth)acrylic acid ester monomer (a2-2), methyl (meth)acrylate or butyl (meth)acrylate is preferred due to its industrial availability, and methyl methacrylate is particularly preferred because it suppresses the deterioration of heat resistance.

When the styrene-unsaturated carboxylic acid-based resin (A) of the present embodiment contains the (meth) acrylic acid ester monomer units (a2-2), the content range of the (meth)acrylic acid ester monomer units (a2-2) in the styrene-unsaturated carboxylic acid-based resin (A) is preferably, for example, 1 to 40 mass%, more preferably 2 to 32 mass%, even more preferably 3 to 20 mass%, further preferably 3 to 17 mass%, still more preferably 3 to 15 mass%, and most preferably 4 to 10 mass% relative to the total amount of the styrene-unsaturated carboxylic acid-based resin (A).

<Preferred Form of Styrene-Unsaturated Carboxylic Acid-based Resin (A)>

The styrene-unsaturated carboxylic acid-based resin (A) of the present embodiment may be a multicomponent copolymer containing the (meth)acrylic acid monomer units (a2-1) and the (meth)acrylic acid ester monomer units (a2-2). That is, the styrene-unsaturated carboxylic acid-based resin (A) of the present embodiment may be not only a binary copolymer of styrene-based monomer units (a1) and (meth)acrylic acid monomer units (a2-1), but also a ternary copolymer of a styrene-based monomer units (a1), (meth)acrylic acid monomer (a2-1), and (meth)acrylic acid ester monomer (a2-2), or a ternary copolymer containing styrene-based monomer units (a1) and two types of (meth)acrylic acid monomer units (a2-1). In this way, further effects of improving thermal weldability to acrylic resin materials, compatibility with rubbery particles (B) and acrylic resin (F), surface hardness, and mechanical strength can be obtained. Moreover, the effect of improving thermal weldability between the styrene-based resin composition and acrylic resin materials can also be obtained.

Additionally, if unsaturated carboxylic acid ester monomer units, such as the (meth)acrylic acid ester monomer units (a2-2), are positioned adjacent to unsaturated carboxylic acid monomer units, such as the (meth)acrylic acid units (a2-1), in the polymer chain, effects such as the suppression of cross-linking reactions between the unsaturated carboxylic acids can be obtained.

In particular, when thermal weldability with acrylic resin materials and compatibility with rubbery particles (B) are considered important, and further, when the impact resistance improvement effect by rubbery particles (B), and the weldability of the styrene-based resin composition with acrylic resin materials, particularly thermal weldability, are considered important, it is preferable that the styrene-unsaturated carboxylic acid-based resin (A) is a ternary copolymer of styrene-based monomer units (a1), (meth)acrylic acid monomer units (a2-1), and (meth)acrylic acid ester monomer units (a2-2). Moreover, it is more preferable that the ternary copolymer is a random copolymer.

When the styrene-unsaturated carboxylic acid-based resin (A) in the present embodiment has styrene-based monomer units (a1), (meth)acrylic acid monomer units (a2-1), and (meth)acrylic acid ester monomer units (a2-2), it is preferable that the content of the (meth)acrylic acid monomer units (a2-1) is preferably 2 to 30 mass%, and the content of the (meth)acrylic acid ester monomer units (a2-2) is preferably more than 0 and up to 20 mass%; it is more preferable that

the content of the (meth)acrylic acid monomer units (a2-1) is 3 to 25 mass% and the content of the (meth)acrylic acid ester monomer units (a2-2) is 2 to 17 mass%; it is even more preferable that the content of the (meth)acrylic acid monomer units (a2-1) is 5 to 20 mass% and the content of the (meth)acrylic acid ester monomer units (a2-2) is 3 to 15 mass%; it is still more preferable that the content of the (meth)acrylic acid monomer units (a2-1) is 9 to 17 mass% and the content of the (meth) acrylic acid ester monomer units (a2-2) is 4 to 10 mass%, relative to the total amount of the styrene-unsaturated carboxylic acid-based resin (A). By limiting the content of the (meth)acrylic acid ester monomer units (a2-2) to 20 mass% or less, a composition excellent in fluidity during molding and processing can be obtained.

<Other monomer units (a3)>

The styrene-unsaturated carboxylic acid-based resin (A) in the present embodiment may further contain other monomer units (a3) in addition to the above-mentioned styrene-based monomer units (a1), (meth)acrylic acid monomer units (a2-1), and/or (meth)acrylic acid ester monomer units (a2-2).

In other words, in the present embodiment, as long as the other monomer units (a3) are copolymerizable with the styrene-based monomer units (a1), the (meth)acrylic acid monomer units (a2-1), and/or the (meth)acrylic acid ester monomer units (a2-2), they may be copolymerized with a monomer other than the two mentioned above without any limitation in the extent that the effects of the present disclosure are not impaired.

For example, examples of the other monomer units (a3) other than the three monomers mentioned above include maleic anhydride, maleic acid, fumaric acid, itaconic acid, (meth)acrylonitrile, dimethyl maleate, dimethyl fumarate, diethyl fumarate, ethyl fumarate, maleimide, and nuclear-substituted maleimides.

In the present embodiment, when the styrene-unsaturated carboxylic acid-based resin (A) contains other monomer units (a3), the content of the other monomer units (a3) relative to the total amount of the styrene-unsaturated carboxylic acid-based resin (A) is preferably 12 mass% or less, more preferably 5 mass% or less, and even more preferably 2 mass% or less.

<Characteristics of Styrene-Unsaturated Carboxylic Acid-based Resin (A)>

The contents of the styrene-based monomer units (a1), the (meth)acrylic acid monomer units (a2-1), the (meth) acrylic acid ester monomer units (a2-2), and the other monomer units (a3) in the styrene-unsaturated carboxylic acid-based resin (A) of the present embodiment can be quantified by thermal decomposition GC/MS using calibration curves created with resins in which each monomer unit is known.

The melt flow rate of the styrene-unsaturated carboxylic acid-based resin (A) at 200 °C in the present embodiment is preferably 0.2 to 4.0, more preferably 0.3 to 3.5, and further preferably 0.4 to 3.0. A melt flow rate is 0.2 or more is preferred in view of the fluidity, and a melt flow rate of 4.0 or less is preferred in view of the mechanical strength of the resin. In the present disclosure, melt flow rate is a value measured at a temperature of 200 °C under a load of 5 kg in accordance with ISO 1133.

The weight average molecular weight (Mw) of the styrene-unsaturated carboxylic acid-based resin (A) in the present embodiment is in the range of preferably 100,000 to 400,000, more preferably 120,000 to 300,000, even more preferably 140,000 to 280,000, and still even more preferably 170,000 to 230,000. When the weight average molecular weight is in the range of 100,000 to 400,000, the styrene-unsaturated carboxylic acid-based resin (A) that exhibits excellent practicality in terms of a balance between impact strength and fluidity is obtained.

The number average molecular weight (Mn) of the styrene-unsaturated carboxylic acid-based resin (A) in the present embodiment is in the range of preferably 40,000 to 150,000, more preferably 50,000 to 120,000, and even more preferably 60,000 to 110,000.

The Z average molecular weight (Mz) of the styrene-unsaturated carboxylic acid-based resin (A) in the present embodiment is in the range of preferably 200,000 to 700,000, more preferably 250,000 to 500,000, and even more preferably in the range of 300,000 to 450,000.

The above average molecular weights can be measured by gel permeation chromatography, converted to polystyrene standards.

The Vicat softening temperature of the styrene-unsaturated carboxylic acid-based resin (A) in the present embodiment is preferably 105 to 135 °C, more preferably 107 to 130 °C, further preferably 108 to 128 °C, still more preferably 115 to 127 °C, and most preferably 120 to 126 °C. By setting the Vicat softening temperature of the styrene-unsaturated carboxylic acid-based resin (A) to 105 °C or higher, the effect of improving heat resistance of the composition can be obtained, and by setting it to 135°C or lower, blending with the acrylic resin (F) is facilitated. The method for measuring the Vicat softening temperature described in this specification is based on ISO 306, using either a 5 kg load with a heating rate of 50 °C/min or a 1 kg load with a heating rate of 120 °C/min.

<Method for Producing Styrene-Unsaturated Carboxylic Acid-based Resin (A)>

The method for producing the styrene-unsaturated carboxylic acid-based resin (A) in the present embodiment will be described below.

The method for producing the styrene-unsaturated carboxylic acid-based resin (A) in the present embodiment preferably includes a step of preparing a mixture solution by mixing the styrene-based monomer units (a1), the unsaturated carboxylic acid-based monomer (for example, the (meth)acrylic acid monomer units (a2-1) and/or the (meth)acrylic acid ester monomer units (a2-2)), other monomer units (a3), if necessary, and a solvent, a polymerization step of polymerizing the mixture solution to produce a reaction product, and a step of recovering the reaction product.

There are no particular limitations on the polymerization method for the styrene-unsaturated carboxylic acid-based resin (A), but radical polymerization is preferably adopted, for example. Of these, bulk polymerization or solution polymerization methods can be preferably adopted.

Specifically, the polymerization method includes a polymerization step of polymerizing polymerization raw materials (monomer components) and a devolatilization step of removing volatile components such as unreacted monomers and the polymerization solvent from the polymerization product.

In the present embodiment, when the polymerization raw materials are polymerized to obtain the styrene-unsaturated carboxylic acid-based resin (A), a polymerization initiator is typically included in the polymerization raw material composition. Examples of the polymerization initiator includes, for example, organic peroxides, including peroxy ketals such as 2,2-bis(t-butylperoxy)butane, 1,1-bis(t-butylperoxy)cyclohexane, and n-butyl-4,4-bis(t-butylperoxy) valerate, dialkyl peroxides such as di-t-butyl peroxide, t-butylcumyl peroxide, and dicumyl peroxide, diacyl peroxides such as acetyl peroxide and isobutyryl peroxide, peroxydicarbonates such as diisopropyl peroxydicarbonate, peroxy esters such as t-butyl peroxyacetate, ketone peroxides such as acetylacetone peroxide, and hydroperoxides such as t-butyl hydroperoxide. Among these, 1,1-bis(t-butylperoxy)cyclohexane is preferred from the viewpoint of the decomposition rate and the polymerization rate.

In the present embodiment, a chain transfer agent may also be used during polymerization of the styrene-unsaturated carboxylic acid-based resin (A) as necessary. Examples of chain transfer agents include, for example, $\alpha$-methylstyrene linear dimers, n-dodecyl mercaptan, t-dodecyl mercaptan, and n-octyl mercaptan.

As for the polymerization method for the styrene-unsaturated carboxylic acid-based resin (A), solution polymerization using a polymerization solvent can be employed. Aromatic solvents such as toluene, ethylbenzene, propylbenzene, and butylbenzene are preferred as the polymerization solvent, and, if needed, polar solvents such as alcohols or ketones can be combined to prepare a solvent system in which the solubility of the styrene-unsaturated carboxylic acid-based resin (A) is adjusted.

In the present embodiment, the polymerization solvent is used preferably in a range of 3 to 35 parts by mass, more preferably in a range of 5 to 30 parts by mass, relative to 100 parts by mass of all the monomers constituting the styrene-unsaturated carboxylic acid-based resin (A). If the content of the polymerization solvent exceeds 35 parts by mass relative to 100 parts by mass of all the monomers, the polymerization rate decreases, and the molecular weight of the obtained resin also decreases, leading to a reduction in mechanical strength of the resin. If the content of the polymerization solvent is less than 3 parts by mass, it may become difficult to control the removal of heat during polymerization. Adding the polymerization solvent is at a ratio of 3 to 35 parts by mass relative to 100 parts by mass of all the monomers is preferred for uniformizing the quality and from the viewpoint of control on the polymerization temperature.

Moreover, if a monohydric alcohol with 10 or more carbon atoms, which is an optionally added component of the styrene-based resin composition in the present embodiment, is added from the polymerization system, it is preferable to add a monohydric alcohol with 10 or more carbon atoms in the ratio of 1 to 10 mass% relative to the total polymerization solvent.

In the present embodiment, the apparatus used in the polymerization step to obtain the styrene-unsaturated carboxylic acid-based resin (A) is not limited, and may be appropriately selected according to a typical polymerization method of a styrene-based resin. For example, in the case where bulk polymerization is employed, a polymerization apparatus having one complete mixing-type reactor or a plurality of complete mixing-type reactors connected to one another may be used. The devolatilization step is also not limited; in the case where bulk polymerization is employed, polymerization is allowed to take place until the amount of unreacted monomers finally becomes preferably 40 mass% or less, more preferably 30 mass% or less, even more preferably 20 mass% or less, and devolatilization is performed by a well-known method to remove volatile components including such unreacted monomers. For example, conventional devolatilizers, such as flash drums, twin axis devolatilizers, thin film evaporators, and extruders, can be used, but devolatilizers in which the materials reside in fewer portions are preferred. Note that the temperature for the devolatilization is typically about 190 to 280 °C, and more preferably 190 to 260 °C from the viewpoint of inhibition of decomposition. The pressure for the devolatilization is typically about 0.13 to 4.0 kPa, preferably 0.13 to 3.0 kPa, and more preferably 0.13 to 2.0 kPa. Preferred devolatilization methods include a method of removing volatile components through heating under a reduced pressure, and a method of removing through an extruder or the like designed for the purpose of removing volatile

components, for example.

"Core-Shell Structured Rubbery Particles (B)"

In the present embodiment, core-shell structured rubbery particles (B) including (meth)acrylic acid ester monomer units (b1) (also simply referred to as rubbery particles (B)) serve to improve the impact resistance of the styrene-based resin composition, particularly the impact resistance, i.e., toughness, of the styrene-based resin composition when it has notched portions or the like.

The core-shell structured rubbery particles (B) of the present embodiment have a structure in which a shell portion containing a polymer comprising, as a main component, (meth)acrylic acid ester monomer units (b1) covers at least a part of a core portion consisting of a low glass transition temperature (Tg) polymer crosslinked body, and the core portion is at least partially coated by the shell portion. The core portion only needs to be present in one or more within the rubbery particles (B).

The low glass transition temperature (Tg) polymer crosslinked body constituting the core portion is preferably a polymer crosslinked body mainly composed of one or more selected from the group consisting of (meth)acrylic acid ester monomer units (b1), conjugated diene-based monomer units (b2), and siloxane-based monomer units (b3).

The polymer constituting the above shell portion is preferably a polymer comprising, as a main component, (meth)acrylic acid ester monomer units (b1), and if necessary, may further contain styrene-based monomer units (b4) described later. Therefore, the polymer constituting the above shell portion may be a polymer containing one or more monomer units selected from (meth)acrylic acid ester monomer units (b1), or a copolymer having one or more monomer units selected from styrene-based monomer units (b4) and one or more monomer units selected from (meth)acrylic acid ester monomer units (b1).

The term "main component" in the present specification means that the component accounts for 50 mass% or more of the total amount of the crosslinked body or polymer, and it is more preferably 60 mass% or more, 70 mass% or more, 80 mass% or more, 95 mass% or more, and 98 mass% or more, in increasing preference order.

The content of the core-shell structured rubbery particles (B) in the present embodiment is in the range of 5 to 60 mass%, more preferably 11 to 40 mass%, further preferably 16 to 35 mass%, still further preferably 17 to 30 mass%, and most preferably 18 to 26 mass%m relative to the total amount (100 mass%) of the styrene-based resin composition. By setting the content to 5 mass% or more relative to the total amount (100 mass%) of the styrene-based resin composition, the impact resistance can be improved. On the other hand, by setting the content to 60 mass% or less relative to the total amount (100 mass%) of the styrene-based resin composition, it is possible to prevent a decrease in heat resistance and rigidity. Particularly, by setting it to 16 mass% or more, the impact resistance against notches and the like can be improved. Further, by setting it to 30 mass% or less, it is possible to obtain a styrene-based resin composition having an excellent balance of impact resistance and rigidity.

The core-shell structured rubbery particles (B) in the present specification can be identified by an electron microscope in a manner similar to the method for calculating the average particle diameter of the rubbery polymer particles (C-2) described later. When the styrene-based resin composition of the present embodiment contains the impact-resistant styrene-based resin (C) described later and the core-shell structured rubbery particles (B), the discrimination between the rubbery particles (B) and the rubbery polymer particles (C-2) is carried out using an electron microscope. Further, if necessary, osmium tetroxide treatment and/or ruthenium complex treatment may be performed on the rubbery particles (B) and the rubbery polymer particles (C-2).

<(Meth)acrylic Acid Ester Monomer Unit (b1)>

The core-shell structured rubbery particles (B) of the present embodiment contain (meth)acrylic acid ester monomer units (b1). These (meth)acrylic acid ester monomer units (b1) enhance the affinity at the interface with the styrene-unsaturated carboxylic acid-based resin (A), play an important role in improving the impact resistance of the entire styrene-based resin composition by the rubbery particles (B), and also serve to improve the weldability with acrylic resin materials, particularly thermal weldability, as well as improve the stability and oil resistance of the rubbery particles (B).

The (meth)acrylic acid ester monomer units (b1) may be contained in either the core portion and/or the shell portion of the core-shell structured rubbery particles (B). When the (meth)acrylic acid ester monomer units (b1) are contained in the core portion, a composite rubber may be formed with a low glass transition temperature (Tg) polymer crosslinked structure whose main component is the conjugated diene monomer units (b2) or siloxane-based monomer units (b3) described later, thereby achieving not only improved impact resistance due to internal craze generation, but also thermal stability and oil resistance. On the other hand, when the (meth)acrylic acid ester monomer units (b1) are contained in the shell portion, the improved affinity at the interface with the styrene-unsaturated carboxylic acid-based resin (A) results in enhanced impact resistance. Furthermore, it also contributes to improving weldability with acrylic resin materials in the styrene-based resin composition, particularly the effect of improving thermal weldability.

In another mode of the present embodiment, the core-shell structured rubbery particles (B) may be configured such that the core portion and/or the shell portion is mainly composed of (meth)acrylic acid ester monomer units (b1). As a result, not only is impact resistance improved by internal craze generation, but also thermal stability or weather resistance is enhanced. Since it is preferable that the core portion has a relatively low glass transition temperature (Tg) and high affinity with the styrene-unsaturated carboxylic acid-based resin (A), the number of carbon atoms in the ester substituent group of the (meth)acrylic acid ester monomer units (b1) is preferably 1 to 10, more preferably 2 to 7, and still more preferably 3 to 5.

It should be noted that the core portion of the core-shell structured rubbery particles (B) may be composed solely of the (meth)acrylic acid ester monomer units (b1), or the shell portion of the rubbery particles (B) may be composed solely of the (meth)acrylic acid ester monomer units (b1).

As for the chemical structure of the (meth)acrylic acid ester monomer units (b1), it is preferably a monomer unit represented by the following general formula (1), similarly to the (meth)acrylic acid ester monomer units (a2-2) described above.

[Chem. 2]

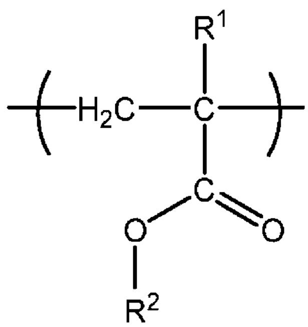

(1)

in the above general formula (1), $R^1$ represents a hydrogen atom or an alkyl group having 1 to 3 carbon atoms, and $R^2$ represents an ester substituent, specifically an alkyl group having 1 to 12 carbon atoms.

In the present embodiment, the number of carbon atoms in the ester substituent group ($R^2$ in the above general formula (1)) of the (meth)acrylic acid ester monomer units (b1) is preferably 10 or less, more preferably 7 or less, and still more preferably 4 or less. In particular, by making it 7 or less, the affinity with the interface of the styrene-unsaturated carboxylic acid-based resin (A) can be maintained.

Examples of the (meth)acrylic acid ester monomer (b1) in the present embodiment include (meth)acrylic acid methyl, (meth)acrylic acid ethyl, (meth)acrylic acid propyl, (meth)acrylic acid butyl, (meth)acrylic acid cyclohexyl, (meth) acrylic acid (n-octyl), (meth)acrylic acid (2-ethylhexyl), and (meth)acrylic acid decyl. These may be used either alone or in combination. As the (meth)acrylic acid ester monomer (b1), methyl (meth)acrylate or butyl (meth)acrylate is preferable from the viewpoints of industrial availability, thermal stability, heat resistance, and affinity at the interface with the styrene-unsaturated carboxylic acid-based resin (A). Particularly, from the viewpoint of heat resistance and affinity at the interface with the styrene-unsaturated carboxylic acid-based resin (A), methyl methacrylate is preferable, and from the viewpoint of thermal stability, butyl acrylate and methyl acrylate are preferable.

Further, when the (meth)acrylic acid ester monomer units (b1) are included in the core portion of the core-shell structured rubbery particles (B) and forms a composite with a phase comprising conjugated diene-based monomer units (b2) and/or siloxane-based monomer units (b3), it is preferable that the (meth)acrylic acid ester monomer units (b1) are mainly composed of butyl acrylate (more than 50 mass%) from the viewpoint of improving impact resistance. On the other hand, when the (meth)acrylic acid ester monomer units (b1) are included in the shell phase, it is preferable that the (meth) acrylic acid ester monomer units (b1) are mainly composed of methyl methacrylate (more than 50 mass%) and partially includes butyl acrylate and/or methyl acrylate, from the viewpoint of affinity at the interface with the styrene-unsaturated carboxylic acid-based resin (A).

In other words, when the (meth)acrylic acid ester monomer units (b1) are contained in the core portion of the rubbery particles (B) and forms a composite with a phase comprising conjugated diene-based monomer units (b2) and/or siloxane-based monomer units (b3), it is preferable that the main component of the (meth)acrylic acid ester monomer units (b1) in the core portion is mainly composed of butyl acrylate.

On the other hand, when the (meth)acrylic acid ester monomer units (b1) are contained in the shell portion of the rubbery particles (B), it is preferable that the (meth)acrylic acid ester monomer units (b1) in the shell portion is mainly composed of methyl methacrylate. The shell portion may partially contain butyl acrylate and/or methyl acrylate.

In the present embodiment, the content range of the (meth)acrylic acid ester monomer units (b1) in the entire

core-shell structured rubbery particles (B) is in the range of preferably 3 to 40 mass%, more preferably 5 to 35 mass%, still more preferably 7 to 30 mass%, even more preferably 10 to 27 mass%, further preferably 15 to 25 mass%, and most preferably 10 to 22 mass%, relative to the total amount of the core-shell structured rubbery particles (B). By setting the range to 3 to 40 mass%, excellent balance between rigidity and impact resistance of the styrene-based resin composition is achieved, and in particular, by setting the range to 7 to 30 mass%, toughness is improved due to increased affinity with the interface of the styrene-unsaturated carboxylic acid-based resin (A), and weldability, particularly thermal weldability, with acrylic resin materials of the styrene-based resin composition is excellent.

<Conjugated Diene-Based Monomer Unit (b2)>

In the present embodiment, the core-shell structured rubbery particles (B) may contain conjugated diene-based monomer units (b2). In the embodiment of the present application, the conjugated diene-based monomer (b-2) is a diolefin having a pair of conjugated double bonds, and examples include 1,3-butadiene, 2-methyl-1,3-butadiene (isoprene), 2,3-dimethyl-1,3-butadiene, 1,3-pentadiene, and 1,3-hexadiene. From the viewpoint of industrial availability, 1,3-butadiene and 2-methyl-1,3-butadiene (isoprene) are preferable, and from the viewpoint of improving impact strength, 1,3-butadiene is more preferable.

When the core-shell structured rubbery particles (B) contain conjugated diene-based monomer units (b2), it is preferable that the conjugated diene-based monomer units (b2) form the core portion. The conjugated diene-based monomer units (b2) are crosslinked by radical crosslinking reactions or crosslinking agents during polymerization, and by forming a low glass transition temperature (Tg) polymer crosslinked structure in the core portion, promote the generation of crazes against impact and exhibit an effect of improving impact resistance.

Furthermore, depending on the position of the double bonds that undergo polymerization and the shift of the double bonds during polymerization, the conjugated diene-based monomer units (b2) in the rubbery particles (B) can have multiple structures. For example, in the case of 1,3-butadiene, monomer units with 1,4-cis structure, monomer units with 1,4-trans structure, and monomer units with 1,2-vinyl structure are formed in a mixed manner. Since all of these are monomer units derived from the conjugated diene-based monomer (b2), in this specification, all of these structures are collectively referred to as conjugated diene-based monomer units (b2).

The content of the conjugated diene-based monomer units (b2) in the core-shell structured rubbery particles (B) is preferably 50 to 90 mass%, more preferably 60 to 87 mass%, still more preferably 65 to 85 mass%, and even more preferably 68 to 83 mass%, relative to the total rubbery particles (B). By setting the content of the conjugated diene-based monomer units (b2) to 50 mass% or more, a significant improvement in impact resistance is favorably achieved. Furthermore, by setting it to 90 mass% or less, compatibility with the styrene-unsaturated carboxylic acid-based resin (A) by the shell portion can be ensured.

<Siloxane-Based Monomer Unit (b3)>

In the present embodiment, it is preferable that the core-shell structured rubbery particles (B) contain siloxane-based monomer units (b3). The siloxane-based monomer unit (b3) is a so-called organosiloxane-based monomer structure represented by the following general formula (2).

[Chem. 3]

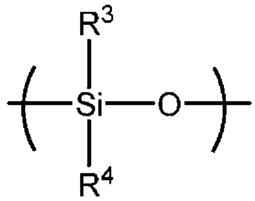

(2)

(In the above general formula (2), $R^3$ and $R^4$ independently represent a hydrogen atom, an alkyl group having 1 to 10 carbon atoms, or a phenyl group, and one or more $-CH_2-$ in the alkyl group may be substituted with -O- such that they are not adjacent to each other.)

$R^3$ and $R^4$ in the general formula (2) are preferably an alkyl group having 1 to 10 carbon atoms or a phenyl group, more preferably an alkyl group having 1 to 7 carbon atoms, still more preferably an alkyl group having 1 to 5 carbon atoms, even more preferably an alkyl group having 1 to 3 carbon atoms, and most preferably a methyl group.

When the core-shell structured rubbery particles (B) contain the siloxane-based monomer unit (b3), it is preferable that the siloxane-based monomer unit (b3) forms the core portion. The siloxane-based monomer unit (b3)

is crosslinked by a crosslinking agent, and the formation of a low glass transition temperature (Tg) polymer crosslinked structure in the core portion promotes the generation of crazes against impact and exhibits an effect of improving impact resistance.

Furthermore, the crosslinked structure of the siloxane-based monomer unit (b3) may form a composite rubber having a sea-island morphology with the crosslinked structure composed of the (meth)acrylic acid ester monomer unit (b1), forming internal crazes in the core portion and further enhancing the effect of improving impact resistance.

The content of the siloxane-based monomer unit (b3) in the core-shell structured rubbery particles (B) is preferably in the range of 15 to 90 mass%, more preferably 20 to 80 mass%, and still more preferably 25 to 70 mass% relative to the entire core-shell structured rubbery particles (B).

<Styrene-Based Monomer Unit (b4)>

The core-shell structured rubbery particles (B) in the present embodiment may also contain styrene-based monomer units (b4). When styrene-based monomer units (b4) are contained, it is preferable that the styrene-based monomer units (b4) form the shell portion. The styrene-based monomer (b4) is not particularly limited and examples include, for example, styrene, $\alpha$-methylstyrene, $\beta$-methylstyrene, paramethylstyrene, orthomethylstyrene, metamethylstyrene, chlorostyrene, and bromostyrene. In particular, from an industrial perspective, styrene and $\alpha$-methylstyrene are preferred, with styrene being more preferred. These may be used alone or in combination with two or more, as the styrene-based monomer (b4). In this case, the proportion of styrene monomer in the styrene-based monomer (b4) (i.e., styrene content) is preferably 90.0 mass% or more, more preferably 95.0 mass% or more, still more preferably 99.0 mass% or more, even more preferably 99.5 mass% or more, and most preferably 99.9 mass% or more. By setting the styrene monomer content in the styrene-based monomer (b4) to 90.0 mass% or more, it becomes easier to control the polymerization reaction and polymerization conversion rate in industrial processes.

The content of the styrene-based monomer unit (b4) contained in the core-shell structured rubbery particles (B) is preferably 30 mass% or less, more preferably 25 mass% or less, 22 mass% or less, 18 mass% or less, 14 mass% or less, 12 mass% or less, 10 mass% or less, 8.0 mass% or less, 5.0 mass% or less, 4.0 mass% or less, 3.0 mass% or less, 2.0 mass% or less, 1.0 mass% or less, 0.5 mass% or less, 0.1 mass% or less, and most preferably 0 mass%, relative to the entire rubbery particles (B)). Particularly, by setting the content to 5.0 mass% or less, excellent affinity with the interface of the styrene-unsaturated carboxylic acid-based resin (A) is achieved, and the effect of improving impact resistance is more likely to be obtained.

Further, when the core-shell structured rubbery particles (B) contain styrene-based monomer units (b4), the lower limit of the content of the styrene-based monomer units (b4) may be more than 0 mass% relative to the entire rubbery particles (B). The preferred range of the content of the styrene-based monomer units (b4) is more than 0 mass% and 5.0 mass% or less relative to the entire rubbery particles (B).

<Other Monomer Units (b5)>

The core-shell structured rubbery particles (B) in the present embodiment may further include other monomer units (b5) in addition to the (meth)acrylic acid monomer units (b1), and, if necessary, the conjugated diene-based monomer units (b2), the siloxane-based monomer units (b3), and the styrene-based monomer units (b4).

That is, in the present embodiment, as long as the other monomer units (b5) may be copolymerized with the (meth)acrylic acid monomer units (b1), and, if necessary, the conjugated diene-based monomer units (b2), the siloxane-based monomer units (b3), and the styrene-based monomer units (b4), and the other monomer units (b5) may be copolymerized with monomers other than those listed above, without particular limitation, in the range where the effects of the disclosure are not impaired.

For example, examples of the other monomer units (a5) other than the three monomers mentioned above include maleic anhydride, maleic acid, fumaric acid, itaconic acid, (meth)acrylonitrile, dimethyl maleate, dimethyl fumarate, diethyl fumarate, ethyl fumarate, maleimide, and nuclear-substituted maleimides.

In the present embodiment, when the core-shell structured rubbery particles (B) include other monomer units (b5), the content of the other monomer units (b5) is preferably 12 mass% or less, more preferably 5 mass% or less, and still more preferably 2 mass% or less, relative to the entire core-shell structured rubbery particles (B). The preferred range of the content of the other monomer units (b5) is more than 0 mass% and 5.0 mass% or less relative to the entire rubbery particles (B).

<Particle Diameter of Core-Shell Structured Rubbery Particles (B)>

The average particle diameter of the core-shell structured rubbery particles (B) is in the range of preferably 0.10 to 2.0 $\mu$m, more preferably 0.12 to 1.7 $\mu$m, still more preferably 0.14 to 1.2 $\mu$m, even more preferably 0.15 to 1.0 $\mu$m, and still

even more preferably 0.16 to 0.50 μm or 0.19 to 0.30 μm. In particular, by setting the particle diameter in the range of 0.10 to 2.0 μm, an excellent effect of improving impact resistance in the styrene-based resin composition is achieved.

In the present disclosure, the method for measuring the average particle diameter is the value measured from cross-sectional observation images under a transmission electron microscope, as described in the Examples section below.

<Preferred Form Of Core-Shell Structured Rubbery Particles (B)>

A preferred form of the core-shell structured rubbery particles (B) according to the present embodiment is such that the core portion is a low glass transition temperature (Tg) polymer crosslinked body mainly composed of one or two or more selected from the group consisting of (meth)acrylic acid ester monomer units (b1), conjugated diene-based monomer units (b2), and siloxane-based monomer units (b3), and the shell portion is a polymer mainly composed of (meth)acrylic acid ester monomer units (b1). Another preferred form of the core-shell structured rubbery particles (B) according to the present embodiment is such that the core portion contains a low glass transition temperature (Tg) polymer crosslinked body mainly composed of one or two or more selected from the group consisting of conjugated diene-based monomer units (b2) and siloxane-based monomer units (b3), and the shell portion is a polymer mainly composed of (meth) acrylic acid ester monomer units (b1).

In the present embodiment, the core-shell structured rubbery particles (B) contain one or two or more selected from the group consisting of conjugated diene monomer units and siloxane-based monomer units, and the total content of the conjugated diene-based monomer units (b2) or the siloxane-based monomer units (b3) is preferably 50 mass% or more relative to the total amount (100 mass%) of the core-shell structured rubbery particles (B).

A preferred form of the low glass transition temperature (Tg) polymer crosslinked body constituting the above-described core portion is preferably one mainly composed of conjugated diene-based monomer units (b2), and more preferably, it is polybutadiene rubber mainly composed of butadiene monomer units, when improving toughness is important.

When weather resistance is important together with improving toughness, it is preferable that the core portion is mainly composed of one or two or more selected from the group consisting of (meth)acrylic acid ester monomer units (b1) and siloxane-based monomer units (b3), and more preferably is a composite rubber having a sea-island structure composed of silicone rubber mainly composed of polydimethylsiloxane and acrylic rubber mainly composed of acrylic acid (n-butyl) monomer units.

A preferred form of the polymer constituting the above-described shell portion is a polymer mainly composed of (meth)acrylic acid ester monomer units (b1), and the content of methyl methacrylate monomer units is more preferably 60 mass% or more, still more preferably 80 mass% or more, even more preferably 90 mass% or more, further more preferably 95 mass% or more, yet more preferably 97 mass% or more, even yet more preferably 98 mass% or more, and most preferably 99 mass% or more, relative to the total amount of the shell portion. By setting the content of methyl methacrylate monomer units to 90 mass% or more relative to the total amount of the shell portion, compatibility at the interface with the styrene-unsaturated carboxylic acid-based resin (A) can be improved, and a high toughness enhancement effect can be obtained.

<Production Method of Core-Shell Structured Rubbery Particles (B)>

As a method for producing the core-shell structured rubbery particles (B), an emulsion polymerization method in which particles (core portion) of rubber latex (for example, polybutadiene-based rubber latex, polyorganosiloxane-based rubber latex, polyorganosiloxane-acrylic rubber composite latex, etc.) are first produced and then the shell phase is graft copolymerized is preferred. This makes it possible to control the particle diameter to a desired size.

<<Impact-Resistant Styrene-Based Resin (C)>>

As a preferred mode of the present embodiment, it is preferable that the styrene-based resin composition contains an impact-resistant styrene-based resin (C) (also simply referred to as resin (C)). By appropriately containing a rubber-modified styrene-based resin (C), the styrene-based resin composition can exhibit a synergistic effect with the rubbery particles (B), and can provide a styrene-based resin composition or an injection molded article that is excellent in impact strength.

The rubber-modified styrene-based resin (C) of the present embodiment has a structure in which a rubbery polymer (C-R) having conjugated diene-based monomer units (c2), such as polybutadiene monomer units, is contained in a styrene-based polymer matrix (C-1) composed of resin containing styrene-based monomer units (c1) and, optionally, other monomer units (c3), and a styrene-based polymer containing styrene-based monomer units (c1) and, optionally, other monomer units (c3) is grafted onto, and/or encapsulated within the rubbery polymer (C-R) to form rubbery polymer

particles (C-2) dispersed therein.

That is, the impact-resistant styrene-based resin (C) may be a so-called high impact polystyrene resin (HIPS resin) obtained by polymerizing the styrene-based monomer (c1) and, optionally, other monomers (c3) in the presence of the rubbery polymer (C-R). In other words, the impact-resistant styrene-based resin (C) of the present embodiment contains a styrene-based polymer matrix (C-1) and rubbery polymer particles (C-2). The rubbery polymer particles (C-2) are particles composed of the rubbery polymer (C-R), and the styrene-based polymer composed of the styrene-based monomer (c1) and, optionally, other monomers (c3) is grafted onto the surface of the particles and/or encapsulated within the rubbery polymer particles (C-2). The styrene-based polymer matrix (C-1) is a continuous phase of a resin composed of the styrene-based monomer (c1) and, optionally, other monomers (c3). Furthermore, it is preferable that the rubber-modified styrene-based resin (C) has a sea-island structure in which the rubbery polymer particles (C-2) (island phase) are present in the styrene-based polymer matrix (C-1) (sea phase).

Therefore, the polymer matrix (C-1) contains a styrene-based polymer formed by copolymerizing the styrene-based monomer (c1) and, optionally, other monomers (c3). In addition, the rubbery polymer particles (C-2) are rubber crosslinked particles composed mainly of a rubbery polymer (C-R) having conjugated diene-based monomer units (c2), and the surfaces of the particles are grafted with a styrene-based polymer containing the styrene-based monomer units (c1) and, optionally, other monomers (c3), and the styrene-based polymer may also be encapsulated within the rubber crosslinked particles.

When the styrene-based composition of the present embodiment contains an impact-resistant styrene-based resin (C), the content of the impact-resistant styrene-based resin (C) in the styrene-based composition is preferably 0.5 to 30 mass%, more preferably 2 to 25 mass%, even more preferably 3 to 20 mass%, and still more preferably in the range of 4 to 17 mass% relative to the total amount of the styrene-based resin composition. Particularly, by setting the content of the impact-resistant styrene-based resin (C) within the range of 0.5 to 30 mass%, an effect of improving impact resistance can be exhibited through interaction with the rubbery particles (B), and particularly, by setting the content within the range of 3 to 20 mass%, a styrene-based resin composition excellent in impact resistance and thermal fusion property to acrylic resin materials can be obtained.

<Styrene-Based Monomer (c1)>

In the present embodiment, the styrene-based monomer (c1) is not particularly limited and examples include, for example, styrene, α-methylstyrene, β-methylstyrene, paramethylstyrene, orthomethylstyrene, metamethylstyrene, chlorostyrene, and bromostyrene. In particular, from an industrial perspective, styrene and α-methylstyrene are preferred, with styrene being more preferred. These may be used alone or in combination with two or more as the styrene monomer (c1).

The presence ratio of styrene monomers (i.e., styrene content) in the styrene-based monomer (c1) is preferably 90.0 mass% or more, more preferably 95.0 mass% or more, even more preferably 99.0 mass% or more, still more preferably 99.5 mass% or more, and most preferably 99.9 mass% or more. By setting the styrene monomer content in the styrene-based monomer (c1) to 90.0 mass% or more, the polymerization reaction can be more easily controlled in an industrial process during the production of the impact-resistant styrene-based resin (C), and the polymerization conversion rate can be maintained at a high level.

<Conjugated Diene-Based Monomer (c2)>

The rubbery polymer (C-R) or the rubbery polymer particles (C-2) in the present embodiment are composed of conjugated diene-based monomer units (c2).

In the present specification, the conjugated diene-based monomer (c2) is a diolefin monomer having a pair of conjugated double bonds, and examples include 1,3-butadiene, 2-methyl-1,3-butadiene (isoprene), 2,3-dimethyl-1,3-butadiene, 1,3-pentadiene, and 1,3-hexadiene. From the viewpoint of industrial availability, 1,3-butadiene and 2-methyl-1,3-butadiene (isoprene) are preferred.

The position of the double bond in the conjugated diene-based monomer (c2) shifts during polymerization. In the case of 1,3-butadiene, for example, the structures of the conjugated diene-based monomer units in the rubbery polymer (C-R) include a mixture of a 1,4-cis structure unit, a 1,4-trans structure unit, and a 1,2-vinyl structure unit; however, all of these are collectively referred to as the conjugated diene-based monomer units (c2).

In the present embodiment, the content of the conjugated diene-based monomer units (c2) in the impact-resistant styrene-based resin (C) is preferably 0.5 to 20.0 mass%, more preferably 1.0 to 15.0 mass%, and still more preferably 2.0 to 13.0 mass%, relative to the total amount of the impact-resistant styrene-based resin (C). The content of the conjugated diene-based monomer units (c2) in the impact-resistant styrene-based resin (C) and in the styrene-based resin composition can be measured according to the procedures described in the Examples section below or by an equivalent method.

<Other Monomer Units (c3)>

The other monomers (units) (c3) in the impact-resistant styrene-based resin (C) of the present embodiment include (meth)acrylic acid ester monomers such as methyl acrylate, ethyl acrylate, propyl acrylate, (n-butyl) acrylate, isopropyl acrylate, methyl methacrylate, ethyl methacrylate, propyl methacrylate, (n-butyl) methacrylate, and isopropyl methacrylate; maleic anhydride; N-phenylmaleimide; and N-cyclohexylmaleimide. Among these, from the viewpoint of industrial availability and ease of copolymerization with styrene-based monomer units (c1), (n-butyl) acrylate and methyl methacrylate are preferred, and from the viewpoint of thermal fusion property and heat resistance of the entire styrene-based resin composition with respect to acrylic resin materials, methyl methacrylate is most preferred.

In the present embodiment, the content of other monomers (units) (c3) in the impact-resistant styrene-based resin (C) is preferably 70 mass% or less, more preferably 60 mass% or less, relative to the total amount of the impact-resistant styrene-based resin (C).

In particular, when the impact-resistant styrene-based resin (C) contains (meth)acrylic acid ester monomers as other monomers (c3), the (meth)acrylic acid ester monomers are contained in an amount of preferably 30 to 60 mass%, more preferably 33 to 58 mass%, even more preferably 36 to 56 mass%, and still more preferably in the range of 39 to 54 mass% relative to the total amount of the polymer matrix (C-1). By setting the amount in the range of 30 to 60 mass%, compatibility with the styrene-unsaturated carboxylic acid-based resin (A) is improved, and by setting the amount in the range of 36 to 56 mass%, an excellent balance between compatibility with the styrene-unsaturated carboxylic acid-based resin (A) and thermal fusion property with acrylic resin materials can be achieved.

<Rubbery Polymer Particles (C-2)>

In the present embodiment, the rubbery polymer (C-R) constituting the rubbery polymer particles (C-2) in the impact-resistant styrene-based resin (C) is preferably formed from conjugated diene-based monomers (c2), and more preferably is a polymer having conjugated diene-based monomer units (c2). Specific examples of the rubbery polymer (C-R) include polybutadiene, polyisoprene, natural rubber, polychloroprene, styrene-butadiene copolymers, and acrylonitrile-butadiene copolymers. From an industrial viewpoint, polybutadiene and styrene-butadiene copolymers are preferred. The polybutadiene may be high-cis polybutadiene with a high cis content, low-cis polybutadiene with a low cis content, or a combination of both. The structure of the styrene-butadiene copolymer may be a random structure, a block structure, or a combination thereof. These rubbery polymers (C-R) may be used singly or in combination of two or more. A saturated rubber obtained by hydrogenating a butadiene-based rubber may be used.

In the present embodiment, it is preferable that a polymer containing styrene-based monomer units (c1) and, optionally, other monomers (c3) is occluded within the rubbery polymer particles (C-2), which are the dispersed particles of the rubbery polymer (C-R). As the form of such occlusion, dispersed particles of a so-called salami structure, in which the rubbery polymer (C-2) occludes multiple island-like domain phases composed of polymers having styrene-based monomer units (c1), are preferred. In addition, a polymer containing styrene-based monomer units (c1) and, optionally, other monomers (c3) may be grafted onto the surface of the rubbery polymer particles (C-2).

The average particle diameter of the rubbery polymer particles (C-2) in the impact-resistant styrene-based resin (C) of the present embodiment is preferably 0.4 to 5.0 μm, more preferably 0.5 to 4.0 μm, and even more preferably 0.7 to 3.0 μm. By setting it to 0.4 μm or more, rubbery polymer particles (C-2) having a larger particle diameter than the particle diameter of the rubbery particles (B) constituting the styrene-based resin composition can be introduced, so that the initial stress concentration when impact is applied to the styrene-based resin composition can be absorbed. As a result, the impact resistance is improved. By setting it to 5.0 μm or less, the number of introduced particles can be increased.

The impact-resistant styrene-based resin (C) is obtained by polymerizing the styrene-based monomer (c1) in a reactor equipped with a stirrer in the presence of the rubbery polymer (C-R), and the average particle diameter of the rubbery polymer particles (C-2) can be adjusted by adjusting the stirring speed of the stirrer, the molecular weight of the rubbery polymer (C-2) used, and the like. In the present disclosure, the average particle diameter of the rubbery polymer particles (C-2) is a value measured from a cross-sectional observation image under a transmission electron microscope, as described in the Examples section below. It should be noted that the rubbery polymer particles (C-2) are stretched under an orientation field during injection molding or stretch sheet molding, and the particle diameter increases by approximately 105 to 400%.

In the present embodiment, the melt flow rate at 200 °C of the impact-resistant styrene-based resin (C) is preferably 0.5 to 10.0 g/10 min., more preferably 0.7 to 8.0 g/10 min., and even more preferably 1.0 to 7.0 g/10 min. If the melt flow rate is within the range of 0.5 to 10.0 g/10 min., good compatibility with the styrene-unsaturated carboxylic acid-based resin (A) and good mechanical strength can be achieved. In the present disclosure, melt flow rate is a value measured at a temperature of 200 °C under a load of 5 kg in accordance with ISO 1133.

When the styrene-based resin composition of the present embodiment contains the impact-resistant styrene-based resin (C), the chloroform-insoluble fraction of the styrene-based resin composition is preferably 10% to 40%, more

preferably 15% to 35%, and even more preferably 20% to 30%.

The "chloroform-insoluble fraction" of the styrene-based resin composition refers to the component that remains undissolved after adding 1 g of the styrene-based resin composition of interest to 20 mL of chloroform and shaking at 23 °C for 2 hours, and the chloroform-insoluble fraction may be the total amount of the rubbery polymer particles (C-2) contained in the impact-resistant styrene-based resin (C) and the core-shell structured rubbery particles (B), relative to the total amount of the styrene-based resin composition. The content of the rubbery polymer particles (C-2) includes the resin occluded within the particles and the grafted polymer. The content of the rubbery particles (B) includes the core portion, the shell part, and the grafted polymer.

The method for calculating the "chloroform-insoluble fraction" is specifically as follows.

After precisely weighing 1 g (W1) of the target substance into a sedimentation tube and adding 20 mL of chloroform, shaking is performed at 23 °C for 2 hours, followed by centrifugation using a centrifuge (model SS-2050A manufactured by Manufactured by Sakuma Seisakusho Co., Ltd., rotor: 6B-N6L) at a temperature of 4 °C, rotation speed of 20,000 rpm, and centrifugal acceleration of 45,100 × G for 60 minutes. The sedimentation tube was slowly tilted to about 45 degrees, and the supernatant liquid was removed by decantation. The mass of the insoluble fraction containing chloroform was weighed precisely, and defined as W5. Subsequently, vacuum drying was continued at 160 °C under conditions of 3 kPa or less for 1 hour, and after cooling to room temperature in a desiccator, the mass of the chloroform-insoluble fraction was precisely weighed and defined as W6. Then, the chloroform-insoluble fraction was recovered from the precipitation tube. The chloroform-insoluble content and the swelling index of the chloroform-insoluble fraction were determined using the following equations.

$$\text{Swelling index of chloroform-insoluble fraction} = (W5 / W6)$$

$$\text{Chloroform insoluble content (\%)} = (W6 / W1) \times 100$$

<Method for Producing Impact-Resistant Styrene-Based Resin (C)>

The method for producing the impact-resistant styrene-based resin (C) is not particularly limited, but it can be produced by bulk polymerization (or solution polymerization) of the styrene-based monomer (c1), and, if necessary, other monomers (c3) and a solvent, in the presence of the rubbery polymer (C-R), or by bulk-suspension polymerization that transitions to suspension polymerization during the reaction, or by emulsion graft polymerization in the presence of latex particles that are the rubbery polymer (C-2). In the bulk polymerization, a mixed solution to which the rubbery polymer (C-R), the styrene-based monomer (c1), and, if necessary, other monomers (c3), an organic solvent, an organic peroxide, and/or a chain transfer agent are added is continuously fed to a polymerization apparatus which is constituted by connecting a complete mixing type reactor or a tank type reactor and a plurality of tank type reactors in series.

<<Styrene-Based Elastomer (D)>>

As a preferred embodiment of the present disclosure, it is preferable that the styrene-based resin composition further contains a styrene-based elastomer (D) (also simply referred to as elastomer (D)). The styrene-based elastomer (D) used in the styrene-based resin composition of the present disclosure is a block copolymer in which the hard block is a styrene-based monomer (unit) (d1) and the soft block is a conjugated diene-based monomer (unit) (d2). As the styrene-based elastomer (D), a block copolymer having a hard block of the styrene-based monomer unit (d1) and a soft block of the butadiene monomer unit is more preferred.

As the styrene-based monomer (d1), monomers similar to the above-described styrene-based monomer (a1) can be used. As the conjugated diene-based monomer (d2), monomers similar to the above-described conjugated diene-based monomer (c2) can be used.

Preferred block copolymer chain structures for the styrene-based elastomer (D) include styrene-based monomer unit (d1)-butadiene monomer unit diblock type, styrene-based monomer unit (d1)-butadiene monomer unit-styrene-based monomer unit (d1) triblock type, and butadiene monomer unit-styrene-based monomer unit (d1)-butadiene monomer unit triblock type. From the viewpoint of improving mechanical strength, the styrene-based elastomer (D) is preferably a triblock-type block copolymer of styrene-based monomer unit (d1)-butadiene monomer unit-styrene-based monomer unit (d1).

With regard to the content of the styrene-based monomer unit (d1) and the conjugated diene-based monomer unit (d2) constituting the styrene-based elastomer (D), the content of the styrene-based monomer unit (d1) is preferably 20 to 70 mass%, more preferably 25 to 50 mass% relative to the total amount of the styrene-based elastomer (D), and the content of the conjugated diene-based monomer unit (d2) is the remainder to make up 100 mass%. If the content of the

styrene-based monomer unit (d1) is 20 to 70 mass%, dispersibility in the styrene-unsaturated carboxylic acid-based resin (A) becomes suitably good, and a product excellent in mechanical strength and appearance can be obtained.

As methods for producing styrene-based elastomers (D), such as styrene-butadiene elastomers, examples include radical polymerization, anionic polymerization, and polymer reaction methods, but from an industrial viewpoint, anionic polymerization is preferable.

When the styrene-based resin composition of the present embodiment contains a styrene-based elastomer (D), the content of the styrene-based elastomer (D) is preferably 0.5 to 10.0 mass%, more preferably 1.0 to 7.0 mass%, and even more preferably 1.5 to 4.5 mass% relative to the total amount of the styrene-based resin composition.

It should be noted that the styrene-based elastomer (D) of the present embodiment is a polymer different from the rubbery polymer (C-R) or the rubbery polymer particles (C-2).

<<Acrylic Elastomer (E)>>

As a preferred mode of the present embodiment, it is preferable that the styrene-based resin composition contains an acrylic elastomer (E) (also simply referred to as elastomer (E)). The acrylic elastomer (E) used in the styrene-based resin composition of the present disclosure is a block copolymer in which the hard block is composed of methyl methacrylate monomer units (e1), and the soft block is composed of acrylic acid ester monomer units (e2). As the acrylic elastomer (E), a block copolymer having a hard block of methyl methacrylate monomer (unit) and a soft block of acrylic acid ester monomer unit (e2) is more preferable.

Accordingly, although the acrylic elastomer (E) is a block copolymer, the acrylic resin (F) described later is a random copolymer or an alternating copolymer, and they differ in this respect.

As the acrylic acid ester monomer (e2), examples include monomers similar to the acrylic acid ester monomer units among the (meth)acrylic acid ester monomer units (f1) described below.

Preferred chain structures of the block copolymerization of the acrylic elastomer (E) include methyl methacrylate-acrylic acid ester (e2) block type, methyl methacrylate-acrylic acid ester (e2)-methyl methacrylate triblock type, and acrylic acid ester (e2)-methyl methacrylate-acrylic acid ester (e2) triblock type, but from the viewpoint of improving mechanical strength, the methyl methacrylate-acrylic acid ester (e2)-methyl methacrylate triblock type is preferable.

With regard to the content of the methyl methacrylate monomer (e1) and the acrylic acid ester monomer (e2) that constitute the acrylic elastomer (E), the content of the methyl methacrylate monomer (e1) is preferably 20 to 65 mass%, more preferably 30 to 55 mass% relative to the total amount of the acrylic elastomer (E). On the other hand, the content of the acrylic acid ester monomer (e2) is the remainder to make up 100 mass%. If the content of the methyl methacrylate monomer (e1) is 20 to 65%, the dispersibility into the styrene-unsaturated carboxylic acid-based resin (A) becomes appropriately good, and a product excellent in mechanical strength and appearance can be obtained.

When the styrene-based resin composition of the present embodiment contains an acrylic elastomer (E), the content of the acrylic elastomer (E) is preferably 0.5 to 20 mass%, more preferably 1 to 10 mass%, and even more preferably 2 to 6 mass% relative to the total amount of the styrene-based resin composition, and by setting the content within the range of 0.5 to 20 mass%, the mechanical strength can be improved while suppressing the decrease in heat resistance when added to the styrene-based resin composition.

<<Acrylic Resin (F)>>

As one mode of the present embodiment, the styrene-based resin composition may contain an acrylic resin (F) (also simply referred to as resin (F)). The acrylic resin (F) contains (meth)acrylic acid ester monomer units (f1). The acrylic resin (F) may be a random copolymer or an alternating copolymer. By containing a predetermined amount of the acrylic resin (F), the weldability of the entire styrene-based resin composition to acrylic resin materials, especially the thermal weldability, as well as the effects of improving impact resistance, oil resistance, and scratch resistance, can be more effectively exhibited.

Note that, in this specification, the term "acrylic resin (F)" is a generic term for synthetic resins in which the content of (meth)acrylic acid ester monomer units (f1) exceeds 40 mass%.

In the present disclosure, the number average molecular weight (Mn), weight average molecular weight (Mw), and Z average molecular weight (Mz) of the acrylic resin (F) are values measured using gel permeation chromatography (GPC), as described in the examples section below.

The acrylic resin (F) may contain a branched structure, but it is preferably a polymer structure that is soluble in various solvents (acetone, tetrahydrofuran, chloroform, etc.).

When the styrene-based resin composition of the present embodiment contains an acrylic resin (F), the content of the acrylic resin (F) relative to the total amount (100 mass%) of the styrene-based resin composition is preferably 1 to 50 mass%, more preferably 2 to 36 mass%, even more preferably 3 to 31 mass%, still more preferably 6 to 28 mass%, further preferably 8 to 25 mass%, and most preferably 11 to 22 mass%.

By setting the content of the acrylic resin (F) to 1 to 50 mass%, it is possible to obtain the above effects while suppressing the decrease in heat resistance that has been improved by the styrene-unsaturated carboxylic acid-based resin (A).

In the present embodiment, particularly when the moldability or low moisture absorption of the styrene-based resin composition is important, the content of the acrylic resin (F) is preferably less than 1 mass% relative to the total styrene-based resin composition, and more preferably less than 0.5 mass%.

The monomer units constituting the acrylic resin (F) of the present embodiment are (meth)acrylic acid ester monomer units (f1), and preferably repeating units containing (meth)acrylic acid monomer units (f2) and (meth)acrylic acid ester monomer units (f1), or repeating units containing two or more types of (meth)acrylic acid ester monomer units (f1). Among them, it is further preferable that the acrylic resin (F) contains two or more types of (meth)acrylic acid ester monomer units (f1).

In the present embodiment, the content of the (meth)acrylic acid ester monomer unit (f1) is preferably more than 40 mass%, more preferably more than 50 mass%, even more preferably more than 60 mass%, further more preferably more than 70 mass%, still more preferably more than 80 mass%, and most preferably more than 90 mass% relative to the total amount of the acrylic resin (F). By setting the content of the (meth)acrylic acid ester monomer unit (f1) to more than 40 mass%, compatibility with the styrene-unsaturated carboxylic acid-based resin (A) can be improved, and particularly by setting it to more than 90 mass%, even higher compatibility with the styrene-unsaturated carboxylic acid-based resin (A) can be achieved.

Hereinafter, the (meth)acrylic acid ester monomer unit (f1) and the (meth)acrylic acid monomer unit (f2) of the present embodiment will be described.

<(Meth)Acrylic Acid Ester Monomer (f1)>

The (meth)acrylic acid ester monomer unit (f1) constituting the acrylic resin (F) of the present embodiment includes the methacrylic acid ester monomer unit (f1-1) and the acrylic acid ester monomer unit (f1-2). Examples of the (meth)acrylic acid ester monomer (f1), which is a precursor of the methacrylic acid ester monomer unit (f1), include methyl acrylate, ethyl acrylate, (n-butyl) acrylate, (2-ethylhexyl) acrylate, (n-octyl) acrylate, benzyl acrylate, methyl methacrylate, butyl methacrylate, ethyl methacrylate, propyl methacrylate, isopropyl methacrylate, cyclohexyl methacrylate, phenyl methacrylate, (2-ethylhexyl) methacrylate, (n-octyl) methacrylate, and benzyl methacrylate. Among them, the (meth) acrylic acid ester monomer (f1) is preferably methyl acrylate, (n-butyl) acrylate, and methyl methacrylate due to their industrial availability and low cost. The (meth)acrylic acid ester monomers (f1) may be used alone or in combination, with a combination of two (meth)acrylic acid ester monomers being particularly preferred.

From the viewpoint of achieving both heat resistance and thermal decomposition resistance, among the above-listed monomer units, a preferred mode of the monomer unit constituting the acrylic resin (F) of the present embodiment include preferably two types of the (meth)acrylic acid ester monomer (f1), more preferably a combination of methacrylic acid ester type and acrylic acid ester type, even more preferably a methyl methacrylate-methyl acrylate copolymer or a methyl methacrylate-(n-butyl) acrylate copolymer, and most preferably a methyl methacrylate-methyl acrylate copolymer.

<<(Meth)acrylic Acid Monomer (f2)>>

In the present embodiment, the (meth)acrylic acid monomer (f2) is acrylic acid or methacrylic acid.

In the present embodiment, when the acrylic resin (F) contains a (meth)acrylic acid monomer (f2), the upper limit of the content of the (meth)acrylic acid monomer unit (f2) relative to the total amount of the acrylic resin (F) is preferably 30 mass% or less, 25 mass% or less, 20 mass% or less, 15 mass% or less, 12 mass% or less, and 10 mass% or less, in increasing preference order.

<<Preferred Form of Acrylic Resin (F)>>

It is preferable that a preferred acrylic resin (F) of the present embodiment is a binary or ternary copolymer, and is a methacrylic acid ester-acrylic acid ester copolymer obtained by copolymerizing methacrylic acid ester spices (methacrylic acid ester monomer unit (f1-1)) and acrylic acid ester spices (acrylic acid ester monomer unit (f1-2)), and it is preferable that the copolymer contains 0.3 to 20 mass%, more preferably 0.5 to 15 mass%, even more preferably 1.0 to 12 mass%, and still more preferably 1.5 to 10 mass% of the acrylic acid ester monomer unit (f1-2), relative to the total amount of the methacrylic acid ester-acrylic acid ester copolymer.

The acrylic resin (F) of the present embodiment is preferably a methyl methacrylate-methyl acrylate copolymer, and it is further preferable that the copolymer contains 0.5 to 12 mass% of methyl acrylate relative to the total amount of the copolymer. In this way, the effects of adding the acrylic resin (F) can be obtained while minimizing the decrease in heat resistance that has been improved by the styrene-unsaturated carboxylic acid-based resin (A).

<Other Monomer Units (f3)>

The acrylic resin (F) of the present embodiment may further contain other monomer units (f3) in addition to the (meth)acrylic acid ester monomer unit (f1) and the (meth)acrylic acid monomer unit (f2) described above. That is, the other monomer (f3) may be copolymerized with the (meth)acrylic acid monomer (f2) and/or the (meth)acrylic acid ester monomer (f1) without impairing the effects of the disclosure, and may be copolymerized with monomers other than those listed above, without particular limitation. Examples of the other monomer unit (f3) other than monomer units listed above include styrene, maleic anhydride, maleic acid, fumaric acid, itaconic acid, dimethyl maleate, dimethyl fumarate, diethyl fumarate, ethyl fumarate, maleimide, and nuclear-substituted maleimides such as N-phenylmaleimide and N-cyclohexylmaleimide.

In the present embodiment, the content of the other monomer units (f3) is preferably 0 to 20 mass%, more preferably 0 to 15 mass%, and even more preferably 0 to 10 mass% relative to the total amount of the acrylic resin (F).

The weight average molecular weight (Mw) of the acrylic resin (F) is preferably 500,000 to 1,000,000, more preferably 600,000 to 900,000, even more preferably 700,000 to 300,000, and still more preferably 800,000 to 250,000. By setting the weight average molecular weight (Mw) of the acrylic resin (F) to 50,000 or more, it is possible to impart strength when kneaded with the styrene-unsaturated carboxylic acid-based resin (A), and by setting the weight average molecular weight (Mw) to 1,000,000 or less, it is possible to suppress the viscosity difference with the styrene-unsaturated carboxylic acid-based resin (A), and thereby achieve good dispersion of the (meth)acrylic components in the styrene-based resin composition, while also suppressing the generation of unmelted material derived from the acrylic resin (F), thereby obtaining a resin composition and injection molded article with good appearance.

<<Method for Producing Acrylic Resin (F)>>

The method for producing the acrylic resin (F) of the present embodiment is not particularly limited, and it can be produced by processes such as bulk polymerization, solution polymerization with a solvent added, or suspension polymerization in which the organic phase is dispersed in water using a suspending agent. In particular, since the acrylic resin (F) has high viscosity, a polymerization process by suspension polymerization is preferable.

<<Lubricating Oil (G)>>

As a preferred mode of the present embodiment, it is preferable that the styrene-based resin composition further contains a lubricating oil (G) (also simply referred to as oil (G)). The styrene-based resin composition containing the lubricating oil (G) exhibits effects of improving fluidity and enhancing impact resistance (toughness) due to interaction with the core-shell structured rubbery particles (B) and impact-resistant styrene-based resin (C) in the resin composition.

The lubricating oil (G) used in the present embodiment is a general term for substances in the form of oil or wax at room temperature having a pour point of 110 °C or lower.

The content of the lubricating oil (G) in the styrene-based resin composition of the present embodiment is preferably 0.05 to 3.00 mass%, more preferably 0.07 to 2.50 mass%, even more preferably 0.10 to 2.30 mass%, further preferably 0.20 to 1.50 mass%, still more preferably 0.30 to 1.50 mass%, even still more preferably 0.30 to 1.00 mass%, and most preferably 0.40 to 0.70 mass% relative to the total amount of the styrene-based resin (100 mass%). If the content is 0.05 mass% or less, the effect of improving fluidity cannot be obtained, and if the content exceeds 3.00 mass%, it causes a decrease in heat resistance. Particularly, by setting the content within the range of 0.30 to 1.00 mass%, a styrene-based resin composition excellent in balance among fluidity, impact resistance, rigidity, and heat resistance can be obtained.

Specific examples of the lubricating oil (G) used in the present embodiment include mineral oils derived from crude oil, chemically synthesized oils, and natural vegetable oils. Examples of mineral oils include paraffinic and naphthenic types; examples of chemically synthesized oils include poly-$\alpha$-olefin oligomers, polybutene oligomers, ethylene-propylene copolymer oligomers, fatty acid ester types, gas-to-liquid (GTL) types derived from natural gas, alkylbenzene, silicone oil, polyalkylene glycol oligomers; and examples of natural oils include actual plant oils, tung oil, shea oil, alfalfa oil, poppy oil, pumpkin oil, winter squash oil, millet oil, barley oil, quinoa oil, rye oil, kukui oil, passionflower oil, shea butter, aloe vera oil, sweet almond oil, peach kernel oil, soybean oil, cashew oil, peanut oil, avocado oil, baobab oil, borage oil, broccoli seed oil, marigold oil, camellia oil, canola oil, carrot oil, safflower oil, linseed oil, rapeseed oil, cottonseed oil, coconut oil, pumpkin seed oil, wheat germ oil, jojoba oil, lily oil, macadamia oil, corn oil, meadowfoam oil, monoi oil, hazelnut oil, apricot kernel oil, walnut oil, olive oil, evening primrose oil, palm oil, blackcurrant seed oil, kiwi seed oil, grape seed oil, pistachio oil, rose musk oil, sesame oil, soybean oil, sunflower oil, castor oil, watermelon oil, and the like. A chemically modified version of the above may also be used as the lubricating oil (G). For example, lubricating oils (G) that have been hydrogenated (hydrogen-added) to adjust the number of double bonds, or epoxidized, aminated, or mercapto-modified, may be used as necessary. From the viewpoint of industrial availability, liquid paraffin and silicone oil are preferable. From the viewpoint of improving impact resistance, silicone oil is particularly preferable. The preferred content

of the silicone oil is similar to the range of content described for the lubricating oil (G) above.

In the present embodiment, the kinematic viscosity of the lubricating oil (G) is preferably 1000 $mm^2/s$ or less at 25 °C, more preferably 20 to 1000 $mm^2/s$, even more preferably 50 to 500 $mm^2/s$, and still more preferably 70 to 300 $mm^2/s$.

The pour point of the lubricating oil (G) in the present embodiment is 110 °C or lower, preferably 100 °C or lower, more preferably 90 °C or lower, even more preferably 80 °C or lower, further preferably 50 °C or lower, still further preferably 30 °C or lower, even still further preferably 10 °C or lower, even still further preferably 0 °C or lower, even still further preferably -20 °C or lower, even still further preferably -30 °C or lower, and particularly preferably -40 °C or lower. If the pour point of the lubricating oil (G) exceeds 100 °C, the lubricating oil (G) becomes difficult to disperse into the styrene-based resin composition, and the addition or mixing operation becomes difficult. By using a lubricating oil (G) with a pour point of -30 °C or lower, a high effect of improving impact resistance can be obtained.

A low content of low-boiling components in the lubricating oil (G) is effective in avoiding the issue of volatilization during extrusion molding. The 5% distillation temperature obtained through conversion to atmospheric pressure according to the reduced pressure distillation method of JIS K 2254 or gas chromatography is preferably 400 °C or higher.

In the present embodiment, when the content of the styrene-based monomer unit (b4) contained in the core-shell structure rubbery particle (B) is denoted as X and the content of the lubricating oil (G) is Y, it is preferable that $X/Y \leq 10$. When $X/Y \leq 10$, a more excellent effect of improving impact resistance can be obtained.

There is no particular limitation on the method of adding the lubricating oil (G) to the styrene-based resin composition, and examples include a method of adding the lubricating oil (G) during the polymerization process, and a method of kneading using known kneading machines such as a single-screw extruder, twin-screw extruder, or Banbury mixer.

The identification of the lubricating oil (G) in the present embodiment can be easily confirmed by common methods known to those skilled in the art.

For example, identification, quantification, and molecular weight measurement can be performed using various analytical instruments such as pyrolysis GC-MS, liquid chromatography (LC), $^{1}H$-NMR, or $^{13}C$-NMR.

When the lubricating oil (G) is silicone oil, the addition amount can also be defined in terms of Si (silicon) content. The addition amount in terms of silicon content is preferably 150 ppm to 10000 ppm, more preferably 300 ppm to 8000 ppm, even more preferably 500 ppm to 7000 ppm, and further more preferably 1000 ppm to 5000 ppm relative to the total amount (100 mass%) of the styrene-based resin composition. When quantifying the silicon content, measurement can be performed using methods such as inductively coupled plasma emission spectroscopy (ICP method).

The kinematic viscosity of silicone oil at 25 °C is preferably 10 $mm^2/s$ to 5000 $mm^2/s$, more preferably 15 $mm^2/s$ to 3000 $mm^2/s$, more preferably 20 $mm^2/s$ to 1000 $mm^2/s$, more preferably 30 $mm^2/s$ to 500 $mm^2/s$, and more preferably 50 $mm^2/s$ to 200 $mm^2/s$.

Examples of the silicone oil include dimethyl polysiloxane, methylphenyl polysiloxane, and methylethyl polysiloxane. Among them, dimethyl polysiloxane is preferable because it is commercially available and inexpensive.

<<Optional Additive Components>>

The styrene-based resin composition of the present embodiment may contain various optional additive components that are generally used in known styrene-based resins, in addition to the above-mentioned components (A) to (G), for achieving known effects. Examples of the optional additive components in the present embodiment include monohydric alcohols having 10 or more carbon atoms, higher fatty acid-based surfactants, antioxidants, heat stabilizers, ultraviolet absorbers, light stabilizers, lubricants, mold release agents, plasticizers, blocking inhibitors, antistatic agents, anti-fogging agents, and coloring agents. There is no particular restriction on the method of blending, but examples include a method of adding during polymerization and polymerizing, a method of preliminarily mixing the additives in a blender before melt-kneading after polymerization, a method of melt-kneading using an extruder or a Banbury mixer, and a method of preparing a high-concentration masterbatch and kneading it.

The styrene-based resin composition of the present embodiment may contain one or more additive components selected from the group consisting of monohydric alcohols having 10 or more carbon atoms, higher fatty acid-based surfactants, antioxidants, heat stabilizers, ultraviolet absorbers, light stabilizers, lubricants, mold release agents, plasticizers, blocking inhibitors, antistatic agents, anti-fogging agents, and coloring agents.

<Monohydric Alcohol Having 10 or More Carbon Atoms>

The monohydric alcohol having 10 or more carbon atoms (hereinafter simply referred to as "alcohol") in the present embodiment is an optional additive component, which suppresses the gelation of the styrene-unsaturated carboxylic acid-based resin (A) during molding and contributes to the improvement of the appearance of the styrene-based resin composition and the molded article made of the styrene-based resin composition. The content of the monohydric alcohol with 10 or more carbon atoms is 0.01 to 1.0 mass%, preferably 0.03 to 0.8 mass%, more preferably

0.05 to 0.6 mass%, and even more preferably 0.07 to 0.5 mass% relative to the total amount (100 mass%) of the styrene-based resin composition. By setting the content of the monohydric alcohol having 10 or more carbon atoms to 0.01 mass% or more, it is possible to suppress gelation of the styrene-unsaturated carboxylic acid-based resin (A) during molding. On the other hand, by setting it to 1.0 mass% or less, it is possible to suppress deterioration in heat resistance and the generation of odor. Particularly, when the content of the monohydric alcohol with 10 or more carbon atoms is set to 0.07 to 0.5 mass%, sufficient effects of gelling suppression can be obtained without incurring a reduction in heat resistance.

The monohydric alcohol having 10 or more carbon atoms is an alcohol containing one hydroxyl group and having 10 or more carbon atoms. It may include a heteroatom such as oxygen or nitrogen in the carbon chain constituting the alcohol, and may contain a bond other than single bonds, such as a double bond, triple bond, ester bond, or amide bond, within the carbon chain. The carbon number is preferably 16 or more, more preferably 17 or more, and even more preferably 18 or more and 50 or less. It is sufficient that the monohydric alcohol with 10 or more carbon atoms is contained in the styrene-based resin composition or molded articles made from the styrene-based resin composition. Therefore, by including (or adding) a monohydric alcohol with 10 or more carbon atoms in the polymerization solution used when the styrene-unsaturated carboxylic acid-based resin (A) is polymerized, the monohydric alcohol can be allowed to remain in the resin composition, which is the final product, as a residual component. Alternatively, it can be incorporated by adding it during the kneading of the styrene-unsaturated carboxylic acid-based resin (A) and the (meth)acrylic resin (B) and mixing it in the extruder.

In the present embodiment, the boiling point of the monohydric alcohol with 10 or more carbon atoms is preferably 260 °C or higher, more preferably 270 °C or higher, and even more preferably 290 °C or higher. If the boiling point of the alcohol is lower than 260°C, the volatility increases, and there is a tendency for unpleasant odors to occur during molding.

Although the monohydric alcohol with 10 or more carbon atoms is not particularly limited, examples include, for example, 1-hexadecanol, isohexadecanol, 1-octadecanol (stearyl alcohol), 5,7,7-trimethyl-2-(1,3,3-trimethylbutyl)-1-octanol, isooctadecanol, 1-isoisoicosanol, 8-methyl-2-(4-methylhexyl)-1-decanol, 2-heptyl-1-undecanol, 2-heptyl-4-methyl-1-decanol, 2-(1,5-dimethylhexyl)-5,9-dimethyl-1-decanol, polyoxyethylene alkyl ethers.

The polyoxyethylene alkyl ethers mentioned above are preferably compounds represented by the following general formula (3):

[Chem. 4]

$$R-O\left(CH_2CH_2-O\right)_x-H \qquad (3)$$

in the above general formula (3), R represents an alkyl group with 12 to 20 carbon atoms, and X represents the average number of ethylene oxide additions, which is an integer from 1 to 15.

Examples of the specific trade names of the preferred alcohol include "FINEOXOCOL 180" manufactured by Nissan Chemical, "KALCOL 8098" and "EMULGEN 109P" manufactured by Kao Corporation.

<Antioxidant>

The antioxidant in the present embodiment is an optional additive component and may be added to the styrene-based resin composition as necessary for the purpose of ensuring long-term stability, molding stability, etc. Examples of the antioxidant include hindered phenol-based antioxidants such as octadecyl-3-(3,5-di-tert-butyl-4-hydroxyphenyl) propionate and 4,6-bis(octylthiomethyl)-o-cresol (commercial product: Irganox 1076), and phosphorus-based antioxidants such as tris(2,4-di-tert-butylphenyl)phosphite (commercial product: Irgafos 176). These may be used alone or in combination of two or more. In particular, a synergistic effect can be excellently exhibited by combining a phenol-based antioxidant as a primary antioxidant with a phosphorus-based antioxidant as a secondary antioxidant. The addition amount of the antioxidant is preferably 0.001 to 3.0 mass%, more preferably 0.010 to 2.0 mass%, further preferably 0.050 to 1.0 mass%, still more preferably 0.080 to 0.8 mass%, and even still more preferably 0.1 to 0.6 mass% relative to the total amount (100 mass%) of the styrene-based resin composition.

<Mold Release Agent>

The mold release agent in the present embodiment is an optional additive component, and particularly when used for injection molding, it is preferable that the styrene-based resin composition contains a mold release agent. The mold release agent can be incorporated as an internal lubricant by being kneaded into the styrene-based resin composition when it is prepared, or as an external lubricant by dry blending immediately after granulation of the styrene-based resin composition, or both methods may be combined.

The content of the mold release agent in the styrene-based resin composition is preferably 0.001 to 2.0 mass%

relative to the total amount (100 mass%) of the styrene-based resin composition. Preferable upper limits of the content include 1.8 mass% or less, 1.7 mass% or less, 1.6 mass% or less, 1.5 mass% or less, 1.4 mass% or less, 1.3 mass% or less, 1.2 mass% or less, 1.1 mass% or less, 1.0 mass% or less, 0.9 mass% or less, 0.8 mass% or less, 0.7 mass% or less, or 0.6 mass% or less, in descending order of preference. Preferable lower limit include 0.003 mass% or more, 0.005 mass% or more, 0.007 mass% or more, 0.009 mass% or more, 0.012 mass% or more, 0.031 mass% or more, 0.066 mass% or more, 0.090 mass% or more, 0.11 mass% or more, 0.16 mass% or more, 0.21 mass% or more, 0.26 mass% or more, or 0.31 mass% or more, in ascending order of preference. By keeping the content within the range of 0.001 to 2.0 mass%, a styrene-based resin composition with excellent mold-release properties can be obtained. Particularly, a range of 0.01 to 0.8 mass% results in a styrene-based resin composition with an excellent balance between mold-release properties and heat resistance.

When the styrene-based resin composition of the present embodiment contains a mold release agent as an internal lubricant, the content of the internal lubricant is preferably 0.05 to 2.0 mass%, more preferably 0.10 to 1.5 mass%, more preferably 0.13 to 1.0 mass%, and further preferably 0.17 to 0.8 mass% relative to the total amount (100 mass%) of the styrene-based resin composition. Particularly, by setting the content in the range of 0.13 to 1.0 mass%, it is possible to suppress excessive bleed-out and obtain a styrene-based resin composition with excellent mold release properties.

In cases where the styrene-based resin composition of the present embodiment contains a mold release agent as an external lubricant, the content of the mold release agent as the external lubricant is preferably 0.005 to 0.5 mass%, more preferably 0.007 to 0.2 mass%, and even more preferably 0.008 to 0.1 mass% relative to the total amount (100 mass%) of the styrene-based resin composition. Particularly, by setting it in the range of 0.008 to 0.1 mass%, it is possible to obtain a styrene-based resin composition that suppresses mold contamination while exhibiting excellent mold release properties.

Examples of the mold release agent of the present embodiment include stearyl alcohol, stearic acid, zinc stearate, calcium stearate, glycerin, mono-stearin glyceride, ethylene bisstearamide, stearamide, oleamide, erucamide, glycerin, glycerin monostearate, glycerin distearate, glycerin tristearate, and glycerin esters such as pentaerythritol stearate. From the viewpoint of compatibility with the styrene-based resin, ethylene bisstearamide, stearyl alcohol, stearic acid, zinc stearate, and calcium stearate are preferable.

<Light Stabilizer>

The light stabilizer in the present embodiment is an optional additive component, and it is preferable to add it when the styrene-based resin composition is to be used in applications such as outdoors where photo degradation may be a concern. The light stabilizer does not have ultraviolet absorption ability per se but functions to capture and neutralize photoradicals generated when the styrene-based resin composition absorbs ultraviolet light, thereby preventing the degradation and discoloration of the styrene-based resin composition caused by radicals. The light stabilizer, due to its mechanism of action, is also expected to function as a thermal radical scavenger, and therefore can also serve as a thermal stabilizer. The light stabilizer is preferably a hindered amine compound, and examples thereof include secondary amine type, tertiary amine type, and hindered amine compounds such as N-O-R type hindered amine compounds. The light stabilizer may be used alone or in combination of two or more kinds, and a higher light resistance effect can be obtained by using it together with the ultraviolet absorber described later. In other words, it is possible to suppress discoloration and a decrease in strength after exposure due to long-term outdoor use of the styrene-based resin composition or molded articles thereof. Since the light stabilizer mainly functions on the resin surface where photoradicals are frequently generated, a low molecular type is preferable if a higher effect is desired. However, in order to prevent issues such as mold contamination caused by excessive bleed-out or to achieve a more long-term stabilization effect, it is necessary to appropriately adjust the molecular weight or to consider using a combination of low molecular and high molecular types.

The content of the light stabilizer is preferably 0.001 to 2.0 mass% relative to the total amount of the styrene-based resin composition, and the upper limit is preferably 1.8 mass% or less, 1.6 mass% or less, 1.4 mass% or less, 1.2 mass% or less, 1.0 mass% or less, 0.8 mass% or less, 0.7 mass% or less in increasing preference order, and the lower limit is preferably 0.005 mass% or more, 0.010 mass% or more, 0.021 mass% or more, 0.051 mass% or more, 0.061 mass% or more, 0.071 mass% or more, 0.079 mass% or more, 0.089 mass% or more, 0.12 mass% or more, 0.17 mass% or more in increasing preference order. The upper and lower limits mentioned above can be combined arbitrarily to define the content of the light stabilizer.

The light stabilizer is preferably a hindered amine compound. Specific examples of the hindered amine compounds include bis(1,2,2,6-pentamethyl-4-piperidyl) sebacate, bis(1-undecanoxy-2,2,6,6-tetramethylpiperidin-4-yl) carbonate, tetrakis(2,2,6,6-tetramethyl-4-piperidyl) butane-1,2,3,4-tetracarboxylate, bis(1,2,2,6,6-pentamethyl-4-piperidyl) sebacate, N'-bis(2,2,6,6-tetramethylpiperidin-4-yl) hexane-1,6-diamine, and butyl(3,5-di-tert-butyl-4-hydroxybenzyl) malonate bis(1,2,2,6,6-pentamethyl-4-piperidyl). Specific trade names include ADK STAB LA-52, ADK STAB LA-57, ADK STAB LA-63P, ADK STAB LA-68, ADK STAB LA-72, ADK STAB LA-77Y, ADK STAB LA-77G, ADK STAB LA-81 manufactured by ADEKA Corporation; JF-90G and JF-95 manufactured by Johoku Chemical Co., Ltd.; and

Chimassorb 2020 FDL, Chimassorb 944 FDL, and Tinuvin 622 SF manufactured by BASF Japan Ltd.

<Ultraviolet Absorber>

The ultraviolet absorber in the present embodiment is an optional additive component, and it is preferable to add it as necessary when the styrene-based resin composition is used for applications where light degradation, such as outdoor use, is of concern. The ultraviolet absorber functions to absorb ultraviolet rays that would otherwise be absorbed by the styrene-based resin composition, converting them into heat or chemical energy to suppress the generation of photoradicals generated when ultraviolet light is absorbed by the styrene-based resin composition and thus prevent degradation and discoloration of the resin. Preferred examples of the ultraviolet absorber are compounds containing two or more aromatic rings connected via a linking group that includes atoms with unpaired electrons (such as oxygen, nitrogen, sulfur, or phosphorus atoms), and at least one of the aromatic rings has a phenolic hydroxyl group. These compounds have chemical structures that can convert the absorbed light into chemical energy after reaching an excited state. Examples of the ultraviolet absorber include, for example, benzotriazole-based compounds, triazine-based compounds, benzophenone-based compounds, benzoate-based compounds, cyanoacrylate-based compounds, oxalic acid anilide-based compounds, malonic acid ester-based compounds, formamidine-based compounds, and salicylate-based compounds. These ultraviolet absorbers may be used alone or in combination with two or more types, and when used in combination with the light stabilizer, they provide a higher light resistance effect, in other words, they suppress discoloration and reduction in strength of the styrene-based resin composition after exposure to light. Preferably, ultraviolet absorbers that are capable of absorbing ultraviolet rays in the wavelength range (250 to 350 nm) that are easily absorbed by the resins added to the styrene-based resin composition, instead.

As the ultraviolet absorber, benzotriazole-based compounds, triazine-based compounds, benzophenone-based compounds, and cyanoacrylate-based compounds are more preferable.

The content of the ultraviolet absorber in the present embodiment is preferably 0.001 to 2.0 mass% relative to the total amount of the styrene-based resin composition, and the upper limit is preferably 1.8 mass% or less, 1.6 mass% or less, 1.4 mass% or less, 1.2 mass% or less, 1.0 mass% or less, 0.8 mass% or less, 0.7 mass% or less in increasing preference order, and the lower limit is preferably 0.005 mass% or more, 0.010 mass% or more, 0.021 mass% or more, 0.051 mass% or more, 0.061 mass% or more, 0.071 mass% or more, 0.079 mass% or more, 0.089 mass% or more, 0.12 mass% or more, 0.17 mass% or more in increasing preference order. The content of the ultraviolet absorber can be selected from any combination of the above-mentioned upper and lower limits.

Examples of the benzotriazole-based compound mentioned above include, for example, 2-(2'-hydroxy-5'-methylphenyl)benzotriazole, 2,2'-methylenebis[6-(2H-benzotriazol-2-yl)-4-tert-octylphenol], 2-(2'-hydroxy-3',5'-di-tert-amylphenyl)benzotriazole, 2-(2'-hydroxy-5'-tert-octylphenyl)benzotriazole, 6-(2-benzotriazolyl)-4-tert-octyl-6'-tert-butyl-4'-methyl-2,2'-methylenebisphe nol, 2-(2'-hydroxy-3'-tert-butyl-5'-methylphenyl)-5-chlorobenzotriazole, and 2-(2H-benzotriazol-2-yl)-4-(1,1,3,3-tetramethylbutyl)phenol. Specific trade names include ADK STAB LA-32, ADK STAB LA-36, and ADK STAB LA-36RG manufactured by ADEKA Corporation, JF-77, JF-79, JF-80, JF-83, JF-832, and AST-500 manufactured by Johoku Chemical Co., Ltd., and Tinuvin P, Tinuvin 234, Tinuvin 234FF, Tinuvin 326, Tinuvin 329, and Tinuvin 360 manufactured by BASF Japan Ltd.

Examples of the triazine-based compound mentioned above include, for example, 2-(4,6-diphenyl-1,3,5-triazine-2-yl)-5-[2-(2-ethylhexanoyloxy)ethoxy]phenol, 2,4,6-tris(2-hydroxy-4-hexyl-3-methylphenyl)-1,3,5-triazine, N,N',N''-tris(m-tolyl)-1,3,5-triazine-2,4,6-triamine, 2,4,6-tris(4-butoxy-2-hydroxyphenyl)-1,3,5-triazine, 2,4-bis(2,4-dimethylphenyl)-6-(2-hydroxy-4-n-octyloxyphenyl)-1,3,5-triazine, ethylhexyl triazine, 2-(2,4-dihydroxyphenyl)-4,6-bis(2,4-dimethylphenyl)-1,3,5-triazine, 2,4,6-tris(2,4-dihydroxyphenyl)-1,3,5-triazine, bemotrizinol, 2-(2-hydroxy-4-methoxyphenyl)-4,6-diphenyl-1,3,5-triazine, and 2-(2,4-dihydroxyphenyl)-4,6-diphenyl-1,3,5-triazine. Specific trade names include ADK STAB LA-46 and ADK STAB LA-F70 manufactured by ADEKA Corporation, and Tinuvin 1577ED and Tinuvin 1600 manufactured by BASF Japan Ltd.

Examples of the benzophenone-based compound mentioned above include, for example, 2-hydroxy-4-(octyloxy)benzophenone, 2-hydroxy-4-methoxybenzophenone, 2,2'-dihydroxy-4,4'-dimethoxybenzophenone, 2,4-dihydroxybenzophenone, and 2,2',4,4'-tetrahydroxybenzophenone. Specific trade names include ADK STAB 1413 manufactured by ADEKA Corporation and Chimassorb 81 and Chimassorb 81FL manufactured by BASF Japan Ltd.

Two or more ultraviolet absorbers may be used in combination as the ultraviolet absorber. A preferred form involves the use of an ultraviolet absorber that can efficiently absorb the ultraviolet absorption peak derived from the aromatic groups of the styrene-based resin in the region (wavelengths of 250 to 300 nm) where ultraviolet absorption enhances during photo-deterioration, and an ultraviolet absorber that can efficiently absorb ultraviolet rays in the ultraviolet region (wavelengths of 300 to 400 nm) that falls most heavily on the surface of the Earth. Specifically, as an ultraviolet absorber that can efficiently absorb wavelengths of 250 to 300 nm, a combination of a triazine-based ultraviolet absorber with a benzotriazole-based ultraviolet absorber or benzophenone-based ultraviolet absorber is preferred.

<Colorant>

The colorant in the present embodiment is an optional additive component and is used when it is necessary to color the styrene-based resin composition. In particular, when the styrene-based resin composition is applied to automotive-related components, it is often colored black. By coloring black, it is possible to impart a preferable appearance and partial resistance to heat and light for automotive applications. The colorant is not particularly limited, but carbon black, titanium oxide, and organic dyes can be used. Examples of carbon black include those produced by the furnace method (furnace black), channel method (channel black), acetylene method (acetylene black), and thermal method (thermal black).

When coloring the styrene-based resin composition black with carbon black, the content of carbon black in the styrene-based resin composition is preferably 0.05 to 5.0 mass% relative to the total amount (100 mass%) of the styrene-based resin composition. If the content of the carbon black is less than 0.05 mass%, the desired degree of blackness is not exhibited and it appears grayish, and if it exceeds 5.0 mass%, there will be no change in blackness. Therefore, from the viewpoint of cost and mechanical strength, it is preferable to be 5.0 mass% or less. The method of adding the colorant is not particularly limited. The colorant may be added after polymerization, directly blended during kneading, or added during kneading using a high-concentration masterbatch.

<Colorant Masterbatch>

The following describes the method of adding the colorant, which is an optional additive component in the present embodiment, using a masterbatch.

As the base resin of the masterbatch, it is preferable to use the styrene-unsaturated carboxylic acid-based resin (A), which is an essential component of the present embodiment, or the acrylic resin (F), which is a preferable form of additive component. The content of the base resin in the masterbatch is preferably 30 to 70 mass%, and more preferably in the range of 40 to 60 mass% relative to the total amount of the masterbatch. By setting the content to 30 mass% or more, it is possible to impart viscoelasticity as a resin, thereby making it easier to handle. By setting the content to 70 mass% or less, it becomes easier to ensure the desired amount of colorant is present in the styrene-based resin composition, and it is also advantageous in terms of cost. The content of the colorant in the masterbatch is preferably 30 to 70 mass%, and more preferably in the range of 40 to 60 mass% relative to the total amount of the masterbatch for the same reasons as above.

When the colorant is a powder pigment such as carbon black, it is preferable to include a dispersant in addition to the base resin and colorant when preparing the masterbatch. The dispersant may be a commonly used dispersant, such as metal salts of higher fatty acids, including stearic acid, zinc stearate, magnesium stearate, and calcium stearate, higher fatty acid amides such as ethylene bis-stearamide, polyethylene wax, and modified polyethylene wax. From the viewpoint of reactivity with the styrene-unsaturated carboxylic acid-based resin (A), polyethylene wax is preferable. The content of the dispersant is preferably 2 to 20 mass%, and more preferably in the range of 3 to 17 mass% relative to the total amount of the masterbatch. By setting the content to 2 mass% or more, although it depends on the amount of the colorant, it is possible to disperse the colorant, and by setting the content to 20 mass% or less, it is possible to suppress a decrease in the heat resistance of the styrene-based resin composition.

As the method for producing the masterbatch, the colorant and, if necessary, a dispersant may be blended with the base resin (resin (A) or resin (F) being preferable), and prepared using melt-kneading extrusion or a kneader. The kneading temperature is preferably 200 to 280 °C, and more preferably in the range of 220 to 260 °C.

<<Component Composition of Preferred Embodiment of Styrene-Based Resin Composition>>

The styrene-based resin composition of the present embodiment includes the resin (A) and the core-shell structured rubbery particles (B), and the total content of the resin (A) and the core-shell structured rubbery particles (B) accounts for preferably 65 to 100 mass%, and more preferably 75 to 95 mass% of the entire styrene-based resin composition.

The styrene-based resin composition of the present embodiment includes the resin (A), the core-shell structured rubbery particles (B), and optional additive components, and the total content of the resin (A), the core-shell structured rubbery particles (B), and the optional additive components accounts for preferably 70 to 100 mass%, and more preferably 80 to 95 mass% of the entire styrene-based resin composition.

The styrene-based resin composition of the present embodiment contains the resin (A), the core-shell structured rubbery particles (B), and the resin (C), and the total content of the resin (A), the core-shell structured rubbery particles (B), and the resin (C) accounts for preferably 70 to 100 mass%, more preferably 80 to 90 mass% of the entire styrene-based resin composition.

The styrene-based resin composition of the present embodiment includes the resin (A), the core-shell structured rubbery particles (B), resin (C), and optional additive components, and the total content of the resin (A), the core-shell

structured rubbery particles (B), the resin (C), and the optional additive components accounts for preferably 85 to 100 mass%, and more preferably 90 to 95 mass% of the entire styrene-based resin composition.

The styrene-based resin composition of the present embodiment includes the resin (A), the core-shell structured rubbery particles (B), resin (C), the lubricating oil (G), and optional additive components, and the total content of the resin (A), the core-shell structured rubbery particles (B), the resin (C), and the optional additive components accounts for preferably 85 to 100 mass%, and more preferably 90 to 95 mass% of the entire styrene-based resin composition.

The styrene-based resin composition of the present embodiment includes the resin (A), the core-shell structured rubbery particles (B), and elastomer (D), and the total content of the resin (A), the core-shell structured rubbery particles (B), and the elastomer (D) accounts for preferably 70 to 100 mass%, and more preferably 75 to 95 mass%, and even more preferably 80 to 90 mass% of the entire styrene-based resin composition.

The styrene-based resin composition of the present embodiment includes the resin (A), the core-shell structured rubbery particles (B), elastomer (D), and optional additive components, and the total content of the resin (A), the core-shell structured rubbery particles (B), the elastomer (D), and the optional additive components accounts for preferably 80 to 100 mass%, and more preferably 85 to 97 mass%, and even more preferably 90 to 95 mass% of the entire styrene-based resin composition.

The styrene-based resin composition of the present embodiment includes the resin (A), the core-shell structured rubbery particles (B), elastomer (D), the lubricating oil (G), and optional additive components, and the total content of the resin (A), the core-shell structured rubbery particles (B), the elastomer (D), the lubricating oil (G), and the optional additive components accounts for preferably 80 to 100 mass%, and more preferably 85 to 97 mass%, and even more preferably 90 to 95 mass% of the entire styrene-based resin composition.

The styrene-based resin composition of the present embodiment includes the resin (A), the core-shell structured rubbery particles (B), and elastomer (E), and the total content of the resin (A), the core-shell structured rubbery particles (B), and the elastomer (E) accounts for preferably 70 to 100 mass%, and more preferably 80 to 90 mass% of the entire styrene-based resin composition.

The styrene-based resin composition of the present embodiment includes the resin (A), the core-shell structured rubbery particles (B), elastomer (E), and optional additive components, and the total content of the resin (A), the core-shell structured rubbery particles (B), the elastomer (E), and the optional additive components accounts for preferably 85 to 100 mass%, and more preferably 90 to 95 mass% of the entire styrene-based resin composition.

The styrene-based resin composition of the present embodiment includes the resin (A), the core-shell structured rubbery particles (B), elastomer (E), the lubricating oil (G), and optional additive components, and it is preferable that the total content of the resin (A), the core-shell structured rubbery particles (B), the elastomer (E), the lubricating oil (G), and the optional additive components accounts for 85 to 100 mass% of the entire styrene-based resin composition, and more preferably 90 to 95 mass%.

The styrene-based resin composition of the present embodiment includes the resin (A), the core-shell structured rubbery particles (B), and the resin (F), and the total content of the resin (A), the core-shell structured rubbery particles (B), and the elastomer (F) accounts for preferably 70 to 100 mass%, and more preferably 80 to 90 mass% of the entire styrene-based resin composition.

The styrene-based resin composition of the present embodiment includes the resin (A), the core-shell structured rubbery particles (B), resin (F), and optional additive components, and the total content of the resin (A), the core-shell structured rubbery particles (B), the resin (F), and the optional additive components accounts for preferably 85 to 100 mass%, and more preferably 90 to 95 mass% of the entire styrene-based resin composition.

The styrene-based resin composition of the present embodiment includes the resin (A), the core-shell structured rubbery particles (B), resin (F), the lubricating oil (G), and optional additive components, and the total content of the resin (A), the core-shell structured rubbery particles (B), the resin (F), the lubricating oil (G), and the optional additive components accounts for preferably 85 to 100 mass%, and more preferably 90 to 95 mass% of the entire styrene-based resin composition.

The styrene-based resin composition of the present embodiment includes the resin (A), the core-shell structured rubbery particles (B), and the lubricating oil (G), and the total content of the resin (A), the core-shell structured rubbery particles (B), and the lubricating oil (G) accounts for 70 to 100 mass% of the entire styrene-based resin composition, and more preferably 80 to 90 mass%.

The styrene-based resin composition of the present embodiment includes the resin (A), the core-shell structured rubbery particles (B), lubricating oil (G), and optional additive components, and the total content of the resin (A), the core-shell structured rubbery particles (B), the lubricating oil (G), and the optional additive components accounts for preferably 85 to 100 mass%, and more preferably 90 to 95 mass% of the entire styrene-based resin composition.

<<Preferred Forms of Styrene-Based Resin Composition>

In the styrene-based resin composition of the present embodiment, the styrene-unsaturated carboxylic acid-based resin (A) and the core-shell structured rubbery particles (B) preferably form a sea-island structure in which the styrene-unsaturated carboxylic acid-based resin (A) is the sea phase and the core-shell structured rubbery particles (B) are the island phase. When a rubber-modified styrene-based resin (C) is used, it is preferable that the matrix portion of the styrene-unsaturated carboxylic acid-based resin (A) and the rubber-modified styrene-based resin (C) constitutes the sea phase, and that the rubber particles contained in the rubber-modified styrene-based resin (C) constitute the island phase in a sea-island structure. Further, the rubber particles that form the island phase in the sea-island structure may be a mixture of the core-shell structured rubbery particles (B) and rubbery polymer particles (C-2) contained in the rubber-modified styrene-based resin (C).

<<Best Mode of Styrene-Based Resin Composition>>

A particularly preferred form of the present embodiment is a styrene-based resin composition comprising a styrene-unsaturated carboxylic acid-based resin (A) containing a styrene-based monomer unit (a1) and an unsaturated carboxylic acid-based monomer unit (a2), core-shell structured rubbery particles (B) containing (meth)acrylic acid ester monomer units (b1), and silicone oil,

wherein the content of the styrene-unsaturated carboxylic acid-based resin (A) is 40 to 95 mass%, and the content of the rubbery particles (B) is 5 to 60 mass%, relative to the total amount (100 mass%) of the styrene-based resin composition,
the rubbery particles (B) contain (meth)acrylic acid ester monomer units (b1), conjugated diene-based monomer units (b2), and styrene-based monomer units (b4), and, the content of the (meth)acrylic acid ester monomer units (b1) is 3 to 40 mass%, the content of the conjugated diene-based monomer units (b2) is 50 to 90 mass%, and the content of the silicone oil is 0.30 to 1.50 mass%, relative to the total amount (100 mass%) of the rubbery particles (B), and
when the content of the styrene-based monomer units (b4) is denoted as Y and the content of the silicone oil is denoted as X, $Y/X \leq 10$ is satisfied.

As a result, excellent properties are achieved in terms of heat resistance, toughness, rigidity, and weldability with acrylic resin materials. In particular, the composition as a whole exhibits excellent toughness.
In the styrene-based resin composition of the present embodiment, when a rubber-modified styrene-based resin (C) is used, the rubber particles contained in the rubber-modified styrene-based resin (C) include core-shell structures or salami-like structures, and, a salami-like structure is particularly preferred from the viewpoint of impact resistance.

[Properties and Characteristics of Styrene-Based Resin Composition]

The properties and characteristics of the styrene-based resin composition in the present embodiment will be described below.

<Vicat Softening Temperature (°C) of Styrene-Based Resin Composition>

In the present embodiment, the Vicat softening temperature of the styrene-based resin composition is preferably 110 °C or higher, more preferably 112 °C or higher, even more preferably 115 °C or higher, still even more preferably 118 °C or higher, and most preferably 120 °C or higher. By setting the Vicat softening temperature to 110 °C or higher, a molded article with excellent heat resistance can be obtained, and by setting it to 120 °C or higher, a molded article suitable for use in automotive parts can be obtained. The Vicat softening temperature can be measured according to ISO 306 under the conditions of 1 kg load and a heating rate of 120 °C/hour. Additionally, it may be measured under the conditions of 5 kg load and a heating rate of 50 °C/hour as necessary. In such cases, a range of 105 °C or higher is preferable, and a range of 110 °C or higher is more preferable.

<Melt Mass-Flow Rate (g/10 min.) of Styrene-Based Resin Composition>

In the present embodiment, the melt mass flow rate of the styrene-based resin composition is preferably in the range of 1.0 to 20.0 g/10 min., more preferably 1.0 to 10.0 g/10 min., even more preferably 2.0 to 9.0 g/10 min., and further preferably in the range of 2.5 to 8.0 g/10 min. A melt mass flow rate of 1.0 g/10 min. or more provides good moldability, and a melt mass flow rate of 10.0 g/10 min. or less ensures a resin with excellent strength. The melt mass flow rate is a value measured under the conditions of 220 °C and a load of 10 kg in accordance with ISO 1133. Additionally, it may be measured under the conditions of 200 °C and a load of 5 kg as necessary. In such cases, the preferable range is 0.1 to 3.0 g/10 min., and more preferably 0.2 to 1.5 g/10 min.

<Charpy Impact Strength (kJ/m$^2$) of Styrene-Based Resin Composition>

In the present embodiment, the Charpy impact strength (notched) of the styrene-based resin composition is preferably 4.0 kJ/m$^2$ or more, more preferably 4.5 kJ/m$^2$ or more, even more preferably 5.0 kJ/m$^2$ or more, further preferably 6.0 kJ/m$^2$ or more, still more preferably 8.0 kJ/m$^2$ or more, and most preferably 10.0 kJ/m$^2$ or more. By setting it to 4.0 kJ/m$^2$ or more, an injection molded article with excellent toughness can be obtained, and in particular, by setting it to 10.0 kJ/m$^2$ or more, an injection molded article with toughness suitable for automotive applications can be obtained.

<Flexural Modulus (MPa) of Styrene-Based Resin Composition>

In the present embodiment, the flexural modulus of the styrene-based resin composition is preferably 2000 MPa or more, more preferably 2100 MPa or more, and even more preferably 2200 MPa or more. By setting the flexural modulus to 2000 MPa or more, a molded article with excellent rigidity can be obtained.

<Tensile Yield Stress (MPa) of Styrene-Based Resin Composition>

In the present embodiment, the tensile yield stress of the styrene-based resin composition is preferably 35 MPa or more, more preferably 40 MPa or more, and even more preferably 42 MPa or more. By setting the tensile yield stress to 35 MPa or more, a molded article having an excellent balance of rigidity and strength can be obtained.

<Lightness (L*) (-) of Styrene-Based Resin Composition>

In the present embodiment, the lightness (L*) of the styrene-based resin composition is preferably 50 or less, and more preferably 45 or less, 40 or less, 38 or less, 36 or less, 34 or less, and 32 or less, in increasing preference order. By setting the lightness (L*) to 50 or less, a styrene-based resin composition and a molded article thereof with excellent light resistance can be obtained, and by setting it to 38 or less, excellent hue can be achieved.

<Density (g/cm$^3$) of Styrene-Based Resin Composition>

In the present embodiment, the density of the styrene-based resin composition is preferably 1.20 g/cm$^3$ or less, more preferably 1.15 g/cm$^3$ or less, even more preferably 1.10 g/cm$^3$ or less, further preferably 1.09 g/cm$^3$ or less, still further preferably 1.08 g/cm$^3$ or less, and even more preferably 1.07 g/cm$^3$ or less, even further preferably 1.06 g/cm$^3$ or less. By setting the density to 1.20 g/cm$^3$ or less, it is possible to contribute to the weight reduction of the molded article.

<Content of All Styrene-Based Monomers in Styrene-Based Resin Composition>

In the present embodiment, the content of residuals of all styrene-based monomers contained in the styrene-based resin composition is preferably 3000 μg/g or less, more preferably 2000 μg/g or less, even more preferably 1500 μg/g or less, still more preferably 1000 μg/g or less, even still more preferably 900 μg/g or less, even still more preferably 800 μg/g or less, and even still more preferably in the range of 700 μg/g or less. By setting the residual content of all styrene-based monomers to 3000 μg/g or less, the generation of bubbles from the heated surface during thermal welding can be suppressed. On the other hand, a content of 100 μg/g or more is preferable because the fluidity is improved. The styrene-based monomers contained in the styrene-based resin composition are basically polymerization residues.

<Content of Styrene Dimers and Trimers in Styrene-Based Resin Composition>

In the present embodiment, the content of styrene dimers and trimers contained in the styrene-based resin composition is preferably 1.00 mass% or less, more preferably 0.90 mass% or less, even more preferably 0.80 mass% or less, still more preferably 0.70 mass% or less, even still more preferably 0.60 mass% or less, even still more preferably 0.50 mass% or less, and even still more preferably in the range of 0.40 mass% or less. By setting the content of styrene dimers and trimers to 1.00 mass% or less, generation of bubbles from the heated surface during thermal welding can be suppressed. On the other hand, a content of 0.10 mass% or more is preferable because the fluidity is improved. The content of styrene dimers and trimers contained in the styrene-based resin composition is basically by-product generated during polymerization.

<Content of All Styrene-Based Monomer Units in Styrene-Based Resin Composition>

In addition, in the present embodiment, the upper limit of the content of all styrene-based monomer units (total

amount of styrene-based monomer units in each resin constituting the styrene-based resin composition) of the styrene-based resin composition preferably is preferably 72 mass% or less, 71 mass% or less, 70 mass% or less, 69 mass% or less, 68 mass% or less, 69 mass% or less, and 68 mass% or less, in increasing preference order, relative to the total amount (100 mass%) of the styrene-based resin composition. By setting the total content of all styrene-based monomer units included in the styrene-based resin composition to 72 mass% or less, a styrene-based resin composition with excellent thermal weldability with acrylic resin materials can be obtained. The lower limit of the content of all styrene-based monomer units is preferably 45 mass% or more, 46 mass% or more, 47 mass% or more, 48 mass% or more, 49 mass% or more, 50 mass% or more, and 51 mass% or more, in increasing preference order. By setting the total content of all styrene-based monomer units included in the styrene-based resin composition to 45 mass% or more, a styrene-based resin composition having excellent moldability, low water absorption, and low specific gravity can be obtained. The content range of all styrene-based monomer units in the styrene-based resin composition can be arbitrarily selected from the above upper and lower limits.

The term "all styrene-based monomer units" refers to the total of styrene-based monomer units (a1) contained in the styrene-unsaturated carboxylic acid-based resin (A), styrene-based monomer units (b4) contained in the core-shell structured rubbery particles (B) described later, styrene-based monomer units (c1) contained in the impact-resistant styrene-based resin (C), styrene-based monomer units (d1) contained in the styrene-based elastomer (D), styrene-based monomer units as other monomer units (f3) contained in the acrylic resin (F), and styrene-based monomer units contained in the other optional components constituting the styrene-based resin composition.

<Content of All Conjugated Diene-Based Monomer Units in Styrene-Based Resin Composition>

In the present embodiment, the content of all conjugated diene-based monomer units contained in the styrene-based resin composition is preferably 0 to 25 mass%, more preferably 5 to 20 mass%, even more preferably 8 to 19 mass%, and most preferably in the range of 10 to 18 mass% relative to the entire styrene-based resin composition. In particular, by setting the content of all conjugated diene-based monomer units in the range of 8 to 19 mass%, a resin composition having an excellent balance of impact strength and rigidity, and an injection molded article formed from the composition, can be obtained.

The term "all conjugated diene-based monomer units" refers to the total of conjugated diene-based monomer units (b2) contained in the core-shell structured rubbery particles (B), conjugated diene-based monomer units (c2) contained in the impact-resistant styrene-based resin (C), conjugated diene-based monomer units (d2) contained in the styrene-based elastomer (D), and conjugated diene-based monomer units contained in the other optional components constituting the styrene-based resin composition.

<Content of All (Meth)acrylic Acid Monomer Units in Styrene-Based Resin Composition>

In the present embodiment, the content of all (meth)acrylic acid monomer units contained in the styrene-based resin composition is preferably 2 to 20 mass%, more preferably in the range of 3 to 15 mass%, even more preferably in the range of 4 to 11 mass%, and still even more preferably in the range of 5 to 9 mass%, relative to the total amount (100 mass%) of the styrene-based resin composition. When the content of all (meth)acrylic acid monomer units in the entire styrene-based resin composition falls within the above range, it is possible to sufficiently obtain the effect of improving heat resistance and thermal weldability with acrylic resin materials.

The term "all (meth)acrylic acid monomer units" refers to the total of (meth)acrylic acid monomer units (a2-1) contained in the styrene-unsaturated carboxylic acid-based resin (A), (f2) contained in the acrylic resin (F), and (meth) acrylic acid monomer units contained in other optional components that are included in the constituents of the styrene-based resin composition.

<Content of All Methyl Methacrylate Monomer Units in Styrene-Based Resin Composition>

In the present embodiment, the content of all methyl methacrylate monomer units contained in the styrene-based resin composition is preferably 0 to 10 mass%, and preferably in the range of 0.3 to 3.0 mass% relative to the total amount (100 mass%) of the styrene-based resin composition.

<All Rubbery Particles in Styrene-Based Resin Composition>

In the present embodiment, the average particle diameter of all rubbery particles contained in the styrene-based resin composition is preferably 0.08 to 5.0 μm, more preferably 0.10 to 4.5 μm, even more preferably 0.12 to 4.0 μm, still more preferably 0.14 to 3.5 μm, even more preferably 0.16 to 3.0 μm, even more preferably 0.16 to 3.0 μm, even more preferably 0.18 to 3.0 μm, even more preferably 0.20 to 2.0 μm, and most preferably 0.22 to 1.5 μm.

When the average particle diameter of all rubbery particles, so-called apparent rubbery particles, falls within the above range, the effect of imparting strength to the styrene-based resin composition is maximized.

The total amount of all rubbery particles (including encapsulated resins) in the entire styrene-based resin composition of the present embodiment is preferably 5.0 to 30 mass%, more preferably 8.0 to 28 mass%, even more preferably 10 to 26 mass%, and still more preferably 14 to 26 mass% relative to the total amount (100 mass%) of the styrene-based resin composition. In particular, when the amount is in the range of 10 to 26 mass%, a styrene-based resin composition with excellent toughness can be obtained.

The term "all rubbery particles" refers to the total of the core-shell structured rubbery particles (B) and the rubbery polymer particles (C-2) (including graft/occluded types) contained in the impact-resistant styrene-based resin (C).

The measurement method of the average particle diameter of the above all rubbery particles is performed using a laser diffraction particle size analyzer under the following conditions.

1 g of the target sample (styrene-based resin composition) and 20 mL of N,N-dimethylformamide were placed in a polypropylene disposable cup and subjected to ultrasonic vibration for 3 minutes for dissolution and dispersion. While maintaining the vibrated state, a portion of the resulting turbid sample solution was collected, placed in a measurement cell, and stirred with a rotor. Then, the particle diameter (d50%) and integrated distribution curve of the dispersion containing the styrene-based resin composition in N,N-dimethylformamide solution were measured, using a laser diffraction particle size analyzer (LA-960V2 manufactured by HORIBA, Ltd.). At this time, the refractive index of the sample was considered as 1.6-0.00i, and that of the solvent was considered as 1.43.

[Production Method of Styrene-Based Resin Composition]

In the present embodiment, the production method of the styrene-based resin composition, which includes a styrene-unsaturated carboxylic acid-based resin (A) containing styrene-based monomer units (a1) and unsaturated carboxylic acid-based monomer units (a2), core-shell structured rubbery particles (B) containing (meth)acrylic acid ester monomer units (b1), and optional components (at least one selected from the group consisting of an impact-resistant styrene-based resin (C), styrene-based elastomer (D), acrylic elastomer (E), acrylic resin (F), and optional additives), is not particularly limited, and a method commonly used in the production of general styrene resins may be employed. For example, the components described above may be blended (mixed) by a drum tumbler, a HENSCHEL mixer, or the like, melt-kneaded by using a Banbury mixer, a single screw extruder, a twin screw extruder, a kneader, or the like, and granulated by a rotary cutter, a fan cutter, or the like, to thereby obtain a styrene-based resin composition. The resin temperature of the melt-kneading is preferably 180 to 240 °C. In order to achieve the target resin temperature, the cylinder temperature of the extruder or the like is preferably set to a temperature that is lower than the resin temperature by 10 to 20 °C. A resin temperature less than 180 °C is not preferable because sufficient mixing cannot be achieved. On the other hand, when the resin temperature exceeds 240°C, thermal decomposition of the resin occurs, which is undesirable.

[Molded Article]

In applications of the styrene-based resin composition according to the present disclosure, the styrene-based resin composition is preferably subjected to injection blow molding, formation into sheet articles (including films), or injection molding, or extrusion molding. Therefore, the present embodiment may be a styrene resin molded article obtained by injection molding of the styrene-based resin composition. Also, another aspect of the present embodiment may be a thermally welded injection molded article having a styrene resin molded article and an acrylic resin material thermally welded (e.g., heat welded) to the molded article.

In addition, the molded article including the styrene-based resin composition of the present embodiment, preferably an injection molded article (including injection compression molded articles), is suitably used for OA equipment, home appliances, and housings or various parts of electric/electronic devices such as copiers, faxes, televisions, radios, tape recorders, video decks, personal computers, printers, telephones, and information terminals, as well as for automotive lighting equipment such as headlamps, rear lamps, fog lamps, and turn lamps, or interior and exterior parts of vehicles, foam insulation materials, insulating films, etc.

The present disclosure may also include a dissimilar resin composite member in which a styrene-based resin member containing the styrene-based resin composition of the present embodiment as a main component and an acrylic resin member containing an acrylic resin as a main component are joined.

[Dissimilar Resin Composite Member]

The dissimilar resin composite member in the present embodiment (hereinafter, simply referred to as the composite member is a dissimilar resin composite member comprising an acrylic resin member produced from an acrylic resin composition and a styrene-based resin member made of a styrene-based resin composition, welded together. The

acrylic resin composition contains more than 50 mass% of methyl methacrylate monomer units, and the styrene-based resin composition contains more than 50 mass% of styrene-based monomer units and 3 mass% or more of methacrylic acid monomer units.

Further, it is preferable that the Vicat softening temperature of the styrene-based resin composition is 105 °C or higher. The three-dimensional plot distance (HSP distance) between the Hansen solubility parameter (HSP) values [($\delta_{ds}$, $\delta_{ps}$, $\delta_{hs}$) $(J/cm^3)^{1/2}$] of the chloroform-soluble fraction of the styrene-based resin composition and the Hansen solubility parameter (HSP) values [($\delta_{da}$, $\delta_{pa}$, $\delta_{ha}$) $(J/cm^3)^{1/2}$] of the chloroform-soluble fraction of the acrylic resin composition satisfy the following mathematical formula (I):

[Math. 2]

$$\text{HSP distance} = \{ (\delta_{ds} - \delta_{da})^2 + (\delta_{ps} - \delta_{pa})^2 + (\delta_{hs} - \delta_{ha})^2 \}^{1/2} \leq 4.0 \quad \text{... (Formula 1)}$$

in the above formula 1, $\delta_{ds}$ represents the dispersion force component $(J/cm^3)^{1/2}$ of the styrene-based resin composition, $\delta_{ps}$ $(J/cm^3)^{1/2}$ represents the polar component of the styrene-based resin composition, $\delta_{hs}$ $(J/cm^3)^{1/2}$ represents the hydrogen bonding component of the styrene-based resin composition, $\delta_{da}$ $(J/cm^3)^{1/2}$ represents the dispersion force component of the acrylic resin composition, $\delta_{pa}$ $(J/cm^3)^{1/2}$ represents the polar component of the acrylic resin composition, and $\delta_{ha}$ $(J/cm^3)^{1/2}$ represents the hydrogen bonding component of the acrylic resin composition.))

As a result, it is possible to provide a dissimilar resin composite member having excellent weld strength, heat resistance, rigidity, and assembly cycle characteristics.

The shape of the styrene-based resin member in the present embodiment is not particularly limited, and a desired shape may be appropriately adopted depending on the intended use. For example, the shape of the styrene-based resin member may include rod-like, curved plate-like, flat plate-like, mesh-like, semi-circular, semi-elliptical, prismatic, conical, and pyramidal shapes, as well as combinations thereof. A preferred shape of the styrene-based resin member is a form having a recess (so-called vessel type).

Similarly, the shape of the acrylic resin member in the present embodiment is not particularly limited, and a desired shape may be appropriately adopted depending on the intended use. For example, the shape of the acrylic resin member may include rod-like, curved plate-like, flat plate-like, mesh-like, semi-circular, semi-elliptical, prismatic, conical, and pyramidal shapes, as well as combinations thereof. A preferred shape of the acrylic resin member is a curved plate-like form in view of bonding with the styrene-based resin member. If the styrene-based resin member is a member having a recess, the opening portion of the recess can be covered by the curved plate-like acrylic resin member, whereby a desired member or component can be accommodated in the recess, and the entire dissimilar resin composite member can be used as a housing member.

Hereinafter, with reference to FIGS. 1 and 2, the configuration of a dissimilar resin composite member comprising an acrylic resin member produced from an acrylic resin composition and a styrene-based resin member made of a styrene-based resin composition, welded together together will be described.

FIGS. 1 and 2 illustrate a mode in which, for convenience of explanation, a flat plate shape is adopted as an example of the acrylic resin member, and a container shape having a recess is adopted as an example of the styrene-based resin member.

As illustrated in FIGS. 1 and 2, the styrene-based resin member 22 has a recess having a length D2 × width W2 × predetermined depth, and has a rectangular parallelepiped shape with an edge width w0 and a height H2. On the other hand, the acrylic resin member 33 has a flat plate body shape with a length D1 × width W1 × predetermined thickness.

The dissimilar resin composite member 11 of the present embodiment includes a container-like styrene-based resin member 22 having a recess, and an acrylic resin member 33 covering the opening portion of the recess, wherein the acrylic resin member 33 is bonded to the styrene-based resin member 22 by welding. More specifically, the flat plate-like acrylic resin member 33 and the edge portion of the styrene-based resin member 33 are joined by heat plate welding and by pressing both together. Accordingly, in the example of the dissimilar resin composite member illustrated in FIGS. 1 and 2, the pressing direction may be the vertical direction in FIGS. 1 and 2.

In the dissimilar resin composite member of the present embodiment, the styrene-based resin member 22 formed from the styrene-based resin composition has an internal space due to having a recess. Further, the styrene-based resin member 22 includes a recessed main body portion having an opening and an annular edge portion protruding from the upper end portion of the main body. The annular edge portion and the flat plate-like acrylic resin member 33 can be joined by welding to form the dissimilar resin composite member.

(Welding)

In this specification, "welding" refers to a joining state in which, in integrating a plurality of element components,

the joint portion of at least one of the element components is heated or melted, and molecular entanglement near the interface due to fluidization accompanying the heating or melting ensures the joint strength. Accordingly, when joining the acrylic resin member and the styrene-based resin member, at least one of the joint portions (for example, the surfaces to be joined) of the acrylic resin member and/or the styrene-based resin member is heated or melted, and, if necessary, contact pressure and/or cooling is further applied to the joint portion, so that the joining state is achieved by entanglement due to diffusion of the polymer molecules constituting the acrylic resin part and/or the styrene-based resin member, or by entanglement due to diffusion of the polymer molecules and crystallization.

The welding method for the styrene-based resin member and the acrylic resin member in the present embodiment is not particularly limited, and various welding methods can be adopted. Examples of the welding methods include one or two or more selected from the group consisting of laser welding, vibration welding, spin welding, high-frequency welding, ultrasonic welding, and thermal welding (including heat plate welding, hot air welding, iron-type welding, and frictional heat). Among these, the welding method for the dissimilar resin composite member composed of the styrene-based resin member and the acrylic resin member in the present embodiment is preferably one selected from the group consisting of thermal welding, laser welding, vibration welding, ultrasonic welding, spin welding, and high-frequency welding, with thermal welding being more preferred. The thermal welding method includes a contact type in which a heat plate is brought into contact with the resin to melt it, and a non-contact type in which the resin is melted using radiant heat from the heat plate. As a preferred welding method in the present embodiment, heat plate welding may be employed.

<High-Frequency Welding>

The high-frequency welding includes a method of welding by generating heat from inside the object to be heated using the electric field effect of high-frequency (electromagnetic wave) energy.

In the present embodiment, high-frequency welding can be performed by either a one-shot welding method using a high-frequency welder or a continuous welding method using a high-frequency sewing machine. There are no particular limitations on the conditions for high-frequency welding, and any known conditions may be used. For example, conditions include an oscillation frequency of 30 to 50 MHz, an oscillation time of 1 to 3 seconds, and an anode current value of 1 to 30 A.

<Ultrasonic Welding>

The ultrasonic welding includes a welding method in which ultrasonic vibrations are transmitted from a resonator (horn) to the object to be heated, and bonding is performed using frictional heat generated inside. More specifically, the resonator is pressed against the acrylic resin member and/or the styrene-based resin member, and high-frequency mechanical vibrations are applied from the resonator to the member, the mechanical vibrations are converted into frictional heat, and the member is melted by the frictional heat to form a welded portion, thereby welding the member to the target.

In ultrasonic welding, the surface of the first member (one of the acrylic resin member or the styrene-based resin member) provided with an energy director and the surface to be welded of the second member (the other of the acrylic resin member or the styrene-based resin member) are opposed, and the welding horn is pressed against the reinforcing member to apply high-frequency vibrations, melt the energy director, and then solidify the melted energy director by cooling to form the welded portion.

From the viewpoint of welding strength and appearance of the composite member, it is preferable to press the acrylic resin member and the styrene-based resin member with a load of 10 N to 300 N during the welding of the energy director to the resin molded product. The load is more preferably 10 N to 200 N, and still more preferably 20 N to 180 N.

The amplitude in the welding is not particularly limited and may be, for example, 1 $\mu$m to 100 $\mu$m. The welding time is not particularly limited and may be, for example, from 0.1 seconds to 30 seconds.

The vibration by the welding horn is preferably performed from one end to the other end of the first member, or from near the center toward both ends. By performing ultrasonic welding by the above method, it tends to be possible to prevent the occurrence of a gap between the acrylic resin member and the styrene-based resin member and a decrease in welding strength. In particular, when the acrylic resin member has a bent shape and the flexural modulus of the styrene-based resin member is 900 MPa to 1700 MPa, the acrylic resin member is likely to follow the shape due to its flexibility, and therefore, ultrasonic welding by the above mode is preferable.

When a gap (within 1 mm) exists between the first member and the second member, the effect of ultrasonic welding in the above-described mode tends to be particularly observed.

In the case where either the acrylic resin member or the styrene resin member has a bent structure, either one of the acrylic resin member or the styrene resin member may be cooled before or during the welding of both. By cooling either the acrylic resin member or the styrene resin member, the flexural modulus can be improved, and when welding the other member to the bent member, the energy director tends to more easily suppress the deformation of the shape of the bent member, making it possible to form a composite member with excellent welding strength.

From the viewpoint of welding strength and maintaining good appearance of the bent member, it is preferable that the cooling of the bent member be carried out such that the temperature of the bent member becomes 3 °C to 19 °C, and more preferably 5 °C to 15 °C.

The cooling method is not particularly limited and may be carried out by conventionally known methods such as air cooling or water cooling. From the viewpoint of productivity of the composite member, it is preferable to cool the reinforcing member by blowing cold air onto it.

<Hot Plate Welding>

The hot plate welding includes two types: contact type and non-contact type. The contact type includes a welding method in which a heated plate is sandwiched between the acrylic resin member and the styrene resin member, and after heating the welding surfaces, the acrylic resin member and the styrene resin member are joined. Specific examples of contact-type hot plate welding include the following method. That is, a hot plate is heated to a predetermined surface temperature (for example, 200 to 300 °C, particularly 250 °C) using a hot plate welding machine (manufactured by Takagi Seiko Co., Ltd.). Also, the hot plate is a metal plate (e.g., aluminum) whose surface is treated with a Teflon® coating. Then, a test piece having a surface of predetermined size (20 mm $\times$ 2 mm) is pressed against the hot plate so as to contact the surface at a predetermined speed (e.g., in the range of 0.1 to 10 mm/s, particularly at a speed of 1 mm/s), and after being pushed from the contacted position to a predetermined length (e.g., 1.0 $\pm$ 0.5 mm), test piece is separated at a speed in the range of 20 $\pm$ 10 mm/s after contact for, for example, 3 to 30 seconds, thereby joining the acrylic resin member and the styrene resin member.

As a non-contact type hot plate welding method, the following method can be mentioned. That is, the bonding surfaces are heated by radiant heat from a metal hot plate without bringing the metal hot plate into direct contact with the acrylic resin member and the styrene resin member, and after melting the acrylic resin member and the styrene resin member, both are pressure-welded. The temperature of the hot plate is preferably 450 to 600 °C, and the distance between the hot plate and the bonding surfaces of the acrylic resin member and the styrene resin member is preferably, for example, 0.2 to 2.0 mm, and the heating time is preferably, for example, 5 to 30 seconds.

<Hot Air Welding>

As the hot air welding method, a method is mentioned in which hot air is blown onto the bonding portion of the acrylic resin member and/or the styrene resin member, and pressing and welding are performed using a roller (see, for example, JP 2014-217434 A).

As the iron-type welding method, a method is mentioned in which heating is performed using an iron (heating plate), and pressing and welding are performed using a roller.

As a method of bonding by frictional heat, spin welding is a method in which the surfaces of the members to be welded are aligned and rotated at high speed, and the generated frictional heat causes melting and welding.

As described above, since the acrylic resin member and the styrene resin member are joined by welding, the strength is maintained by the entanglement between the molecules of the components of the acrylic resin composition constituting the acrylic resin member and the molecules of the components of the styrene-based resin composition constituting the styrene resin member. Therefore, the compatibility between the components of the acrylic resin composition and the components of the styrene-based resin composition greatly affects the bonding (or welding) strength. Accordingly, it is considered that, when the three-dimensional plot distance (HSP distance) between the Hansen solubility parameter (HSP) values ($\delta_{ds}$, $\delta_{ps}$, $\delta_{hs}$) $(J/cm^3)^{1/2}$ of the chloroform-soluble fraction of the styrene-based resin composition and the Hansen solubility parameter (HSP) values ($\delta_{da}$, $\delta_{pa}$, $\delta_{ha}$) $(J/cm^3)^{1/2}$ of the chloroform-soluble fraction of the acrylic resin composition satisfies the following Equation (1), a dissimilar resin composite member having excellent strength, heat resistance, rigidity, and assembly cycle performance at the welded portion between the acrylic resin member and the styrene resin member can be provided.

[Math. 3]

$$\text{HSP distance} = \{ (\delta_{ds} - \delta_{da})^2 + (\delta_{ps} - \delta_{pa})^2 + (\delta_{hs} - \delta_{ha})^2 \}^{1/2} \leq 4.0 \quad \text{... Equation (1)}$$

in the above Equation (I), $\delta_{ds}$ represents the dispersion term $(J/cm^3)^{1/2}$ of the styrene-based resin composition, $\delta_{ps}$ $(J/cm^3)^{1/2}$ represents the polar term of the styrene-based resin composition, $\delta_{hs}$ $(J/cm^3)^{1/2}$ represents the hydrogen bonding term of the styrene-based resin composition, $\delta_{da}$ represents the dispersion term $(J/cm^3)^{1/2}$ of the acrylic resin composition, $\delta_{pa}$ $(J/cm^3)^{1/2}$ represents the polar term of the acrylic resin composition, and $\delta_{ha}$ $(J/cm^3)^{1/2}$ represents the hydrogen bonding term of the acrylic resin composition.

Here, the Hansen solubility parameter (HSP) values, which are indices indicating the compatibility between the acrylic resin member and the styrene resin member (hereinafter also simply referred to as HSP values), will be described below.

(Hansen Solubility Parameter (HSP) Values)

The HSP values in the present disclosure are values calculated by the Hansen sphere method based on solubility evaluation of each resin and resin composition with respect to organic solvents, of which HSP values are known, and are parameters consisting of three-dimensional components: dispersion component $\delta_d$, polar component $\delta_p$, and hydrogen bonding component $\delta_h$. The detailed evaluation method will be described in the Examples below, but it is not possible to evaluate "insoluble fractions" such as crosslinked polymers or inorganic components that are insoluble in any organic solvent that may be contained in the resin used or in the styrene-based resin composition. In the case of containing such "insoluble fractions" as described above, the present disclosure is described using the HSP values of the chloroform-soluble fraction.

The dissimilar resin composite member in the present disclosure, as described above, is composed of a styrene resin member formed by molding the styrene-based resin composition and an acrylic resin member formed by molding the acrylic resin composition, and the three-dimensional plot distance (HSP distance) between the Hansen solubility parameter (HSP) values ($\delta_{ds}$, $\delta_{ps}$, $\delta_{hs}$) $(J/cm^3)^{1/2}$ of the chloroform-soluble fraction of the styrene-based resin composition and the Hansen solubility parameter (HSP) values ($\delta_{da}$, $\delta_{pa}$, $\delta_{ha}$) $(J/cm^3)^{1/2}$ of the chloroform-soluble fraction of the acrylic resin composition is 4.0 or less, preferably 3.8 or less, 3.6 or less, 3.4 or less, 3.2 or less, 3.0 or less, 2.8 or less, and 2.5 or less in increasing preference order. Particularly, when the value is 3.0 or less, it is possible to obtain a dissimilar resin composite member with high interfacial strength between the styrene resin member and the acrylic resin member.

In the Hansen solubility parameter (HSP) values of the chloroform-soluble fraction of the styrene-based resin composition, the value of the dispersion component ($\delta_{ds}$) is preferably in the range of 15 to 20 $(J/cm^3)^{1/2}$, more preferably in the range of 16 to 19 $(J/cm^3)^{1/2}$, and still more preferably in the range of 17 to 18 $(J/cm^3)^{1/2}$. The value of the polar component ($\delta_{ps}$) is preferably in the range of 5 to 12 $(J/cm^3)^{1/2}$, more preferably in the range of 6 to 11 $(J/cm^3)^{1/2}$, and still more preferably in the range of 8 to 10 $(J/cm^3)^{1/2}$. The value of the hydrogen bonding component ($\delta_{hs}$) is preferably in the range of 3 to 9 $(J/cm^3)^{1/2}$, more preferably in the range of 4 to 8 $(J/cm^3)^{1/2}$, and still more preferably in the range of 5 to 7 $(J/cm^3)^{1/2}$.

In the Hansen solubility parameter (HSP) values of the chloroform-soluble fraction of the acrylic resin composition, the value of the dispersion component ($\delta_{da}$) is preferably in the range of 15 to 22 $(J/cm^3)^{1/2}$, more preferably in the range of 16 to 21 $(J/cm^3)^{1/2}$, and still more preferably in the range of 17 to 20 $(J/cm^3)^{1/2}$. The value of the polar component ($\delta_{pa}$) is preferably in the range of 7 to 14 $(J/cm^3)^{1/2}$, more preferably in the range of 8 to 13 $(J/cm^3)^{1/2}$, and still more preferably in the range of 9 to 12 $(J/cm^3)^{1/2}$. The value of the hydrogen bonding component ($\delta_{ha}$) is preferably in the range of 3 to 9 $(J/cm^3)^{1/2}$, more preferably in the range of 5 to 8 $(J/cm^3)^{1/2}$, and still more preferably in the range of 6 to 7 $(J/cm^3)^{1/2}$.

In the Hansen solubility parameter (HSP) values of the chloroform-soluble fraction of the styrene-based resin composition, when the sum of the polar component ($\delta_{ps}$) and the hydrogen bonding component ($\delta_{hs}$) is defined as $S\delta_{p+h}$, the value thereof is preferably in the range of 10 to 20 $(J/cm^3)^{1/2}$, more preferably in the range of 12 to 18 $(J/cm^3)^{1/2}$, and still more preferably in the range of 14 to 16 $(J/cm^3)^{1/2}$

In the Hansen solubility parameter (HSP) values of the chloroform-soluble fraction of the acrylic resin composition, when the sum of the polar component ($\delta_{pa}$) and the hydrogen bonding component ($\delta_{ha}$) is defined as $S\delta_{p+h}$, the value thereof is preferably in the range of 10 to 20 $(J/cm^3)^{1/2}$, more preferably in the range of 13 to 19 $(J/cm^3)^{1/2}$, and still more preferably in the range of 15 to 18 $(J/cm^3)^{1/2}$.

The absolute value $|S\delta_{p+h} - A\delta_{p+h}|$ of the difference between $S\delta_{p+h}$ and $A\delta_{p+h}$ is preferably 5.0 or less, 4.8 or less, 4.6 or less, 4.4 or less, 4.2 or less, 4.0 or less, 3.8 or less, 3.6 or less, 3.4 or less, 3.2 or less, 3.0 or less, 2.8 or less, 2.6 or less, and 2.4 or less in increasing preference order.

When the absolute value of the difference between the sum of the polar component ($\delta_{pa}$) and the hydrogen bonding component ($\delta_{ha}$) in the Hansen solubility parameter (HSP) values of the chloroform-soluble fraction of the acrylic resin composition, defined as $A\delta_{p+h}$, and the sum of the polar component ($\delta_{ps}$) and the hydrogen bonding component ($\delta_{hs}$) in the Hansen solubility parameter (HSP) values of the chloroform-soluble fraction of the styrene-based resin composition, defined as $S\delta_{p+h}$, is within the above range, a dissimilar resin composite member with superior strength at the welded portion, heat resistance, rigidity, and assembly cycle performance can be obtained.

Also, in the Hansen solubility parameter (HSP) values of the styrene-unsaturated carboxylic acid-based resin (A) in the present disclosure, the value of the dispersion component ($\delta_{ds}$) is preferably in the range of 15 to 21 $(J/cm^3)^{1/2}$, more preferably in the range of 16 to 20 $(J/cm^3)^{1/2}$, and still more preferably in the range of 17 to 19 $(J/cm^3)^{1/2}$. The value of the polar component ($\delta_{ps}$) is preferably in the range of 5 to 12 $(J/cm^3)^{1/2}$, more preferably in the range of 6 to 11 $(J/cm^3)^{1/2}$, and still more preferably in the range of 7 to 10 $(J/cm^3)^{1/2}$. The value of the hydrogen bonding component ($\delta_{hs}$) is preferably in the range of 3 to 9 $(J/cm^3)^{1/2}$, more preferably in the range of 4 to 8 $(J/cm^3)^{1/2}$, and still more preferably in the range of 5 to 7

$(J/cm^3)^{1/2}$.

<<Difference in Vicat Softening Temperature (°C) between Acrylic Resin Composition and Styrene-Based Resin Composition>>

The absolute value of the difference in Vicat softening temperature (°C) between the acrylic resin composition constituting the acrylic resin member and the styrene resin composition constituting the styrene resin member is preferably 30 °C or lower, more preferably 25 °C or lower, still more preferably 22 °C or lower, even more preferably 20 °C or lower, particularly preferably 18 °C or lower, and most preferably 15 °C or lower.

The Vicat softening temperature (°C) is measured under the conditions of a 5 kg load and a heating rate of 50 °C/hour in accordance with ISO 306.

By setting the Vicat softening temperature difference within the above range, the melting behavior between the acrylic resin member and the styrene resin member can be matched, enabling the production of a dissimilar resin composite member with excellent interfacial strength upon welding.

The acrylic resin composition constituting the acrylic resin member will be described in detail below. On the other hand, the contents of the styrene resin composition of the above-described embodiment is applied to the styrene resin composition constituting the styrene resin member.

"Acrylic Resin Composition"

The acrylic resin composition in the present embodiment is a resin composition constituting the acrylic resin member and is a resin composition that must contain methyl methacrylate monomer units.

It should be noted that "methyl methacrylate monomer unit" in the present specification refers to a repeating unit constituting a polymer in which methyl methacrylate monomers are polymerized, and is a repeating unit (or structural unit) in which the carbon-carbon double bond in the methyl methacrylate monomer has become a single bond (-C-C-) through a polymerization reaction or a crosslinking reaction of the methyl methacrylate monomer. In addition, other monomer units described in this specification (e.g., styrene monomer units described later, methacrylic acid monomer units, etc.) have the same meaning.

The content of methyl methacrylate monomer units in the acrylic resin composition is more than 50 mass% relative to the total acrylic resin composition (100 mass%), and the lower limit is preferably 60 mass% or more, 70 mass% or more, 80 mass% or more, 82 mass% or more, 84 mass% or more, 86 mass% or more, 88 mass% or more, 90 mass% or more, 92 mass% or more in increasing preference order and the upper limit is preferably 100 mass% or less, 99 mass% or less, or 98.5 mass% or less in increasing preference order. In particular, by setting the content of methyl methacrylate monomer units to 80 mass% or more, it is possible to provide an acrylic resin member having excellent weldability with the styrene resin member composed of the styrene resin composition described later, as well as excellent rigidity and mechanical strength.

<Preferred Forms of Acrylic Resin Composition>

As a preferred form of the acrylic resin composition of the present disclosure, the main component constituting the acrylic resin composition is preferably a copolymer (i) having methyl methacrylate monomer units and acrylic acid ester monomer units (hereinafter also simply referred to as copolymer (i)). The "main component" constituting the acrylic resin composition means that the copolymer having methyl methacrylate monomer units and acrylic acid ester monomer units is contained in more than 50 mass% relative to the total acrylic resin composition (100 mass%).

In the Hansen solubility parameter (HSP) values of the copolymer (i) having the methyl methacrylate monomer units and the acrylic acid ester monomer units, the value of the dispersion component ($\delta_{ds}$) of the copolymer (i) is preferably in the range of 16 to 22 $(J/cm^3)^{1/2}$, more preferably in the range of 17 to 21 $(J/cm^3)^{1/2}$, and even more preferably in the range of 18 to 20 $(J/cm^3)^{1/2}$. The value of the polar component ($\delta_{ps}$) of the copolymer (i) is preferably in the range of 8 to 14 $(J/cm^3)^{1/2}$, more preferably in the range of 9 to 13 $(J/cm^3)^{1/2}$, and even more preferably in the range of 10 to 12 $(J/cm^3)^{1/2}$. The value of the hydrogen bonding component ($\delta_{hs}$) of the copolymer (i) is preferably in the range of 3 to 9 $(J/cm^3)^{1/2}$, more preferably in the range of 4 to 8 $(J/cm^3)^{1/2}$, and even more preferably in the range of 5 to 7 $(J/cm^3)^{1/2}$.

The content of the copolymer (i) in the acrylic resin composition is preferably more than 50 mass%, more preferably 80 mass% or more, still more preferably 90 mass% or more, even more preferably 96 mass% or more, yet more preferably 97 mass% or more, further preferably 98 mass% or more, and most preferably 99 mass% or more relative to the total acrylic resin composition (100 mass%). Also, the upper limit of the content of the copolymer (i) in the acrylic resin composition may be 100 mass% or less or less than 100 mass%.

The content of the copolymer (i) in the acrylic resin composition is preferably more than 50 mass% and 100 mass% or less.

The lower limit of the content of the methyl methacrylate monomer units in the copolymer (i) having the methyl methacrylate monomer units and the acrylic acid ester monomer units is preferably 60 mass% or more, and may be 70 mass% or more, 80 mass% or more, 82 mass% or more, 84 mass% or more, 86 mass% or more, 88 mass% or more, or 90 mass% or more relative to the entire copolymer (i) (100 mass%). On the other hand, the upper limit of the content of the methyl methacrylate monomer units may be less than 100 mass% or 98.5 mass% or less. Furthermore, the particularly preferred range of the content of the methyl methacrylate monomer units is more preferably 90 mass% or more and 99.5 mass% or less, 92 mass% or more and 99.0 mass% or less, and 93 mass% or more and 98.5 mass% or less in increasing preference order.

The acrylic acid ester monomer unit imparts thermal decomposition resistance to the copolymer (i), and examples specifically include methyl acrylate, ethyl acrylate, propyl acrylate, isopropyl acrylate, n-butyl acrylate, t-butyl acrylate, isobutyl acrylate, pentyl acrylate, hexyl acrylate, cyclohexyl acrylate, heptyl acrylate, 2-ethylhexyl acrylate, n-octyl acrylate, benzyl acrylate, and the like. From the viewpoint of industrial availability, methyl acrylate, n-butyl acrylate, and 2-ethylhexyl acrylate are preferred, and from the viewpoint of heat resistance, methyl acrylate is more preferred.

A preferred form of the copolymer (i) having a methyl methacrylate monomer unit and an acrylic acid ester monomer unit is, as described above, a copolymer having a methyl methacrylate monomer unit and a methyl acrylate monomer unit. In this case, the content of the methyl acrylate monomer unit is preferably 0.1 mass% or more, more preferably in the range of 0.3 mass% or more and 15 mass% or less, 0.5 mass% or more and 10 mass% or less, 0.7 mass% or more and 8 mass% or less, 0.9 mass% or more and 7 mass% or less, and 1.2 mass% or more and 6 mass% or less in increasing preference order, relative to the total amount (100 mass%) of the copolymer (i). By setting the content within the above range, it is possible to obtain an acrylic resin composition and an acrylic resin member having an excellent balance of heat resistance and thermal decomposition resistance.

When the copolymer (i) contains other monomer units besides the methyl methacrylate monomer unit and the acrylic acid ester monomer unit, the content thereof is preferably 15 mass% or less, more preferably 7 mass% or less, still more preferably 5 mass% or less, even more preferably 3 mass% or less, and most preferably 1 mass% or less, relative to the total amount (100 mass%) of the copolymer (i).

The acrylic resin composition of the present embodiment may contain optional additive components described below within a range that does not impair performance, as needed.

The weight average molecular weight (Mw) of the acrylic resin composition in terms of standard polystyrene in the present embodiment is preferably 50,000 to 400,000, more preferably 60,000 to 350,000, still more preferably 70,000 to 300,000, and even more preferably 80,000 to 250,000. When the weight average molecular weight is in the range of 50,000 to 400,000, the acrylic resin composition that exhibits excellent practicality in terms of a balance between strength and fluidity is obtained.

The Vicat softening temperature of the acrylic resin composition in the present embodiment is preferably 100 °C or higher, more preferably 102 °C or higher, still more preferably 104 °C or higher, and even more preferably 106 °C or higher. By setting the Vicat softening temperature of the acrylic resin composition to 100 °C or higher, it is possible to obtain a dissimilar resin composite member having excellent heat resistance. The Vicat softening temperature in the present specification can be measured under the conditions of a 5 kg load and a temperature rise rate of 50 °C/hour in accordance with ISO 306.

The melt flow rate of the acrylic resin composition in the present embodiment at 230 °C is preferably 0.2 to 4.0, more preferably 0.3 to 3.5, and still more preferably 0.4 to 3.0. A melt flow rate is 0.2 or more is preferred in view of the fluidity, and a melt flow rate of 4.0 or less is preferred in view of the mechanical strength of the resin. The melt flow rate of the acrylic resin composition in the present disclosure is a value measured at 230 °C under a load of 3.8 kg in accordance with ISO 1133.

The total light transmittance (in an optical path length of 2 mm) of the acrylic resin composition in the present embodiment is preferably 80% or more, more preferably 85% or more, still more preferably 88% or more, even more preferably 90% or more, and most preferably 92% or more.

The yellowness index YI (in an optical path length of 2 mm) of the acrylic resin composition in the present embodiment is preferably 2 or less, more preferably 1 or less, still more preferably 0.8 or less, and even more preferably 0.6% or less.

"Vehicle Rear Lamp Housing"

The dissimilar resin composite member of the present disclosure can be used in a vehicle lamp, preferably in a vehicle lamp housing, and particularly in a vehicle rear lamp housing. Hereinafter, the structure of the vehicle rear lamp housing will be described with reference to FIG. 3. FIG. 3 is a cross-sectional view illustrating an example of a vehicle lamp having a vehicle rear lamp housing 2 and a cover 3 joined to the vehicle rear lamp housing 2 by hot plate welding.

As illustrated in FIG. 3, the vehicle lamp 100 includes a vehicle rear lamp housing 2 and a cover 3, and the cover 3 is joined to the vehicle rear lamp housing 2 by hot plate welding. As described above, in the vehicle lamp 100, the cover 3 is

joined to the vehicle rear lamp housing 2 by hot plate welding, and is joined by being pressed against the vehicle rear lamp housing 2 during the hot plate welding. Accordingly, in the example of the vehicle lamp 1 illustrated in FIG. 3, the pressing direction S is set in the vertical direction.

The vehicle rear lamp housing 2 is, for example, a styrene resin member formed of the above-mentioned styrene-based resin composition. When the styrene resin member is used in the vehicle rear lamp housing 2, the vehicle rear lamp housing 2 has an internal space. The vehicle rear lamp housing 2 also includes a concave main body portion 4 having an opening, an annular edge portion 5 protruding outward from the upper end of the main body portion 4, and an annular joining protrusion portion 6 projecting outward from the edge portion 5. The upper surface of the joining protrusion portion 6 is formed as a welding surface 6a to the cover 3.

The cover 3 is, for example, an acrylic resin member formed of the above-mentioned acrylic resin composition. When the acrylic resin member is used in the cover 3, the cover 3 is transparent, and an outer surface 3a and a welding leg portion 8 protruding from the outer peripheral part of the inner surface 7a of an outer surface portion 7 on the outer side of the vehicle are integrally formed. The cover 3 is joined to the vehicle rear lamp housing 2 such that it covers the internal space of the vehicle rear lamp housing 2.

The outer surface portion 7 is curved to be convex outward (or to the side opposite to the vehicle rear lamp housing 2) according to the shape of the vehicle body or the like, and is formed in a curved surface shape. The portion outside the welding leg portion 8 in the outer surface portion 7 is provided to function as a shielding portion 9. The outer surface portion 7 is provided such that a portion inside the shielding portion 9, where the welding leg portion 8 protrudes, is formed as a protrusion forming portion 10, and a portion inside the protrusion forming portion 10, that is, a portion other than the shielding portion 9 and the protrusion forming portion 10, is provided as a light-transmitting portion T.

The welding leg portion 8 is composed of a continuous portion 12 continuous with the outer surface portion 7 and a bent portion 13 bent relative to the continuous portion 12. In addition, the welding leg portion 8 is formed such that the end surface of the bent portion 13 serves as a bonding surface 8a, and the end portion of the bent portion 13 including the bonding surface 8a is provided as a bonding portion 8b. Further, the welding leg portion 8 is formed such that the boundary portion between the continuous portion 12 and the bent portion 13 is a bent end portion 8c.

The continuous portion 12 is attached to protrude in a direction, for example, substantially orthogonal to the direction in which the shielding portion 9 and the protrusion forming portion 10 extend. The bent portion 13 is bent toward the outer peripheral side of the outer surface portion 7, that is, toward the shielding portion 9, with respect to the continuous portion 12. The direction connecting the bonding portion 8b and the bent end portion 8c of the bent portion 13 is defined as the connecting direction.

The connecting direction of the bent portion 13 is aligned with the pressing direction S. However, the connecting direction may be set so that the angle defined by the connecting direction and the pressing direction S is equal to or less than a certain angle.

Below, a procedure for bonding the cover 3 to the vehicle rear lamp housing 2 by heat plate welding will be briefly explained.

For bonding the cover 3 to the vehicle rear lamp housing 2 by heat plate welding, the vehicle rear lamp housing 2 and the cover 3 are held by a first jig and a second jig, respectively, and the cover 3 is held at a position separated from the vehicle rear lamp housing 2.

Next, while the vehicle rear lamp housing 2 and the cover 3 are held by the first jig and the second jig, respectively, a heat plate is positioned between the vehicle rear lamp housing 2 and the cover 3, and the bonding protrusion 6 of the vehicle rear lamp housing 2 and the welding leg portion 8 of the cover 3 are heated by the heat plate. By the heating of the heat plate, the upper end portion including the welding surface 6a of the bonding protrusion 6 and the bonding portion 8b of the welding leg portion 8 are brought into a meltable state.

Then, the heat plate is removed from between the vehicle rear lamp housing 2 and the cover 3, and the second jig is lowered to press the cover 3 against the vehicle rear lamp housing 2 in the pressing direction S, thereby pressing the bonding surface 8a of the welding leg portion 8 against the welding surface 6a of the bonding protrusion 6. At this time, since the upper end portion including the welding surface 6a of the bonding protrusion 6 and the bonding portion 8b of the welding leg portion 8 are in a meltable state, the upper end portion of the bonding protrusion 6 and the bonding portion 8b of the welding leg portion 8 are melted, whereby the cover 3 is bonded to the vehicle rear lamp housing 2.

Thereafter, the vehicle rear lamp housing 2 and the cover 3 are removed from the first jig and the second jig, respectively, and the bonding work of the cover 3 to the vehicle rear lamp housing 2 by heat plate welding is completed.

Further, by bonding the cover 3 to the vehicle rear lamp housing 2, the lamp outer casing 1 can be constituted by the vehicle rear lamp housing 2 and the cover 3. In the internal space of the lamp outer casing 1, a lamp unit (not shown) having required parts such as a light source or a reflector is disposed, thereby constituting a vehicle lamp 100.

In the vehicle lamp 100, the light emitted from the light source is, for example, reflected by the reflector and transmitted through the light-transmitting portion T of the cover 3, and then emitted toward the outside.

EXAMPLES

Next, the present disclosure will be described in more detail with reference to examples and comparative examples. However, the present disclosure is not limited to these examples. The methods for analyzing and evaluating the resins, resin compositions, molded articles used in the examples and comparative examples are described below.

[Evaluation of Properties of Each of Resins and Resin Compositions]

(1) Measurement of Content of Each Monomer Unit

The content of each monomer unit contained in the resins and resin compositions prepared in the examples and comparative examples was measured by pyrolysis GC/MS under the following conditions: The quantitative value was obtained by the calibration curve method using a standard sample in which the content of each monomer unit is known.

<<Preparation of Samples>>

20 μg of the resin or composition prepared in the examples and comparative examples was weighed into a sample cup using an analytical balance.

<<Measurement Conditions>>

<Pyrolysis Unit>

Apparatus: PY-3030D manufactured by Frontier Lab
Furnace temperature: 600 °C

<GC-MS unit>

Apparatus: GCMS-QP2020NX manufactured by Shimadzu Corporation
Column: Ultra Alloy-5
(Length: 30 m, film thickness: 0.25 μm, diameter: 0.25 mmϕ)
Column temperature: Held at 50 °C for 5 minutes → heated at 10 °C/min → heated at 7 °C/min from 100 °C → held at 300 °C for 10 minutes
Inlet temperature: 300 °C
Detector temperature: 300 °C
Split ratio: 1/300
Carrier gas: Helium
Detection device: Mass spectrometer (MSD)
Detection condition: scan mode or SIM mode (when there was an overlap between unnecessary peaks and peaks to be detected)

In the detection of each monomer peak, the sample amount, column to be used, heating rate, or other detection conditions may be appropriately adjusted in order to avoid saturation of peak intensity or overlap between desired peaks.

(2) Measurement of Average Molecular Weight

The number average molecular weight (Mn), weight average molecular weight (Mw), and Z average molecular weight (Mz) of each resin and resin composition prepared in the Examples and Comparative Examples were measured as polystyrene-equivalent molecular weights using gel permeation chromatography (GPC) under the following conditions by a calibration curve method using standard polystyrene.

Measurement apparatus: HLC-8220 manufactured by Tosoh Corp.
Fractionation column: Two TSK gel Super HZM-H (inner diameter: 4.6 mm) manufactured by Tosoh Corp., connected in series

Guard column: TSK guard column Super HZ-H manufactured by Tosoh Corp.
Measuring solvent: Tetrahydrofuran (THF)
Sample concentration: After dissolving 5 mg of the sample to be measured in 10 mL of solvent, filtration was carried out with a 0.45 μm filter.
Injection volume: 10 μL
Measuring temperature: 40 °C
Flow rate: 0.35 mL/min
Detector: differential refractometer

Eleven types of TSK standard polystyrene (F-850, F-450, F-128, F-80, F-40, F-20, F-10, F-4, F-2, F-1, and A-5000) by Tosoh Corp. were used to construct a calibration curve. The calibration curve was constructed using a first-order approximation. If there were THF-insoluble substances in the composition, the measurement was carried out after removing the THF-insoluble portions using a membrane filter of about 0.2 to 0.5 μm.

(3) Melt Mass Flow Rate (g/10 min.)

The melt mass flow rate was measured according to ISO 1133. For the resin (A) and the resin (C), the measurement was carried out under test conditions of 200 °C and 5 kg load. For the styrene-based resin compositions prepared in the examples and comparative examples, the measurement was carried out under test conditions of 220 °C and 10 kg load.

(4) Measurement of Vicat Softening Temperature

The Vicat softening temperature of each of the resins and resin compositions produced in the examples and comparative examples was measured according to ISO 306. For the resin (A) and the resin (F), the measurement was carried out under test conditions of 5 kg load and a temperature rise rate of 50 °C/hour. For the styrene-based resin compositions prepared in the examples and comparative examples, measurement was carried out under test conditions of 1 kg load and a temperature rise rate of 120 °C/hour.

(5) Measurement of Density (g/cm$^3$)

The density of each resin and resin composition produced in the examples and comparative examples was measured in accordance with ISO 1183 (Method A).

(6) Measurement of Average Particle Diameter (μm) of Rubbery Particles

For measuring the average particle diameter (μm) of the core-shell structured rubbery particles (B) and rubbery polymer particles (C-2) in the impact-resistant styrene-based resin (C), hot-pressed samples of each resin and resin composition were prepared. The cross-sections thereof were observed under a transmission electron microscope. The average particle diameter was calculated from 200 rubbery polymer particles observed using the following formula (2):

$$\text{Average particle diameter} = \Sigma(ni \times Di^4) / \Sigma(ni \times Di^3)$$

In the above formula (2), ni is the number of rubbery polymer particles having particle diameter Di, and Di is the average value of the long axis and short axis of the rubbery polymer particle.
The average was calculated by averaging the particle diameters obtained from five fields of view (5 fields of view × 200 particles).

(7) Analysis of Low Molecular Weight Components

The contents of monohydric alcohols having 10 or more carbon atoms, styrene monomer, and styrene dimer and trimer in the styrene-based resin composition were measured using gas chromatography under the following conditions.

<<Preparation of Sample>>

1.0 g of a resin was dissolved in 5 mL of methyl ethyl ketone, then 5 mL of hexane adjusted so that the concentration of p-diethylbenzene (as an internal standard) was 200 μg/g was added to precipitate the polymer

component. The supernatant was taken as the test solution for measurement.

<<Measurement Conditions>>

Measurement apparatus: 6850 Series GC System manufactured by Agilent
Detector: FID
Column: DB-WAX
(Length: 60 m, film thickness: 0.50 μm, diameter: 0.320 mmϕ)
Injection volume: 1 μL
Split ratio: 50:1
Column temperature: Held at 100 °C for 5 minutes → heated at 10 °C/min to 130 °C → heated at 10 °C/min to 180 °C → held at 180 °C for 10 minutes → heated at 20 °C/min to 220 °C → held at 220 °C for 10 minutes
Inlet temperature: 230 °C
Detector temperature: 300 °C
Carrier gas: Helium

In detecting each peak, conditions, such as pretreatments, e.g., sample dilution ratios, columns used, and detection conditions, e.g., heating rate, may be appropriately adjusted in order to avoid overlaps of other peaks or saturation of peak intensity.

(8) Tensile Test, Bending Test, and Impact Test

(8-1) Dumbbell Molding of Styrene-based resin Composition

Each of the pelletized resin compositions prepared in the examples and comparative examples was molded into 4 mm type-A dumbbells using EC60N by Toshiba Machine under the following conditions:

Drying of pellets: 80 °C for 2 hours or longer
Measurement: 63 mm
Injection time: 20 seconds
Holding pressure switch point: Short shot point of 10 mm or less
Holding pressure: Maximum injection pressure at 0 MPa holding during short shot × 1.0 MPa
Pressure holding time: 10 seconds
Cylinder temperatures: 230, 250, 230, and 210 °C from the nozzle side to the hopper side
Screw rotation speed: 100 rpm
Cushion: 4.5 to 5.5 mm
Mold temperature: 60 °C
Cooling time: 25 seconds

(8-2) Flexural Modulus (MPa)

From the dumbbell specimen with a thickness of 4 mm obtained in the previous section (8-1), a test specimen of 80 × 10 × 4 mm was prepared using a cutting machine. The flexural test was performed according to ISO 178 at a bending speed of 2 mm/min to measure the flexural modulus. The average of n=5 was used as the measured value.

(8-3) Tensile Yield Stress (MPa)

A tensile test on the dumbbell specimen with a thickness of 4 mm obtained in the previous section (8-1) was performed in accordance with ISO 527-1 (tensile speed: 50 mm/min) to measure the tensile yield stress. The average of n=5 was used as the measured value.

(8-4) Charpy Impact Test (Notched) (kJ/$m^2$)

From the dumbbell specimen with a thickness of 4 mm obtained in the previous section (8-1), a notched test specimen of 80×10×4 mm was prepared using a cutting machine. The Charpy impact strength (notched) was measured in accordance with ISO 179 (1eA). The average of n=5 was used as the measured value.

(9) Measurement of Lightness (L*) (-)

Each of the pelletized resin compositions prepared in the examples and comparative examples was injection molded into a plate with a thickness of 2 mm, and the lightness (L*) of the test piece was measured in accordance with JIS Z8722. As the test piece, a plate with a thickness of 2 mm prepared by injection molding was used. A spectrocolorimeter (CM-2002 manufactured by Konica Minolta, Inc.) was used for the measurement of lightness (L*). The measurement was performed in SCI mode (including specular reflection light). The average of n=3 was used as the measured value.

(10) Evaluation of Acrylic Thermal Weldability

(10-1) Measurement of Peeling Surface Strength (N)

Dumbbell specimens were prepared from the styrene-based resin composition prepared in the examples and comparative examples, and from the acrylic resin Delpet 80N (manufactured by Asahi Kasei Corporation), in a manner similar to that in the previous section (8-1). Each dumbbell was cut at 5 cm from the gate side to prepare a test specimen (10A). Next, a test specimen (10B) was prepared from the test specimen of the styrene-based resin composition prepared in the examples and comparative examples and the test specimen of the acrylic resin Delpet 80N so that the side opposite the ejector pin of the test specimen of the styrene-based resin composition and the side opposite the ejector pin of the test specimen of the acrylic resin Delpet 80N were overlapped at a position 3 cm from the cut surface and fixed with heat-resistant Teflon tape.

The test specimen (10B) was placed in an oven set at 150 °C, and a 0.5 kg weight, preheated in the oven in advance, was placed on the bonding surface between the styrene-based resin composition and the acrylic resin material of the test specimen (10B), and left in the oven for 10 minutes. At this time, in order to prevent thermal deformation of the dumbbell piece, it was fixed with a metal plate preheated in the oven in advance. The test piece (10B) was removed from the oven and cooled in air for 5 minutes to obtain a test piece (10C) in which the styrene-based resin composition and the acrylic resin material were thermally welded.

The test specimen (10C) was subjected to a tensile test using an Autograph AGS-5kNX (manufactured by Shimadzu Corporation) under conditions of a tensile speed of 5 mm/min, and the test force (N) at the time of thermal welding interface peeling was measured. The average of n=5 was used as the peel surface strength.

(10-2) Heating Time (Seconds) in Heat Plate Welding

The styrene-based resin composition prepared in the examples and comparative examples was injection molded into a housing-shaped part (10D) having an opening and a bonding surface of 2 cm on one face of a 26 cm cube with a thickness of 1 cm. Next, the acrylic resin Delpet 80N (manufactured by Asahi Kasei Corporation) was injection molded into a plate-shaped cover part (10E) having a bonding surface of 2 cm on the outer periphery of 30 cm × 30 cm.

Next, the housing-shaped part (10D) and the plate-shaped cover part (10E) were arranged via a heat plate heated to 300 °C, and positioned so that their bonding surfaces faced the heat plate, with a distance of 1 cm. After a heating time (10T) had elapsed, the heat plate was removed, and the bonding surfaces of the housing-shaped part (10D) and the plate-shaped cover part (10E) were pressed together. After air cooling for 3 minutes, a thermally welded product (10DE) was obtained. Ten thermally welded products (10DE) were prepared by the above method. A palm was placed on the surface of the housing-shaped part (10D), and shear stress was applied in a direction parallel to the surface of the housing-shaped part (10D). The number of thermally welded surfaces that delaminated was counted, and the minimum heating time (10T) at which 8 or more out of 10 samples delaminated was determined as the heating time (seconds) in heat plate welding to assess thermal weldability to the acrylic. The heating time was increased in 5-second increments from 35 seconds.

(11) Evaluation of Weather Resistance

A 2 mm plate of the styrene-based resin composition prepared in the examples and comparative examples was adjusted by injection molding, and subjected to a weather resistance test using a Sunshine Weather Meter S80BBR (manufactured by Suga Test Instruments Co., Ltd.) under test conditions of a black panel temperature of 63 °C, with rain, for 2000 hours. The color difference (ΔE) after the weather resistance test was measured and evaluated based on the following criteria:

◎: ΔE was 1.0 or less
O: ΔE was more than 1.0 and 5.0 or less
Δ: ΔE was more than 5.0 and 8.0 or less

X: $\Delta E$ was more than 8.0

(12) Measurement of Total Light Transmittance and Yellowness Index YI of 2 mm Plates

Each of the resin compositions of Synthetic Examples 1 to 14 was molded into a 2 mm plate by injection molding, conditioned in a constant temperature and humidity chamber at 23 °C and 50% humidity for 24 hours or longer, and the total light transmittance was measured according to JIS K7375 and yellowness index YI was measured according to JIS K7373 using a color and haze meter (COH-300A, manufactured by Nippon Denshoku Industries Co., Ltd.). The average of n=3 was used as the measured value.

(13) Measurement of Hansen Solubility Parameter (HSP) Value $(J/cm^3)^{1/2}$

The HSP values of each of the resins used in the examples and comparative examples and the resin compositions in Synthetic Examples 1 to 14 were calculated by the following procedure.

A sample of the resin or resin composition was placed into a glass vial, and an organic solvent with known HSP values was added. After shaking under the following conditions, solubility was visually and tactilely evaluated based on the following criteria.

Test Conditions:

Test period: 24 ± 1 hours
Test temperature: 23 ± 2 °C
Solvent volume: 3 mL
Amount of resin (composition): 30 ± 10 mg
Organic solvents: The following 24 solvents

Acetone, acetonitrile, 1-butanol, butyl acetate, chloroform, cyclohexane, diethylene glycol, N,N-dimethylformamide, dimethyl sulfoxide, 1,4-dioxane, ethanol, methanol, methyl isobutyl ketone, N-methyl-2-pyrrolidone, propylene carbonate, propylene glycol-1-monomethyl ether-2-acetate, tetrachloroethylene, tetrahydrofuran, toluene, γ-butyrolactone, m-cresol, diethyl ether, 2-ethyl-1-hexanol, and methyl ethyl ketone

Evaluation Criteria

S: Completely dissolved
A: Not completely dissolved, but no original form remained, with turbidity or precipitation observed
B: Greatly swollen
C: No visible change, but surface softening observed by spatula
D: No change

Next, the solubility evaluation results were plotted on a 3D plot ($\delta_d$, $\delta_p$, $\delta_h$) of the 24 solvents with known HSP values, and the HSP values ($\delta_d$, $\delta_p$, $\delta_h$) of the resin and resin composition were calculated using the Hansen sphere method. For the calculation, the "Advanced Fitting" function of Hansen Solubility Parameters in Practice (HSPiP) ver. 5.3.06 was used.

(14) Evaluation of Heat Resistance of Dissimilar Resin Composite Member

Each dissimilar resin composite member prepared in the examples and comparative examples was placed in an oven set to 115 °C, with the styrene-based resin member side facing down (in contact with the oven floor) and the acrylic resin member side facing up (so as not to be in contact with the oven floor or walls). After 15 minutes, changes were visually evaluated according to the following criteria to assess heat resistance:

A: No dimensional change observed in the member
B: Dimensional change observed in the member, but no change at the bonded portion
C: Dimensional change observed in the member, and the bonded portion delaminated

(15) Evaluation of Joint Strength of Dissimilar Resin Composite Member

Each dissimilar resin composite member prepared in the examples and comparative examples was dropped from a height of 80 cm onto a smooth stainless steel plate with the bonding interface between the styrene-based resin member and the acrylic resin member oriented vertically to the ground. This test was conducted on 10 dissimilar resin composite members, and mechanical strength was evaluated according to the following criteria:

S: The number of samples with joint delamination was 0
A: The number of samples with joint delamination was 2 or fewer
B: The number of samples with joint delamination was from 3 to 6 or less
C: The number of samples with joint delamination was 7 or more

(16) Evaluation of Mechanical Strength of Dissimilar Resin Composite Member

Each dissimilar resin composite member prepared in the examples and comparative examples was dropped from a height of 120 cm onto a smooth stainless steel plate, with the styrene-based resin member side facing down and the acrylic resin member side facing up. This evaluation was conducted on 10 dissimilar resin composite members, and mechanical strength was evaluated according to the following criteria:

S: The number of cracked samples was 0
A: The number of cracked samples was 3 or fewer
B: The number of cracked samples was from 4 to 6 or less
C: The number of cracked samples was 7 or more

(17) Evaluation of Assembly Cycle Property of Dissimilar Resin Composite Member

The method for evaluating the assembly cycle property of the dissimilar resin composite member is described in detail in [Example 63] below.

(18) Preparation of Sample of Dissimilar Resin Composite Member

Samples were prepared by bonding a styrene-based resin member made of the styrene-based resin composition prepared in the synthesis examples described below and an acrylic resin member composed of the acrylic resin compositions of Synthesis Examples 1 to 2. Specifically, 4 mm type-A dumbbell-shaped styrene-based resin members and acrylic resin members (see FIG. 4, 10A) were molded using an EC60N manufactured by Toshiba Machine Co., Ltd. under the following conditions:

Drying of pellets: 80 °C for 2 hours or longer
Measurement: 63 mm
Injection time: 20 seconds
Holding pressure switch point: Short shot point of 10 mm or less
Holding pressure: Maximum injection pressure at 0 MPa holding during short shot × 1.0 MPa
Pressure holding time: 10 seconds
Cylinder temperatures: 230, 250, 230, and 210 °C from the nozzle side to the hopper side
Screw rotation speed: 100 rpm
Cushion: 4.5 to 5.5 mm
Mold temperature: 60 °C
Cooling time: 25 seconds

Each dumbbell specimen (see 10A of FIG. 4) was cut at a position 7.6 cm from the gate side to prepare a test piece (see 10B of FIG. 4). Next, a test piece was prepared from the test piece made of the styrene-based resin composition prepared in the examples and comparative examples and the test piece made of the acrylic resin composition of Synthesis Examples 1 to 2 so that the side opposite the ejector pin of the test piece made of the styrene-based resin composition, and the side opposite the ejector pin of the test piece made of the acrylic resin composition were overlapped at a position 3 cm from the cut surface and fixed with heat-resistant Teflon tape.
The test piece (10B) was placed into an oven set at 150 °C, and a 0.5 kg weight, preheated in the oven in advance, was placed on the bonding surface between the styrene-based resin composition and the acrylic resin material of the test piece (10B), and left in the oven for 10 minutes. At this time, in order to prevent thermal deformation of the dumbbell piece, it

was fixed with a metal plate preheated in the oven in advance. The test piece (10B) was removed from the oven and cooled in air for 5 minutes to obtain a test piece (10C) in which the styrene-based resin composition and the acrylic resin material were thermally welded. (See FIG. 4, 10C for the obtained test piece.)

[Preparation of Resins and Production Examples of Styrene-based Resin Compositions]

The preparation of each resin and the specific method for producing the styrene-based resin compositions will be described below.

<Production Example of Styrene-Unsaturated Carboxylic Acid-based Resin (A)>

- Preparation of Resin (A1) -

A polymerizable raw material composition liquid composed of 65.5 parts by mass of styrene, 3.3 parts by mass of methyl methacrylate, 5.8 parts by mass of methacrylic acid, 22.9 parts by mass of ethylbenzene, 2.5 parts by mass of 2-ethyl-1-hexanol, and 0.027 parts by mass of 1,1-bis(t-butylperoxy)cyclohexane was supplied at a rate of 0.8 L/h to a completely mixed type reactor with a capacity of 3.6 liters, and then continuously fed to a devolatilization apparatus connected to a single-screw extruder for removing volatile components such as unreacted monomers and polymerization solvents. The polymerization temperature in the complete mixing-type reactor was set to 130 °C. The temperature of the single-screw extruder was set to 210 to 230 °C, and the pressure to 10 torr to devolatilize the unreacted monomers and polymerization solvents. The volatilized components were condensed using a condenser cooled to -5 °C and collected as unreacted liquid, while the styrene-based resin was recovered as resin pellets. The properties of the Resin (A1) obtained through the above-mentioned analysis methods are summarized in Table 1.

- Preparation of Resin (A2) and Resin (A3) -

Resins (A2) and (A3) were prepared by the same procedure as Resin (A1) described above. The compositions and properties of the obtained Resins (A2) and (A3) are listed in Table 1.

- Preparation of Resin (A4) -

Using only styrene as the monomer, Resin (A4) was obtained as a styrene homopolymer with the composition and properties summarized in Table 1, following similar procedures as described above.

[Table 1]

| Table 1 | | | Resin (A1) | Resin (A2) | Resin (A3) | Resin (A4) |
|---|---|---|---|---|---|---|
| Composition | Styrene monomer unitss (a1) | mass% | 84 | 92 | 90 | 100 |
| | Methacrylic acid monomer units (a2-1) | mass% | 11 | 8 | 10 | 0 |
| | Methyl methacrylate monomer units (a2-2) | mass% | 5 | 0 | 0 | 0 |
| Properties and characteristics | Number average molecular weight Mn | x10,000 | 7 | 9 | 9 | 9 |
| | Weight average molecular weight Mw | x10,000 | 19 | 19 | 18 | 22 |
| | Z average molecular weight Mz | x10,000 | 39 | 38 | 36 | 38 |
| | Mw/Mn | - | 2.6 | 2.2 | 2.0 | 2.4 |
| | Mz/Mw | - | 2.0 | 2.0 | 2.0 | 1.7 |
| | Melt mass flow rate (200°C, 5kg) | g/10 min. | 0.7 | 1.6 | 2.0 | 3.1 |
| | Vicat softening temperature (5kg load) | °C | 124 | 118 | 121 | 101 |

<Production Example of Core-Shell Structured Rubbery Particles (B)>

- Preparation of Rubbery Particles (B1) -

A pressure-resistant container equipped with a stirrer was charged with 200 parts by mass of pure water, 0.002

parts by mass of disodium ethylenediaminetetraacetate, 0.0012 parts by mass of ferric sulfate, 0.008 parts by mass of disodium ethylenediaminetetraacetate, and 0.003 parts by mass of sodium polyoxyethylene alkyl ether phosphate. After degassing, 100 parts by mass of butadiene, 0.05 parts by mass of sodium formaldehyde sulfoxylate, and 0.2 parts by mass of paramethane hydroperoxide were added. Then, 1.4 parts by mass of sodium polyoxyethylene alkyl ether phosphate were dropped into the reaction solution over 6 hours. The reaction solution was maintained at a pH of 6.5 to 7.5 and a temperature of 50 °C for 124 hours to obtain diene-based rubber latex with an average particle diameter of 0.18 μm at a conversion rate of 98% by weight.

Next, while the rubber latex obtained above (approximately 71 parts of solid content) was kept at 60 °C, 55 parts by mass of methyl methacrylate and 5 parts by mass of (n-butyl) acrylate as monomers were added over the course of one hour. Simultaneously to the addition of the above-described monomers, 0.09 parts by mass of t-butyl hydroperoxide and 0.1 parts by mass of sodium formaldehyde sulfoxylate were added, and the entire amount was added over two hours while the reaction solution was maintained at pH of 6.5 to 7.5 and a temperature of about 60 °C. The reaction solution was maintained at about 60 °C for one hour to obtain graft copolymer latex with an average particle diameter of 200 nm. After 1 part by mass of Irganox 1076 was added as an antioxidant, coagulation treatment was carried out using calcium chloride solution, followed by washing, dehydration, and drying to obtain the powder form of rubbery polymer particles (B1). The composition and properties of rubbery polymer particles (D1) are listed in Table 4.

- Preparation of Rubbery Particles (B2), (B3), (B8) to (B11) -

Rubbery particles (B2), (B3), and (B8) to (B11) were prepared by adjusting the feed amount and polymerization conditions of each monomer and following procedures similar to that for rubbery particles (B1). The compositions and properties of the obtained rubbery particles (B) are listed in Table 2.

[Table 2]

| Table 2 | | | Rubbery particles (B1) | Rubbery particles (B2) | Rubbery particles (B3) | Rubbery particles (B8) | Rubbery particles (B9) | Rubber particles (B10) | Rubber particles (B11) |
|---|---|---|---|---|---|---|---|---|---|
| Composition | Butadiene monomer units | mass% | 75 | 70 | 70 | 70 | 70 | 0 | 0 |
| | Methyl methacrylate monomer units | mass% | 23 | 28 | 15 | 25 | 25 | 75 | 60 |
| | Styrene monomer units | mass% | 0 | 0 | 15 | 3 | 6 | 0 | 0 |
| | (n-butyl) acrylate monomer units | mass% | 2 | 2 | 0 | 2 | 2 | 25 | 40 |
| Properties and characteristics | Average particle size of rubbery polymer particles (B) | µm | 0.22 | 0.22 | 0.22 | 0.22 | 0.22 | 0.3 | 0.3 |

In addition to the compositions listed in Table 2 above, the following products were also used in the examples as core-shell structured rubbery particles (B) containing a (meth)acrylic acid ester monomer unit (b1). The content of styrene-based monomer units in the core-shell structured rubbery particles (B) was quantified by pyrolysis GC/MS as described in item (1).

The compositions of the rubbery particles (B4) to (B7) and (B12) having the core-shell structure are described below:

- Rubbery particle (B4): Methyl methacrylate-styrene-butadiene (MBS)-based rubber particles

  Shell portion: Methyl methacrylate-styrene copolymer
  Core portion: Polybutadiene
  Content of styrene-based monomer units in total rubbery particles (B4): More than 5 mass%
  METABLEN C-223A (trade name), manufactured by Mitsubishi Chemical Corporation

- Rubbery particles (B5): Methyl methacrylate-butadiene (MB)-based rubber particles

  Shell portion: Polymethyl methacrylate
  Core portion: Polybutadiene
  Content of styrene-based monomer units in total rubbery particles (B12): 5 mass% or less
  METABLEN E-875A (trade name), manufactured by Mitsubishi Chemical Corporation

- Rubbery particles (B6): Acrylic-silicone-based rubber particles

  Shell portion: Polymethyl methacrylate
  Core: Polydimethylsiloxane-poly(n-butyl acrylate) composite
  Content of styrene-based monomer units in total rubbery particles (B6): 5 mass% or less
  METABLEN S-2130 (trade name), manufactured by Mitsubishi Chemical Corporation

- Rubbery particles (B7): Methyl methacrylate-styrene-butadiene (MBS)-based rubber particles

  Shell portion: Methyl methacrylate-styrene copolymer
  Core portion: Polybutadiene
  Content of styrene-based monomer units in total rubbery particles (B7): more than 5 mass%
  Kane Ace M511 (trade name), manufactured by Kaneka Corporation

- Rubbery particles (B12): Methyl methacrylate-butyl acrylate-based rubber particles
  Content of styrene-based monomer units in total rubbery particles (B12): 5 mass% or less
  METABLEN W-450A (trade name), manufactured by Mitsubishi Chemical Corporation

<Production Example of Impact-Resistant Styrene-Based Resin (C)>

- Preparation of Impact-Resistant Styrene-Based Resin (C1) -

An impact-resistant styrene-based resin (C1) (hereinafter referred to as Resin (C1)) was produced using a polymerization apparatus comprising three serially connected laminar flow reactors (1.5 liters each) equipped with stirrers, followed by a twin-vent extruder. Into a raw material tank with a stirrer, 82.4 parts by mass of styrene, 9.0 parts by mass of ethylbenzene, 8.6 parts by mass of high cis butadiene rubber 13HB (manufactured by Ube Industries, Ltd.) as the rubbery polymer (C-R), and 0.02 parts by mass of 1,1-bis(t-butylperoxy)cyclohexane were added. After the rubber components were dissolved with stirring, this raw material solution was fed to the reactor at a feed rate of 0.75 L/hr. Polymerization was conducted at temperatures of 110 to 120 °C in the first-stage reactor, 120 to 130 °C in the second-stage reactor, and 140 to 150 °C in the third-stage reactor. The extruder temperature was set to 210 to 240 °C, the vacuum degree was set to 3 kPa, and the total solids content in the polymerization liquid discharged from the final reactor was 70.5 mass%. The average particle diameter of the rubbery polymer particles (C-2) was controlled by adjusting the stirrer rotation speed of the first-stage laminar flow reactor to 110 rpm. The composition and properties of the obtained Resin (C1) are listed in Table 3.

- Preparation of Resin (C2) -

Resin (C2) was obtained by a procedure similar to the above-described procedure with the composition and

properties listed in Table 3 using a high cis butadiene rubber 15HB (manufactured by Ube Industries, Ltd.) as the rubbery polymer (C-R).

- Preparation of Resins (C3) and (C4) -

Resins (C3) and (C4) were obtained by a procedure similar to the above-described procedure with the compositions and properties listed in Table 3 using styrene as the monomer, methyl methacrylate and butyl acrylate as optionally added monomers, and 625A (a styrene-butadiene copolymer manufactured by Asahi Kasei Corporation) as the rubbery polymer (C-R).

[Table 3]

| Table 3 | | | Resin (C1) | Resin (C2) | Resin (C3) | Resin (C4) |
|---|---|---|---|---|---|---|
| Composition | Styrene monomer units | mass% | 88.0 | 91.2 | 45.0 | 45.2 |
| | Methyl methacrylate monomer units | mass% | 0.0 | 0.0 | 33.0 | 46.0 |
| | (n-butyl) acrylate monomer units | mass% | 0.0 | 0.0 | 9.0 | 0.0 |
| | Rubbery polymer (C-R) | mass% | 12.0 | 8.8 | 13.0 | 8.8 |
| | Butadiene monomer units (derived from rubbery polymer) | mass% | 12.0 | 8.8 | 8.5 | 8.8 |
| Properties and characteristics | Rubbery polymer particles (C-2) Content of (including graft/occlude) | mass% | 30 | 26 | 22 | 26 |
| | Average particle size of rubbery polymer particles (C-2) | μm | 1.2 | 1.7 | 0.7 | 1.7 |
| | Form of rubbery polymer particles (C-2) | - | Salami | Salami | Salami | Salami |
| | Melt mass flow rate | g/10 min. | 1.3 | 3 | 2.8 | 1 |

<Styrene-based elastomers (D) Used in Examples>

The following two styrene-based elastomers were used as styrene-based elastomers (D) in the examples of this specification.

(D1) Tufprene 125 (trade name), manufactured by Asahi Kasei Corporation
(D2) Tuftic M1913 (trade name), manufactured by Asahi Kasei Corporation

<Acrylic Elastomer (E) Used in Examples>

The following was used as the acrylic elastomer (E) in the examples of this specification.
(E1) Kurarity LA2270 (trade name), manufactured by Kuraray Co., Ltd.

<Production Example of Acrylic Resin (F)>

- Preparation of Resin (F1) -

A suspension agent was prepared by adding 2 kg of water, 65 g of calcium phosphate tribasic, 39 g of calcium carbonate, and 0.39 g of sodium lauryl sulfate into a 5 L vessel equipped with a stirrer and then mixing and stirring. Subsequently, 26 kg of water was added to a 60-L reactor, which was heated to 80 °C to prepare for suspension polymerization. After confirming that the temperature had stabilized at 80 °C, 1.52 kg of methyl methacrylate, 0.22 kg of methyl acrylate, 0.99 g of lauroyl peroxide, 4.93 g of n-octyl mercaptan, and the above-described suspension agent were added as polymerization feedstock. Next, suspension polymerization was performed while the temperature was kept at about 80 °C. After the exothermic peak was observed, the temperature was raised to 92 °C at a rate of 1 °C/min, and the temperature was maintained at 92 °C for 60 minutes. Subsequently, the mixture was cooled to 50 °C, and then 20 mass%

sulfuric acid was added to dissolve the suspension agent. The polymerized reaction solution was removed from the 60-L reactor, passed through a sieve with a mesh size of 1.7 mm to remove large aggregates, and the solid components were separated using a Buchner funnel to obtain bead-shaped polymer. This bead-shaped polymer was washed on the Buchner funnel using approximately 20 L of distilled water and dehydrated with this washing and dehydrating cycle repeated five times, dried, and pelletized using a single-screw extruder to obtain Resin (F1).

- Preparation of Resins (F2) to (F5) -

Resins (F2) to (F5) were obtained by a procedure similar to that of Resin (F1). The composition and properties of the obtained Resins (F2) to (F5) are listed in Table 4.

[Table 4]

| Table 4 | | | Resin (F1) | Resin (F2) | Resin (F3) | Resin (F4) | Resin (F5) |
|---|---|---|---|---|---|---|---|
| Composition | Methyl methacrylate monomer units (f1) | mass% | 98.0 | 85.0 | 50.0 | 94 | 90 |
| | Methyl acrylate monomer units (f1) | mass% | 2.0 | 0.0 | 0.0 | 6 | 0 |
| | n-acrylic acid monomer units (f1) | mass% | 0.0 | 15.0 | 0.0 | 0 | 0 |
| | Methacrylic acid monomer units (f2) | mass% | 0.0 | 0.0 | 0.0 | 0 | 10 |
| | Styrene monomer unitss (f3) | mass% | 0.0 | 0.0 | 50.0 | 0 | 0 |
| Properties and characteristics | Number average molecular weight Mn | x10,000 | 5 | 220 | 5 | 10 | 10 |
| | Weight average molecular weight Mw | x10,000 | 10 | 450 | 10 | 19 | 19 |
| | Z average molecular weight Mz | x10,000 | 15 | 800 | 15 | 29 | 29 |
| | Mw/Mn | - | 1.9 | 2.0 | 2.0 | 1.9 | 1.9 |
| | Mz/Mw | - | 1.5 | 1.8 | 1.5 | 1.5 | 1.5 |
| | Vicat softening temperature (5kg load) | °C | 107 | 69 | 103 | 105 | 115 |

<Lubricating Oil (G)>

In the examples of this specification, when liquid paraffin was used as the lubricating oil (G), PS-350S (trade name), manufactured by Sankyo Chemical Industries, was used.

When silicone oil was used as the lubricating oil (G), polydimethylsiloxane oil PP-17 (trade name), manufactured by GE Toshiba Silicones Co., Ltd., was used. The content of silicone oil in Table 5 was calculated from the charged amount. On the other hand, when the content of silicone oil was calculated from the styrene-based resin composition, the amount of silicon can be estimated by quantifying by inductively coupled plasma emission spectrometry (ICP method). It was confirmed that the amount of silicon in the styrene-based resin compositions containing silicone oil prepared in the examples was in the range of 150 ppm to 10,000 ppm relative to the total mass (100 mass%) of the styrene-based resin composition.

<<Optional Additives Used in Examples>>

<Monohydric Alcohol Having 10 or More Carbon Atoms>

In the examples of this specification, the following types of alcohol were used as the monohydric alcohol with 10 or

more carbon atoms.

Fineoxocol 180 (trade name), manufactured by Nissan Chemical Corporation, chemical name: 5,7,7-trimethyl-2-(1,3,3-trimethylbutyl)-1-octanol
Emulgen 109P (trade name), manufactured by Kao Corporation, chemical name: polyoxyethylene (9) lauryl ether monoalcohol

<Coloring Agents>

A masterbatch of carbon black for black coloring of the styrene-based resin composition was prepared by the following procedure.

- Preparation of Black Masterbatch -

2.8 kg of the above-described Resin (Al), 2.8 kg of carbon black, and 0.5 kg of polyethylene wax were dry-blended, melt-kneaded and extruded, and after pelletizing, a black masterbatch was obtained as black pellets using the Resin (Al) as a base resin.

<Antioxidant>

In the examples of this specification, the following three types of antioxidants were used as antioxidants.

Phenol-based antioxidant (1): IrganoX 1076 (trade name), manufactured by BASF Japan, chemical name: octadecyl-3-(3,5-di-tert-butyl-4-hydroxyphenyl)propionate
Phenol-based antioxidant (2): Sumilizer GS (trade name), manufactured by Sumitomo Chemical Co., Ltd.), chemical name: 2-[1-(2-hydroxy-3,5-di-tert-pentylphenyl)ethyl]-4,6-di-tert-pentylphenyl acrylate
Phosphorus-based antioxidant: Irgafos 168 (trade name), manufactured by BASF Japan Ltd, chemical name: tris(2,4-di-tert-butylphenyl) phosphite

<Stabilizer>

In the examples of this specification, the following were used as light stabilizers.
Hindered amine-based light stabilizer: bis(2,2,6,6-tetramethyl-4-piperidyl)sebacate

<Ultraviolet Absorber>

In the examples of this specification, the following were used as ultraviolet absorbers.
Ultraviolet absorber: LA-32 (trade name), manufactured by ADEKA Corporation, chemical name: 2-(2H-benzotriazol-2-yl)-p-cresol

<Mold Release Agent (Internal Lubricant)>

In the examples of this specification, the following was used as a mold release agent (internal lubricant).
External lubricant: Kalcol 8098 (trade name), manufactured by Kao Corporation, chemical name: Stearyl alcohol

<Mold Release Agent (External Lubricant)>

In the examples of this specification, the following was used as a mold release agent (external lubricant).
External lubricant: Kao Wax EB-FF (trade name), manufactured by Kao Corporation, chemical name: Ethylene bis(stearamide)

<<Production Example of Styrene-Based Resin Composition and Foamed Extrusion Sheet>>

The method for producing the styrene-based resin composition and injection molded article is shown below.

[Example 1]

- Production of Styrene-Based Resin Composition-

93.0 parts by mass of the Resin (A1) listed in Table 1 as the styrene-unsaturated carboxylic acid-based resin (A), 15.0 parts by mass of METABLEN S2130 (B6), manufactured by Mitsubishi Chemical Corporation, as the core-shell structured rubbery particles (B), 0.5 parts by mass of silicone oil as the lubricating oil (G), and optional additives in the formulation listed in Table 6 were dry-blended. The mixture was melt-kneaded and pelletized using a TEM26SS twin-screw extruder manufactured by Shibaura Machine Co., Ltd., to obtain a pelletized styrene-based resin composition [1]. The screw rotation speed was 150 rpm, the cylinder temperature was 180 to 230°C, and the feed rate was 10 kg/h. The resin temperature was 250 to 260°C. The characteristics and properties of the styrene-based resin composition [1], and the evaluation results of the injection molded article are listed in Table 5-1.

[Examples 2 to 62]

Styrene-based resin compositions [2] to [62] were obtained in a manner similar to Example 1 except that the formulation was changed as summarized in Tables 5-1 to 5-3. Table 5 lists the evaluation results of the obtained laminate film.

[Table 5-11]

| Table 5-1 | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| Each resin type | Type of styrene-(meth)acrylic acid resin (A) | | A1 | A1 | A1 | A1 | A1 | A1 | A1 | A1 | A1 | A1 | A1 | A1 | A1 | A1 |
| | Type of core-shell type rubbery polymer particles (B) | | B6 | B6 | B6 | B6 | B6 | B6 | B5 | B5 | B5 | B5 | B5 | B5 | B5 | B1 |
| | Type of impact-resistant styrene-based (C) | | - | - | - | - | - | C2 | - | - | - | - | - | - | - | - |
| | Types of thermoplastic elastomers (styrene elastomers (D) and/or acrylic elastomers (E)) | | - | - | - | - | D1 | - | - | - | - | - | - | - | - | - |
| | Type of (meth)acrylic resin (F) | | - | - | - | F4 | F4 | F4 | - | - | - | - | - | - | - | - |
| Compounding composition | Styrene-(meth) acrylic acid resin (A) | pts. by mass | 85.0 | 80.0 | 75.0 | 64.0 | 600 | 56.0 | 78.0 | 78.0 | 85.0 | 78.0 | 78.0 | 78.0 | 78.0 | 78.0 |
| | Core-shell structured rubbery polymer particles (B) | pts. by mass | 15.0 | 20.0 | 25.0 | 20.0 | 20.0 | 20.0 | 22.0 | 22.0 | 15.0 | 22.0 | 22.0 | 22.0 | 22.0 | 22.0 |
| | Impact resistance styrene-based (C) | pts. by mass | 0 | 0 | 0 | 0 | 0 | 10 | 0 | 0 | 0 | 0 | 0 | 0 | 0 | 0 |
| | Thermoplastic elastomers ((D) and/or ()) | pts. by mass | 0 | 0 | 0 | 0 | 5 | 0 | 0 | 0 | 0 | 0 | 0 | 0 | 0 | 0 |
| | Acrylic resin (F) | pts. by mass | 0 | 0 | 0 | 16 | 15 | 14 | 0 | 0 | 0 | 0 | 0 | 0 | 0 | 0 |
| | Liquid paraffin | pts. by mass | 0 | 0 | 0 | 0 | 0 | 0 | 0 | 0.5 | 0 | 0 | 0 | 0 | 0 | 0 |
| | Silicone oil | pts. by mass | 0.5 | 0.5 | 0.5 | 0.5 | 0.5 | 0.5 | 0.1 | 0 | 0.5 | 0.5 | 0.5 | 0.5 | 0.5 | 0.5 |

(continued)

| Table 5-1 | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| | Fine oxocol 180 | pts. by mass | 0.11 | 0.10 | 0.10 | 0.08 | 0.08 | 0.07 | 0.10 | 0.10 | 0.11 | 0.10 | 0.10 | 0.10 | 0.10 | 0.10 |
| | Emulsion 109P | pts. by mass | 0.00 | 0.00 | 0.00 | 0.00 | 0.00 | 0.00 | 0.00 | 0.00 | 0.00 | 0.00 | 0.00 | 0.00 | 0.00 | 0.00 |
| | Black masterbatch | pts. by mass | 0.5 | 0.5 | 0.5 | 0.5 | 0.5 | 0.5 | 0.5 | 0.5 | 0.5 | 0.5 | 0.5 | 0.00 | 0.5 | 0.5 |
| | Phenol-based antioxidant (1) | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Phosphorus-based antioxidant | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Phenol-based antioxidant (2) | pts. by mass | 0.00 | 0.00 | 0.00 | 0.00 | 0.00 | 0.00 | 0.00 | 0.00 | 0.00 | 0.00 | 0.00 | 0.00 | 0.00 | 0.00 |
| | Light stabilizer | pts. by mass | 0.10 | 0.10 | 0.10 | 0.10 | 0.10 | 0.10 | 0.10 | 0.10 | 0.10 | 0.10 | 0.00 | 0.10 | 0.10 | 0.10 |
| | Ultraviolet absorber | pts. by mass | 0.10 | 0.10 | 0.10 | 0.10 | 0.10 | 0.10 | 0.10 | 0.10 | 0.10 | 0.10 | 0.00 | 0.10 | 0.10 | 0.10 |
| | Internal lubricant (Calcoal 8098) | pts. by mass | 0.10 | 0.10 | 0.10 | 0.10 | 0.10 | 0.10 | 0.10 | 0.10 | 0.10 | 0.10 | 0.10 | 0.10 | 0.00 | 0.10 |
| | External lubricant (Kao-wax EB-FF) | pts. by mass | 0.008 | 0.008 | 0.008 | 0.008 | 0.008 | 0.008 | 0.008 | 0.008 | 0.008 | 0.008 | 0.008 | 0.008 | 0.000 | 0.008 |
| Composition Properties and characteristics | Styrene monomer units | mass% | 70.3 | 66.1 | 62.0 | 52.9 | 51.3 | 55.3 | 64.7 | 64.5 | 70.3 | 64.5 | 64.6 | 64.8 | 64.6 | 64.5 |
| | Methacrylic acid monomer units | mass% | 9.2 | 8.7 | 8.1 | 6.9 | 6.5 | 6.1 | 8.5 | 8.4 | 9.2 | 8.4 | 8.5 | 8.5 | 8.5 | 8.4 |
| | Methyl acrylate monomer unit | mass% | 0.00 | 0.00 | 0.00 | 0.94 | 0.89 | 0.83 | 0.00 | 0.00 | 0.00 | 0.00 | 0.00 | 0.00 | 0.00 | 0.00 |
| | Conjugated diene monomer unit | mass% | 0.0 | 0.0 | 0.0 | 0.0 | 3.2 | 0.9 | 0.0 | 0.0 | 0.0 | 0.0 | 0.0 | 0.0 | 0.0 | 16.2 |
| | Content of styrene dimer and trimer | mass% | 0.26 | 0.24 | 0.23 | 0.19 | 0.18 | 0.17 | 0.23 | 0.23 | 0.26 | 0.23 | 0.23 | 0.23 | 0.23 | 0.23 |

(continued)

| Table 5-1 | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| | Content of styrene monomer | μg/g | 425 | 400 | 375 | 320 | 300 | 280 | 390 | 390 | 425 | 390 | 390 | 390 | 390 | 390 |
| | Melt mass flow rate (220°C, 10kgf) | g/10 min. | 7.5 | 7.2 | 6.9 | 3.6 | 3.8 | 4.0 | 5.4 | 5.4 | 6.1 | 5.4 | 5.4 | 5.4 | 5.4 | 5.5 |
| | Vicat softening temperature (1kg load) | °C | 130 | 129 | 129 | 125 | 125 | 124 | 128 | 128 | 130 | 128 | 128 | 128 | 128 | 128 |
| | Density | $g/cm^2$ | 1.06 | 1.06 | 1.06 | 1.07 | 1.07 | 1.07 | 1.05 | 1.05 | 1.06 | 1.05 | 1.05 | 1.05 | 1.05 | 1.05 |
| | Flexural modulus | | 2,600 | 2,400 | 2200 | 2,500 | 2,200 | 2,200 | 2,300 | 2,300 | 2,500 | 2,300 | 2,300 | 2,300 | 2,300 | 2,300 |
| | Tensile yield stress | MPa | 52 | 49 | 45 | 52 | 45 | 46 | 45 | 43 | 50 | 43 | 43 | 43 | 43 | 42 |
| | Charpy impact strength (notched) | $kJ/m^2$ | 4.6 | 5.9 | 6.2 | 6.2 | 6.7 | 6.6 | 4.8 | 11.1 | 8.2 | 12.4 | 12.4 | 12.4 | 12.4 | 12.6 |
| | Lightness (L*) | - | 30 | 30 | 30 | 30 | 30 | 30 | 30 | 30 | 30 | 30 | 30 | 78 | 30 | 30 |
| Evaluation of acrylic thermal weldability | Peel surface strength | N | 460 | 460 | 457 | 600 | 610 | 610 | 465 | 465 | 465 | 465 | 465 | 465 | 465 | 465 |
| | Heating time in hot plate welding | sec. | 65 | 65 | 65 | 45 | 45 | 45 | 60 | 60 | 60 | 60 | 60 | 60 | 60 | 60 |
| Evaluation of acrylic thermal weldability | Weather resistance | - | ◎ | ◎ | ◎ | ◎ | ◎ | ◎ | ○ | ○ | ○ | ○ | Δ | Δ | ○ | ○ |

[Table 5-2]

| Table 5-2 | | | Example 15 | Example 16 | Example 17 | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|---|---|---|---|
| Each resin type | Type of styrene-(meth)acrylic acid resin (A) | | A1 | A2 | A3 | A1 | A1 | A1 | A1 | A1 | A1 | A1 | A1 | A1 | A1 | A1 |
| | Type of core-shell type rubbery polymer particles (B) | | B2 | B5 | B5 | B5 | B5 | B5 | B5 | B5 | B5 | B5 | B5 | B5 | B5 | B5 |
| | Type of impact-resistant styrene-based (C) | | - | - | - | C2 | C3 | C4 | C2 | C1 | - | - | - | - | - | - |
| | Types of thermoplastic elastomers (styrene elastomers (D) and/or acrylic elastomers (E)) | | - | - | - | - | - | - | - | - | - | - | - | - | - | - |
| | Type of (meth)acrylic resin (F) | | - | - | - | - | - | - | F4 | F4 | F4 | F1 | F2 | F3 | F5 | - |
| Compounding composition | Styrene-(meth) acrylic acid resin (A) | pts. by mass | 78.0 | 78.0 | 78.0 | 75.0 | 75.0 | 75.0 | 60.0 | 60.0 | 64.0 | 64.0 | 64.0 | 64.0 | 64.0 | 70.0 |
| | Core-shell structured rubbery polymer particles (B) | pts. by mass | 22.0 | 22.0 | 22.0 | 20.0 | 20.0 | 20.0 | 20.0 | 20.0 | 20.0 | 20.0 | 20.0 | 20.0 | 20.0 | 30.0 |
| | Impact resistance styrene-based (C) | pts. by mass | 0 | 0 | 0 | 5 | 5 | 5 | 5 | 5 | 0 | 0 | 0 | 0 | 0 | 0 |
| | Thermoplastic elastomers ((D) and/or ()) | pts. by mass | 0 | 0 | 0 | 0 | 0 | 0 | 0 | 0 | 0 | 0 | 0 | 0 | 0 | 0 |
| | Acrylic resin (F) | pts. by mass | 0 | 0 | 0 | 0 | 0 | 0 | 15 | 15 | 16 | 16 | 16 | 16 | 16 | 0 |
| | Liquid paraffin | pts. by mass | 0 | 0 | 0 | 0 | 0 | 0 | 0 | 0 | 0 | 0 | 0 | 0 | 0 | 0 |
| | Silicone oil | pts. by mass | 0.5 | 0.5 | 0.5 | 0.5 | 0.5 | 0.5 | 0.5 | 0.5 | 0.5 | 0.5 | 0.5 | 0.5 | 0.5 | 0.5 |

(continued)

| Table 5-2 | | | Example 15 | Example 16 | Example 17 | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|---|---|---|---|
| | Fine oxocol 180 | pts. by mass | 0.10 | 0.10 | 0.00 | 0.10 | 0.10 | 0.10 | 0.08 | 0.08 | 0.08 | 0.08 | 0.08 | 0.08 | 0.08 | 0.09 |
| | Emulsion 109P | pts. by mass | 0.00 | 0.00 | 0.5 | 0.00 | 0.00 | 0.00 | 0.00 | 0.00 | 0.00 | 0.00 | 0.00 | 0.00 | 0.00 | 0.00 |
| | Black masterbatch | pts. by mass | 0.5 | 0.5 | 0.5 | 0.5 | 0.5 | 0.5 | 0.5 | 0.5 | 0.5 | 0.5 | 0.5 | 0.5 | 0.5 | 0.5 |
| | Phenol-based antioxidant (1) | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Phosphorus-based antioxidant | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Phenol-based antioxidant (2) | pts. by mass | 0.00 | 0.00 | 0.00 | 0.00 | 0.00 | 0.00 | 0.00 | 0.00 | 0.00 | 0.00 | 0.00 | 0.00 | 0.00 | 0.00 |
| | Light stabilizer | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Ultraviolet absorber | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Internal lubricant (Calcoal 8098) | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | External lubricant (Kao-wax EB-FF) | pts. by mass | 0.008 | 0.008 | 0.008 | 0.008 | 0.008 | 0.008 | 0.008 | 0.008 | 0.008 | 0.008 | 0.008 | 0.008 | 0.008 | 0.008 |
| Composition Properties and characteristics | Styrene monomer units | mass% | 64.5 | 70.6 | 68.8 | 66.5 | 64.2 | 64.2 | 54.1 | 53.9 | 52.9 | 52.9 | 52.9 | 60.8 | 52.9 | 57.9 |
| | Methacrylic acid monomer units | mass% | 8.4 | 6.1 | 7.6 | 8.1 | 8.1 | 8.1 | 6.5 | 6.5 | 6.9 | 6.9 | 6.9 | 6.9 | 8.5 | 7.6 |
| | Methyl acrylate monomer unit | mass% | 0.00 | 0.00 | 0.00 | 0.00 | 0.00 | 0.00 | 0.89 | 0.89 | 0.94 | 0.31 | 0.00 | 0.00 | 0.00 | 0.00 |
| | Conjugated diene monomer unit | mass% | 15.2 | 0.0 | 0.0 | 0.4 | 0.4 | 0.4 | 0.4 | 0.6 | 0.0 | 0.0 | 0.0 | 0.0 | 0.0 | 0.0 |
| | Content of styrene dimer and trimer | mass% | 0.23 | 0.23 | 0.23 | 0.23 | 0.23 | 0.23 | 0.18 | 0.18 | 0.19 | 0.19 | 0.19 | 0.19 | 0.19 | 0.21 |

(continued)

| Table 5-2 | | | Example 15 | Example 16 | Example 17 | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|---|---|---|---|
| | Content of styrene monomer | μg/g | 390 | 390 | 390 | 375 | 375 | 375 | 300 | 300 | 320 | 320 | 320 | 320 | 320 | 350 |
| | Melt mass flow rate (220°C, 10kgf) | g/10 min. | 5.5 | 7.2 | 7.2 | 6.6 | 6.6 | 6.6 | 3.0 | 3.0 | 3.0 | 3.5 | 2.5 | 3.9 | 3.5 | 4.5 |
| | Vicat softening temperature (1kg load) | °C | 128 | 122 | 124 | 128 | 127 | 128 | 124 | 124 | 124 | 124 | 122 | 124 | 124 | 124 |
| | Density | g/cm | 1.05 | 1.04 | 1.04 | 1.05 | 1.05 | 1.05 | 1.06 | 1.06 | 1.06 | 1.06 | 1.06 | 1.06 | 1.06 | 1.04 |
| | Flexural modulus | | 2,300 | 2,200 | 2,200 | 2,300 | 2,300 | 2,300 | 2,300 | 2,300 | 2,300 | 2,300 | 2,300 | 2,300 | 2,300 | 1,900 |
| | Tensile yield stress | MPa | 44 | 42 | 43 | 42 | 43 | 44 | 45 | 44 | 47 | 46 | 49 | 45 | 46 | 38 |
| | Charpy impact strength (notched) | $kJ/m^2$ | 12.3 | 8.1 | 9.2 | 13.2 | 12.8 | 14.5 | 12.3 | 12.4 | 11.6 | 11.8 | 12.1 | 9.6 | 11.8 | 14.9 |
| | Lightness (L*) | - | 30 | 30 | 30 | 30 | 30 | 30 | 30 | 31 | 28 | 28 | 29 | 29 | 28 | 30 |
| Evaluation of acrylic thermal weldability | Peel surface strength | N | 466 | 410 | 420 | 464 | 470 | 472 | 608 | 605 | 610 | 610 | 610 | 410 | 610 | 450 |
| | Heating time in hot plate welding | sec. | 60 | 70 | 65 | 60 | 60 | 60 | 45 | 45 | 45 | 45 | 45 | 70 | 45 | 60 |
| Evaluation of acrylic thermal weldability | Weather resistance | - | ○ | ○ | ○ | ○ | ○ | ○ | ○ | ○ | ○ | ○ | ○ | ○ | ○ | ○ |

[Table 5-3]

| Table 5-3 | | | Example 29 | Example 30 | Example 31 | Example 32 | Example 33 | Example 34 | Example 35 | Example 36 | Example 37 | Example 38 | Example 39 | Example 40 | Example 41 | Example 42 |
|---|---|---|---|---|---|---|---|---|---|---|---|---|---|---|---|---|
| Each resin type | Type of styrene-(meth)acrylic acid resin (A) | | A1 | A1 | A1 | A1 | A1 | A1 | A1 | A2 | A1 | A1 | A1 | A1 | A1 | A1 |
| | Type of core-shell type rubbery polymer particles (B) | | B5 | B5 | B5 | B4 | B7 | B4 | B3 | B7 | B8 | B9 | B8 | B9 | B8 | B9 |
| | Type of impact-resistant styrene-based (C) | | - | - | - | - | - | - | - | - | - | - | C2 | C2 | C4 | C4 |
| | Types of thermoplastic elastomers (styrene elastomers (D) and/or acrylic elastomers (E)) | | D1 | D2 | E1 | - | - | - | - | - | - | - | - | - | - | - |
| | Type of (meth)acrylic resin (F) resin | | - | - | - | - | - | - | - | - | - | - | - | - | - | - |
| Compounding composition | Styrene-(meth) acrylic acid resin (A) | pts. by mass | 78.0 | 78.0 | 78.0 | 78.0 | 78.0 | 70.0 | 78.0 | 85.0 | 78.0 | 78.0 | 75.0 | 75.0 | 75.0 | 75.0 |
| | Core-shell structured rubbery polymer particles (B) | by mass pts. | 20.0 | 20.0 | 20.0 | 22.0 | 22.0 | 20.0 | 22.0 | 15 | 22.0 | 22.0 | 20.0 | 20.0 | 20.0 | 20.0 |
| | Impact resistance styrene-based (C) | pts. by mass | 0 | 0 | 0 | 0 | 0 | 10 | 0 | 0 | 0 | 0 | 5 | 5 | 5 | 5 |
| | Thermoplastic elastomer ((D) and/or (E)) | pts. by mass | 2 | 2 | 2 | 0 | 0 | 0 | 0 | 0 | 0 | 0 | 0 | 0 | 0 | 0 |
| | Acrylic resin (F) | pts. by mass | 0 | 0 | 0 | 0 | 0 | 0 | 0 | 0 | 0 | 0 | 0 | 0 | 0 | 0 |
| | Liquid paraffin | pts. by mass | 0 | 0 | 0 | 0 | 0 | 0 | 0 | 0 | 0 | 0 | 0 | 0 | 0 | 0 |
| | Silicone oil | pts. by mass | 0.5 | 0.5 | 0.5 | 0.5 | 0.5 | 0.5 | 0.5 | 0 | 0.5 | 0.5 | 0.5 | 0.5 | 0.5 | 0.5 |

(continued)

| Table 5-3 | | | Example 29 | Example 30 | Example 31 | Example 32 | Example 33 | Example 34 | Example 35 | Example 36 | Example 37 | Example 38 | Example 39 | Example 40 | Example 41 | Example 42 |
|---|---|---|---|---|---|---|---|---|---|---|---|---|---|---|---|---|
| | Fine oxocol 180 | pts. by mass | 0.10 | 0.10 | 0.10 | 0.10 | 0.10 | 0.09 | 0.10 | 0.11 | 0.10 | 0.10 | 0.10 | 0.10 | 0.10 | 0.10 |
| | Emulsion 109P | pts. by mass | 0.00 | 0.00 | 0.00 | 0.00 | 0.00 | 0.00 | 0.00 | 0.00 | 0.00 | 0.00 | 0.00 | 0.00 | 0.00 | 0.00 |
| | Black masterbatch | pts. by mass | 0.5 | 0.5 | 0.5 | 0.5 | 0.5 | 0.5 | 0.5 | 0.5 | 0.5 | 0.5 | 0.5 | 0.5 | 0.5 | 0.5 |
| | Phenol-based antioxidant (1) | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Phosphorus-based antioxidant | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Phenol-based antioxidant (2) | pts. by mass | 0.00 | 0.00 | 0.00 | 0.00 | 0.00 | 0.00 | 0.00 | 0.00 | 0.00 | 0.00 | 0.00 | 0.00 | 0.00 | 0.00 |
| | Light stabilizer | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Ultraviolet absorber | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Internal lubricant (Calcoal 8098) | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | External lubricant (Kao-wax EB-FF) | pts. by mass | 0.008 | 0.008 | 0.008 | 0.008 | 0.008 | 0.008 | 0.008 | 0.008 | 0.008 | 0.008 | 0.008 | 0.008 | 0.008 | 0.008 |
| Composition Properties and characteristics | Styrene monomer units | mass% | 65.2 | 65.2 | 64.5 | 64.5 | 64.5 | 57.9 | 67.8 | 77.3 | 65.14 | 65.8 | 67.1 | 67.7 | 64.8 | 65.4 |
| | Methacrylic acid monomer units | mass% | 8.4 | 8.4 | 8.4 | 8.4 | 8.4 | 7.6 | 8.4 | 6.7 | 8.4 | 8.4 | 8.1 | 8.1 | 8.1 | 8.1 |
| | Methyl acrylate monomer unit | mass% | 0.00 | 0.00 | 0.00 | 0.00 | 0.00 | 0.00 | 0.00 | 0.00 | 0 | 0 | 0.00 | 0.00 | 0.00 | 0.00 |
| | Conjugated diene monomer unit | mass% | 1.3 | 1.3 | 0.0 | 0.0 | 0.0 | 0.0 | 15.2 | 0.0 | 15.4 | 15.4 | 14.4 | 14.4 | 14.4 | 14.4 |
| | Content of styr-ene dimer and tri-mer | mass% | 0.23 | 0.23 | 0.23 | 0.23 | 0.23 | 0.21 | 0.23 | 0.26 | 0.23 | 0.23 | 0.23 | 0.23 | 0.23 | 0.23 |

(continued)

| Table 5-3 | | | Example 29 | Example 30 | Example 31 | Example 32 | Example 33 | Example 34 | Example 35 | Example 36 | Example 37 | Example 38 | Example 39 | Example 40 | Example 41 | Example 42 |
|---|---|---|---|---|---|---|---|---|---|---|---|---|---|---|---|---|
| | Content of styrene monomer | μg/g | 390 | 390 | 390 | 390 | 390 | 350 | 390 | 425 | 390 | 390 | 375 | 375 | 375 | 375 |
| | Melt mass flow rate (220°C, 10kgf) | g/10 min. | 5.8 | 6.8 | 6.8 | 5.6 | 5.6 | 4.2 | 5.6 | 11 | 5.7 | 5.8 | 6.7 | 6.8 | 6.7 | 6.6 |
| | Vicat softening temperature (1kg load) | °C | 128 | 128 | 128 | 128 | 128 | 127 | 128 | 120 | 128 | 128 | 128 | 128 | 128 | 128 |
| | Density | g/cm | 1.05 | 1.05 | 1.05 | 1.05 | 1.05 | 1.05 | 1.05 | 1.05 | 1.05 | 1.05 | 1.05 | 1.05 | 1.05 | 1.05 |
| | Flexural modulus | | 2,300 | 2,300 | 2,300 | 2,300 | 2,300 | 2,400 | 2,300 | 2500 | 2300 | 2300 | 2,300 | 2,300 | 2,300 | 2,300 |
| | Tensile yield stress | MPa | 43 | 43 | 43 | 43 | 43 | 44 | 43 | 50 | 44 | 44 | 42 | 42 | 44 | 44 |
| | Charpy impact strength (notched) | kJ/m | 12.7 | 13.2 | 13.5 | 9.3 | 7.1 | 9.8 | 9.3 | 3.0 | 11.4 | 9.5 | 11.3 | 9.4 | 11.6 | 9.7 |
| | Lightness (L*) | - | 30 | 30 | 30 | 30 | 30 | 30 | 30 | 30 | 30 | 30 | 30 | 30 | 30 | 30 |
| | Peel surface strength | N | 464 | 470 | 500 | 420 | 410 | 420 | 420 | 390 | 450 | 420 | 450 | 450 | 470 | 470 |
| Evaluation of acrylic thermal weldability | Heating time in hot plate welding | sec. | 60 | 60 | 55 | 65 | 70 | 65 | 65 | 75 | 60 | 65 | 60 | 60 | 60 | 60 |
| Evaluation of acrylic thermal weldability | Weather resistance | - | ○ | ○ | ○ | ○ | ○ | ○ | ○ | ○ | ○ | ○ | ○ | ○ | ○ | ○ |

[Table 5-4]

| Table 5-4 | | | Example 43 | Example 44 | Example 45 | Example 46 | Example 47 | Example 48 | Example 49 | Example 50 | Example 51 | Example 52 | Example 53 | Example 54 | Example 55 | Example 56 |
|---|---|---|---|---|---|---|---|---|---|---|---|---|---|---|---|---|
| Each resin type | Type of styrene-(meth)acrylic acid resin (A) | | A1 | A1 | A1 | A1 | A1 | A1 | A1 | A1 | A1 | A1 | A1 | A1 | A1 | A1 |
| | Type of core-shell type rubbery polymer particles (B) | | B8 | B8 | B8 | B8 | B1 | B2 | B3 | B1 | B8 | B9 | B8 | B8 | B8 | B8 |
| | Tvoe of impact-resistant styrene-based (C) | | C4 | C4 | C4 | C4 | C4 | C4 | C4 | C2 | - | - | - | - | - | - |
| | Types of thermoplastic elastomers (styrene elastomers (D) and/or acrylic elastomers (E)) | | - | - | - | - | - | - | - | - | - | - | - | - | - | - |
| | Type of (meth)acrylic resin (F) | | - | - | - | - | - | - | - | - | - | - | - | - | - | - |
| Compounding composition | Styrene-(meth) acrylic acid resin (A) | pts. by mass | 75.0 | 75.0 | 75.0 | 75.0 | 75.0 | 75.0 | 75.0 | 75.0 | 78.0 | 78.0 | 78.0 | 78.0 | 78.0 | 78.0 |
| | Core-shell structured rubbery polymer particles (B) | pts. by mass | 20.0 | 20.0 | 20.0 | 20.0 | 20.0 | 20.0 | 20.0 | 20.0 | 22.0 | 22.0 | 22.0 | 22.0 | 22.0 | 22.0 |
| | Impact resistance styrene-based (C) | pts. by mass | 5 | 5 | 5 | 5 | 5 | 5 | 5 | 5 | 0 | 0 | 0 | 0 | 0 | 0 |
| | Thermoplastic elastomers ((D) and/or ()) | pts. by mass | 0 | 0 | 0 | 0 | 0 | 0 | 0 | 0 | 0 | 0 | 0 | 0 | 0 | 0 |
| | Acrylic resin (F) | pts. by mass | 0 | 0 | 0 | 0 | 0 | 0 | 0 | 0 | 0 | 0 | 0 | 0 | 0 | 0 |
| | Liquid paraffin | pts. by mass | 0 | 0 | 0 | 0.5 | 0 | 0 | 0 | 0 | 0 | 0 | 0 | 0 | 0 | 0.5 |
| | Silicone oil | pts. by mass | 0.1 | 1 | 2.1 | 0 | 0.5 | 0.5 | 0.5 | 0.5 | 0.5 | 0.5 | 0.1 | 1 | 2.1 | 0 |

(continued)

| Table 5-4 | | | Example 43 | Example 44 | Example 45 | Example 46 | Example 47 | Example 48 | Example 49 | Example 50 | Example 51 | Example 52 | Example 53 | Example 54 | Example 55 | Example 56 |
|---|---|---|---|---|---|---|---|---|---|---|---|---|---|---|---|---|
| | Fine oxocol 180 | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Emulsion 109P | pts. by mass | 0.00 | 0.00 | 0.00 | 0.00 | 0.00 | 0.00 | 0.00 | 0.00 | 0.00 | 0.00 | 0.00 | 0.00 | 0.00 | 0.00 |
| | Black masterbatch | pts. by mass | 0.5 | 0.5 | 0.5 | 0.5 | 0.5 | 0.5 | 0.5 | 0.5 | 0.5 | 0.5 | 0.5 | 0.5 | 0.5 | 0.5 |
| | Phenol-based antioxidant (1) | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Phosphorus-based antioxidant | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Phenol-based antioxidant (2) | pts. by mass | 0.00 | 0.00 | 0.00 | 0.00 | 0.00 | 0.00 | 0.00 | 0.00 | 0.00 | 0.00 | 0.00 | 0.00 | 0.00 | 0.00 |
| | Light stabilizer | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Ultraviolet absorber | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | Internal lubricant (Calcoal 8098) | pts. by mass | 0.10 | 0.10 | 0.10 | 0.10 | 0.10 | 0.10 | 0.10 | 0.10 | 0.10 | 0.10 | 0.10 | 0.10 | 0.10 | 0.10 |
| | External lubricant (Kao-wax EB-FF) | pts. by mass | 0.008 | 0.008 | 0.008 | 0.008 | 0.008 | 0.008 | 0.008 | 0.008 | 0.008 | 0.008 | 0.008 | 0.008 | 0.008 | 0.008 |
| Composition Properties and characteristics | Styrene monomer units | mass | 65.1 | 64.5 | 63.8 | 64.8 | 64.2 | 64.2 | 65.4 | 66.5 | 65.1 | 65.8 | 65.4 | 64.8 | 64.1 | 65.1 |
| | Methacrylic acid monomer units | mass% | 8.2 | 8.1 | 8.0 | 8.1 | 8.1 | 8.1 | 8.1 | 8.1 | 8.4 | 8.4 | 8.5 | 8.4 | 8.3 | 8.4 |
| | Methyl acrylate monomer unit | mass% | 0.00 | 0.00 | 0.00 | 0.00 | 0.00 | 0.00 | 0.00 | 0.00 | 0.00 | 0.00 | 0.00 | 0.00 | 0.00 | 0.00 |
| | Conjugated diene monomer unit | mass% | 14.4 | 14.4 | 14.4 | 14.4 | 15.2 | 14.2 | 14.2 | 15.2 | 15.4 | 15.4 | 15.4 | 15.4 | 15.4 | 15.4 |
| | Content of styrene dimer and trimer | mass% | 0.23 | 0.23 | 0.23 | 0.23 | 0.23 | 0.23 | 0.23 | 0.23 | 0.23 | 0.23 | 0.23 | 0.23 | 0.23 | 0.23 |

(continued)

| Table 5-4 | | | Example 43 | Example 44 | Example 45 | Example 46 | Example 47 | Example 48 | Example 49 | Example 50 | Example 51 | Example 52 | Example 53 | Example 54 | Example 55 | Example 56 |
|---|---|---|---|---|---|---|---|---|---|---|---|---|---|---|---|---|
| | Content of styrene monomer | µg/g | 375 | 375 | 375 | 375 | 375 | 375 | 375 | 375 | 390 | 390 | 390 | 390 | 390 | 390 |
| | Melt mass flow rate (220°C, 10kgf) | g/10 min. | 6.7 | 7.1 | 7.8 | 6.6 | 6.5 | 6.6 | 6.7 | 6.5 | 5.6 | 5.7 | 5.4 | 6.0 | 6.4 | 6.6 |
| | Vicat softening temperature (1kg load) | °C | 128 | 127 | 124 | 127 | 128 | 128 | 128 | 128 | 128 | 128 | 128 | 127 | 124 | 127 |
| | Density | g/cm | 1.05 | 1.05 | 1.05 | 1.05 | 1.05 | 1.05 | 1.05 | 1.05 | 1.05 | 1.05 | 1.05 | 1.05 | 1.05 | 1.05 |
| | Flexural modulus | | 2,300 | 2,300 | 2,250 | 2,300 | 2,300 | 2,300 | 2,300 | 2,300 | 2,300 | 2,300 | 2,300 | 2,300 | 2,250 | 2,300 |
| | Tensile yield stress | MPa | 44 | 41 | 38 | 42 | 43 | 43 | 42 | 43 | 44 | 44 | 43 | 41 | 37 | 41 |
| | Charpy impact strength (notched) | kJ/m | 4.5 | 10.9 | 8.1 | 9.8 | 13.1 | 13.6 | 9.7 | 12.6 | 11.4 | 9.2 | 4.1 | 10.8 | 7.8 | 9.8 |
| | Lightness (L*) | - | 30 | 33 | 26 | 30 | 30 | 30 | 30 | 30 | 30 | 30 | 30 | 33 | 26 | 9.5 |
| Evaluation of acrylic thermal weldabilitv | Peel surface strength | N | 470 | 420 | 360 | 420 | 420 | 420 | 420 | 420 | 450 | 460 | 450 | 420 | 360 | 420 |
| | Heating time in hot plate welding | sec. | 60 | 60 | 60 | 60 | 60 | 60 | 60 | 60 | 60 | 60 | 60 | 60 | 60 | 60 |
| Evaluation of acrylic thermal weldability | Weather resistance | - | ○ | ○ | ○ | ○ | ○ | ○ | ○ | ○ | ○ | ○ | ○ | ○ | ○ | ○ |

[Table 5-5]

| Table 5-5 | | Example 57 | Example 58 | Example 59 | Example 60 | Example 61 | Example 62 |
|---|---|---|---|---|---|---|---|
| Each resin type | Type of styrene-(meth)acrylic acid resin (A) | A1 | A1 | A1 | A1 | A1 | A1 |
| | Type of core-shell type rubbery polymer particles (B) | B10 | B11 | B12 | B2 | B2 | B10 |
| | Type of impact-resistant styrene-based (C) | - | - | - | - | - | - |
| | Types of thermoplastic elastomers (styrene elastomers (D) and/or acrylic elastomers (E)) | - | - | - | - | - | - |
| | Type of (meth)acrylic resin (F) | - | - | - | - | - | - |

(continued)

| Table 5-5 | | | Example 57 | Example 58 | Example 59 | Example 60 | Example 61 | Example 62 |
|---|---|---|---|---|---|---|---|---|
| Compounding composition | Styrene-(meth) acrylic acid resin (A) | pts. by mass | 77.0 | 77.0 | 77.0 | 78.0 | 78.0 | 77.0 |
| | Core-shell structured rubbery polymer particles (B) | pts. by mass | 23.0 | 23.0 | 23.0 | 22.0 | 22.0 | 23.0 |
| | Impact resistance styrene-based (C) | pts. by mass | 0 | 0 | 0 | 0 | 0 | 0 |
| | Thermoplastic elastomers ((D) and/or ()) | pts. by mass | 0 | 0 | 0 | 0 | 0 | 0 |
| | Acrylic resin (F) | pts. by mass | 0 | 0 | 0 | 0 | 0 | 0 |
| | Liquid paraffin | pts. by mass | 0 | 0 | 0 | 0 | 0 | 0 |
| | Silicone oil | pts. by mass | 0.5 | 0.5 | 0.5 | 0.5 | 0.5 | 0.5 |
| | Fine oxocol 180 | pts. by mass | 0.10 | 0.10 | 0.10 | 0.10 | 0.10 | 0.10 |
| | Emulsion 109P | pts. by mass | 0.00 | 0.00 | 0.00 | 0.00 | 0.00 | 0.00 |
| | Black masterbatch | pts. by mass | 0.5 | 0.5 | 0.5 | 0.5 | 0.5 | 0.5 |
| | Phenol-based antioxidant (1) | pts. by mass | 0.10 | 0.10 | 0.10 | 0.10 | 0.00 | 0.00 |
| | Phosphorus-based antioxidant | pts. by mass | 0.10 | 0.10 | 0.10 | 0.00 | 0.00 | 0.00 |
| | Phenol-based antioxidant (2) | pts. by mass | 0.00 | 0.00 | 0.00 | 0.00 | 0.10 | 0.10 |
| | Light stabilizer | pts. by mass | 0.40 | 0.40 | 0.40 | 0.10 | 0.10 | 0.40 |
| | Ultraviolet absorber | pts. by mass | 0.20 | 0.20 | 0.20 | 0.10 | 0.10 | 0.20 |
| | Internal lubricant (Calcoal 8098) | pts. by mass | 0.10 | 0.10 | 0.10 | 0.00 | 0.00 | 0.10 |
| | External lubricant (Kao-wax EB-FF) | pts. by mass | 0.008 | 0.008 | 0.008 | 0.000 | 0.000 | 0.008 |

(continued)

| Table 5-5 | | | Example 57 | Example 58 | Example 59 | Example 60 | Example 61 | Example 62 |
|---|---|---|---|---|---|---|---|---|
| Composition Properties and characteristics | Styrene monomer units | mass% | 63.4 | 63.4 | 63.4 | 64.6 | 64.6 | 63.4 |
| | Methacrylic acid monomer units | mass% | 8.3 | 8.3 | 8.3 | 8.5 | 8.5 | 8.3 |
| | Methyl acrylate monomer unit | mass% | 0.00 | 0.00 | 0.00 | 0.00 | 0.00 | 0.00 |
| | Conjugated diene monomer unit | mass% | 0.0 | 0.0 | 0.0 | 15.4 | 15.4 | 0.0 |
| | Content of styrene dimer and trimer | mass% | 0.23 | 0.23 | 0.23 | 0.23 | 0.23 | 0.23 |
| | Content of styrene monomer | μg/g | 385 | 385 | 385 | 390 | 390 | 385 |
| | Melt mass flow rate (220°C, 10kgf) | g/10 min. | 6.8 | 7.1 | 7.1 | 5.5 | 5.7 | 6.9 |
| | Vicat softening temperature (1kg load) | °C | 128 | 128 | 128 | 128 | 128 | 128 |
| | Density | $2/cm^3$ | 1.09 | 1.09 | 1.09 | 1.05 | 1.05 | 1.09 |
| | Flexural modulus | | 2,350 | 2,350 | 2,350 | 2,300 | 2,300 | 2,350 |
| | Tensile yield stress | MPa | 46 | 46 | 46 | 43 | 43 | 46 |
| | Charpy impact strength (notched) | $kJ/m^2$ | 7.1 | 7.5 | 7.4 | 12.5 | 12.6 | 7.3 |
| | Lightness (L*) | - | 33 | 33 | 33 | 30 | 30 | 33 |
| Evaluation of acrylic thermal weldability | Peel surface strength | N | 540 | 550 | 560 | 465 | 465 | 540 |
| | Heating time in hot plate welding | sec. | 60 | 60 | 60 | 60 | 60 | 60 |
| Evaluation of acrylic thermal weldability | Weather resistance | - | ◎ | ◎ | ◎ | ○ | ○ | ◎ |

[Comparative Examples 1 to 2 and Comparative Example 4]

The styrene-based resin compositions of Comparative Examples 1 to 2 and Comparative Example 4 were obtained in a manner similar to Example 1, except that the formulation was changed as listed in Table 7 below. Table 6 lists the evalution results of the obtained styrene-based resin composition.

[Comparative Example 3]

In Comparative Example 3, instead of the styrene-based resin composition, PA-777E, which is a heat-resistant ABS (a resin composition consisting of a styrene-acrylonitrile-butadiene copolymer and a styrene-acrylonitrile-N-phenylmaleimide copolymer) manufactured by Chimei Corporation was used, and the same evaluation as in the example was conducted. The evaluation results are summarized in Table 6. In the system using ABS, which is a styrene-acrylonitrile-based resin, the thermal weldability with the acrylic resin material was found to be inferior to that of the styrene-based resin composition of the present application.

[Table 6]

| Table 6 | | | Comp. Ex. 1 | Comp. Ex. 2 | Comp. Ex. 3 | Comp. Ex. 4 |
|---|---|---|---|---|---|---|
| Each resin type | Type of styrene-(meth)acrylic acid resin (A) | | A1 | A1 | Heat-resistant ABS Chimei 777E | A4 |
| | Type of core-shell type rubbery polymer particles (B) | | B1 | B3 | | B1 |
| | Type of impact-resistant styrene-based (C) | | - | - | | - |
| | Thermoplastic elastomer Type of (elastomer (D) or (E)) | | - | - | | - |
| | Type of (meth)acrylic resin (F) | | - | - | | - |
| Compounding composition | Styrene-(meth)acrylic acid resin (A) | pts. by mass | 96.0 | 35.0 | | 78.0 |
| | Core-shell structured rubbery polymer particles (B) | pts. by mass | 4.0 | 65.0 | | 22.0 |
| | Impact resistance styrene-based (C) | pts. by mass | 0 | 0 | | 0 |
| | Thermoplastic elastomer (D) or (E) | pts. by mass | 0 | 0 | | 0 |
| | (Meth)acrylic resin (F) | pts. by mass | 0 | 0 | | 0 |
| | Liquid paraffin | pts. by mass | 0 | 0 | | 0 |
| | Silicone oil | pts. by mass | 0.5 | 0.5 | | 0.5 |
| | Fine oxocol 180 | pts. by mass | 0.12 | 0.05 | | 0.10 |
| | Emulsion 109P | pts. by mass | 0.00 | 0.00 | | 0.00 |
| | Black masterbatch | pts. by mass | 0.5 | 0.5 | | 0.5 |
| | Phenol-based antioxidant | pts. by mass | 0.10 | 0.10 | | 0.10 |
| | Phosphorus-based antioxidant | pts. by mass | 0.10 | 0.10 | | 0.10 |
| | Light stabilizer | pts. by mass | 0.10 | 0.10 | | 0.10 |
| | Ultraviolet absorber | pts. by mass | 0.10 | 0.10 | | 0.10 |
| | Internal lubricant (Calcoal 8098) | pts. by mass | 0.10 | 0.10 | | 0.10 |

(continued)

| Table 6 | | | Comp. Ex. 1 | Comp. Ex. 2 | Comp. Ex. 3 | Comp. Ex. 4 |
|---|---|---|---|---|---|---|
| | External lubricant (Kao-wax EB-FF) | pts. by mass | 0.008 | 0.008 | | 0.008 |
| Composition Properties and characteristics | Styrene monomer units | mass% | 79.3 | 32.8 | | 76.8 |
| | Methacrylic acid monomer units | mass% | 10.4 | 3.8 | | 0.0 |
| | Methyl acrylate monomer unit | mass% | 0.00 | 0.00 | | 0.00 |
| | Conjugated diene monomer unit | mass% | 3.0 | 44.8 | | 16.2 |
| | Content of styrene dimer and trimer | mass% | 0.29 | 0.11 | | 0.23 |
| | Content of styrene monomer | μg/g | 480 | 175 | | 290 |
| | Melt mass flow rate (220°C, 10kgf) | g/10 min. | 5.5 | 0.1 > | 3 | 11.0 |
| | Vicat softening temperature (1kg load) | °C | 129 | 100 > | 130 | 100 > |
| | Density | $g/cm^3$ | 1.07 | 1.01 | 1.07 | 1.02 |
| | Flexural modulus | MPa | 3,000 | 1000 > | 2,400 | 2,300 |
| | Tensile yield stress | MPa | 62 | 10> | 43 | 43 |
| | Charpy impact strength (notched) | $kJ/m^2$ | 2.6 | Nondestructive | 14 | 5.8 |
| | Lightness (L*) | - | 30 | 45 | 78 | 40 |
| Evaluation of acrylic thermal weldability | Peel surface strength | N | 465 | 150 | 340 | 190 |
| | Heating time in hot plate welding | sec. | 60 | 100 < | 80 | 100 < |
| Weather resistance | Weather resistance | - | ○ | × | Δ | Δ |

[Production Example of Dissimilar Resin Composite Member]

The specific production methods of each dissimilar resin composite member are described below.

<<Components Used in Examples 63-67>>

<Lubricating Oil>

In Examples 63 to 67 and Comparative Examples 5 to 7 of this specification, when the lubricating oil (G) was used, a silicone oil (polydimethysiloxane oil PP-17 (trade name) manufactured by GE Toshiba Silicone) was used.

<Core-Sheil Structured Rubbery Particles (B)>

In Examples 63 to 67 and Comparative Examples 5 to 7 of this specification, METABLEN E-875A (trade name), manufactured by Mitsubishi Chemical Corporation (shell portion: polymethyl methacrylate, core: polybutadiene), was used as the core-shell structured rubbery particles (B).

<Impact-Resistant Styrene-Based Resin (C)>

In Examples 63 to 67 and Comparative Examples 5 to 7 of this specification, when the impact-resistant styrene-based resin (C) was used, a styrene-based resin composition (S8) was used.

<Monohydric Alcohol Having 10 or More Carbon Atoms>

In Examples 63 to 67 and Comparative Examples 5 to 7 of this specification, when a monohydric alcohol having 10 or more carbon atoms was used, Fineoxocol 180 (trade name), manufactured by Nissan Chemical Corporation, chemical name: 5,7,7-trimethyl-2-(1,3,3-trimethylbutyl)-1-octanol), was used.

<Mold Release Agent (Internal Lubricant)>

In Examples 63 to 67 and Comparative Examples 5 to 7 of this specification, when a mold release agent (internal lubricant) was used, Kalcol 8098 (trade name), manufactured by Kao Corporation, chemical name: stearyl alcohol, was used.

<Coloring Agent>

A masterbatch of carbon black for black coloring of the styrene-based resin composition was prepared by the following procedure.

- Preparation of Black Masterbatch -

2.8 kg of Resin (S3) described below, 2.8 kg of carbon black, and 0.5 kg of polyethylene wax were dry-blended, melt-kneaded, and pelletized to obtain a black masterbatch as black-colored pellets.

<<Synthesis Examples 1 to 2 of Acrylic Resin Composition>>

Table 7 below lists the composition of the acrylic resin compositions used in Examples 63 to 67 and Comparative Examples 5 to 8.

[Table 7]

| Table 7 | | Synthesis Ex. 1 | Synthesis Ex. 2 |
|---|---|---|---|
| | Unit | Composition (1) | Composition (2) |
| Methyl methacrylate monomer units | mass% | 97.9 | 93.9 |
| Methyl acrylate monomer unit | mass% | 2.0 | 6.0 |
| Calcoal 8098 | mass% | 0.1 | 0.1 |
| Vicat softening temp erature (5kg load) | °C | 109 | 105 |
| Weight average molecular weight | x10,000 | 10 | 20 |
| Total luminous transmittance (2 mm) | % | 93 | 93 |
| Yellowness YI (2mm) | - | 0.5 | 0.6 |
| HSP dispersion component $\delta$da | $(J/cm^3)^{1/2}$ | 18.7 | 18.5 |
| HSP polar component $\delta$pa | $(J/cm^3)^{1/2}$ | 10.7 | 10.8 |
| HSP hydrogen-bonding component $\delta$ha | $(J/cm^3)^{1/2}$ | 6.3 | 6.3 |
| S$\delta$p+h ($\delta$ps + $\delta$hs) | $(J/cm^3)^{1/2}$ | 17.0 | 17.1 |

<<Synthesis Examples 3-10 of Resins Containing Styrene-Unsaturated Carboxylic Acid Resin (A)>>

Compositions (S1) to (S8) containing styrene-unsaturated carboxylic acid-based resin (A), having the compositions listed in Table 8, were obtained by the a method similar to that for Resin (A1) described above.

[Table 8]

| Table 8 | | Synthesis Ex. 3 | Synthesis Ex. 4 | Synthesis Ex. 5 | Synthesis Ex. 6 | Synthesis Ex. 7 | Synthesis Ex. 8 | Synthesis Ex. 9 | Synthesis Ex. 10 |
|---|---|---|---|---|---|---|---|---|---|
| | Unit | Composition (S1) | Composition (S2) | Composition (S3) | Composition (S4) | Composition (S5) | Composition (S6) | Composition (S7) | Composition (S8) |
| Styrene monomer units | mass% | 95.9 | 91.9 | 83.9 | 100.0 | 72 | 57 | 77.0 | 40 |
| Methacrylic acid monomer units | mass% | 4.0 | 8.0 | 11.0 | 0 | 0.0 | 0.0 | 18.0 | 0.0 |
| Methyl methacrylate monomer units | mass% | 0.0 | 0.0 | 5.0 | 0 | 0.0 | 0.0 | 5.0 | 35.0 |
| Acrylonitrile monomer units | mass% | 0.0 | 0.0 | 0.0 | 0 | 28.0 | 23.0 | 0 | 0.0 |
| Rubbery polymer particles | mass% | 0.0 | 0.0 | 0.0 | 0 | 0.0 | 20.0 | 0 | 25.0 |
| Fine oxocol 180 | mass% | 0.1 | 0.1 | 0.1 | 0.0 | 0.0 | 0.0 | 0.0 | 0.0 |
| Vicat softening temperature (5kg load) | °C | 109 | 118 | 124 | 102 | 103.0 | 100.0 | 137.0 | 95.0 |
| Weight average molecular weight | x10,000 | 22 | 19 | 18 | 26 | 21.0 | 19.0 | 15.0 | 14.0 |
| Lightness L* (2mm) | - | 96 | 96 | 96 | 96 | 94.0 | 80.0 | 95.0 | 80.0 |
| HSP dispersion component δds | $(J/cm^3)^{1/2}$ | 18.7 | 18.5 | 17.8 | 21.3 | 19.7 | 19.5 | 17.1 | 18.5 |
| HSP polar component δps | $(J/cm^3)^{1/2}$ | 7.6 | 8.2 | 8.8 | 5.8 | 9.6 | 9.7 | 10.1 | 7.9 |
| HSP hydrogen-bonding component δhs | $(J/cm^3)^{1/2}$ | 4.5 | 5.7 | 6.2 | 4.1 | 5.7 | 5.5 | 6.9 | 6.7 |
| Sδp+h (δps + δhs) | $(J/cm^3)^{1/2}$ | 12.1 | 13.9 | 15.0 | 9.9 | 11.2 | 11.2 | 12.2 | 10.4 |

<<Synthesis Examples 11 to 14>>

Compositions (SC1) to (SC4) were prepared as styrene-based resin compositions by melt-kneading with a co-rotating twin-screw extruder at the blend ratios listed in Table 9 below. The cylinder temperature of the extruder was set to 180 to 230 °C, and the resin temperature was 240 to 270 °C.

[Table 9]

| Table 9 | | Synthesis Ex. 11 | Synthesis Ex. 12 | Synthesis Ex. 13 | Synthesis Ex. 14 |
|---|---|---|---|---|---|
| | Unit | Composition (SC1) | Composition (SC2) | Composition (SC3) | Composition (SC4) |
| Styrene-based resin composition (composition (S3)) | mass% | 76.9 | 62.9 | 68.9 | 70.9 |
| Acrylic resin composition (composition (2)) | mass% | 0.0 | 16.0 | 0 | 0 |
| Core-shell rubber particles (E875A) | mass% | 22.0 | 20.0 | 0 | 18 |
| High-impact polystyrene (S8) | mass% | 0.0 | 0.0 | 30 | 10 |
| Silicone Oil (PP-17) | mass% | 0.5 | 0.5 | 0.5 | 0.5 |
| Black masterbatch | mass% | 0.5 | 0.5 | 0.5 | 0.5 |
| Calcoal 8089 | mass% | 0.1 | 0.1 | 0.1 | 0.1 |
| Vicat softening temp erature (5kg load) | °C | 115 | 113 | 114 | 115 |
| Lightness L* (2mm) | - | 30 | 29 | 30 | 30 |
| HSP dispersion component $\delta d$ | $(J/cm^3)^{1/2}$ | 17.8 | 18.0 | 18.1 | 18.1 |
| HSP polar component $\delta p$ | $(J/cm^3)^{1/2}$ | 8.8 | 9.2 | 8.7 | 8.7 |
| HSP hydrogen-bonding component $\delta h$ | $(J/cm^3)^{1/2}$ | 6.2 | 6.2 | 6.5 | 6.3 |
| $S\delta p+h$ ($\delta ps + \delta hs$) | $(J/cm^3)^{1/2}$ | 15.0 | 15.4 | 15.2 | 15.1 |

[Example 63]

The acrylic resin composition (1) in Table 7 above was injection molded into a cover-shaped acrylic resin member (1*) having a smooth bonding surface of 2 cm on the outer periphery of 30 cm × 30 cm (the acrylic resin member 33 in FIG. 1, W1 = 30 cm, D1 = 30 cm). The styrene-based resin composition (S1) in Table 8 above was injection molded into a housing-shaped styrene-based resin member (S1*) having an opening and a bonding surface of 2 cm on one face of a cube with lengths of 26 cm and a thickness of 2 cm (the styrene-based resin member 22 in FIG. 1, W2 = 26 cm, D2 = 26 cm, H2 = 26 cm, w0 = 2 cm).

Next, the cover-shaped acrylic resin member (1*) and the housing-shaped styrene-based resin member (S1*) were arranged via a heat plate heated to 400 °C, with the bonding surfaces facing the heat plate, and brought to a distance of 0.5 cm. After a heating time (T) of 40 seconds, the heat plate was removed, the bonding surfaces of the acrylic resin member (1*) and the styrene-based resin member (S1*) were pressed together, and after air cooling for 3 minutes, a dissimilar resin composite member [1] was obtained (the dissimilar resin composite member 11 in FIG. 2, W3 = 30 cm, D3 = 30 cm, H3 = 26 cm). The evaluation results of the obtained dissimilar resin composite member [1] and the calculated values of each parameter based on the combination of the acrylic resin member (1*) and the styrene-based resin member (S1*) are listed in Table 10.

Meanwhile, as an evaluation of assembly cycle property, three dissimilar resin composite members [1'] were prepared by changing the heating time from 10 seconds to 30 seconds in 2-second increments. The obtained dissimilar resin composite member [1'] was placed on a flat surface with the surface of the acrylic resin member (1*) facing upward, and was fixed so that it would not move. A palm was placed on the surface of the acrylic resin member (1*), and shear stress was applied horizontally to that surface. The heating time (T) at which all three samples did not peel off was determined as the minimum heating time ($T_{min}$), and the assembly cycle property was evaluated according to the following criteria. The obtained assembly cycle property evaluation results are listed in Table 10.

S: $T_{min}$ was 18 seconds or longer
A: $T_{min}$ was longer than 18 seconds and 24 seconds or shorter
B: $T_{min}$ was longer than 24 seconds and 30 seconds or shorter
C: $T_{min}$ was longer than 30 seconds

[Examples 64 to 67]

Dissimilar resin composite members [2] to [5] were produced and evaluated in a manner similar to dissimilar resin composite member [1] prepared in Example 63, except that the combination of the acrylic resin composition and the styrene-based resin composition was changed as listed in Table 10 below. The evaluation results of the obtained dissimilar resin composite members [2] to [5], and the calculated values of each parameter based on the combination of the resin members, are listed in Table 10.

[Comparative Examples 5 to 8]

Dissimilar resin composite members were prepared and evaluated in a manner similar to in Examples 1 to 10 by molding each member using a combination of an acrylic resin composition (resin (1)) and styrene-based resin compositions (S4), (S5), (S6), and (S8), which were mainly composed of a styrene homopolymer. The results of the joint strength were inferior compared with the case of using styrene-based resin compositions (SC1) to (SC4) containing methacrylic acid monomer units. The evaluation results and the calculated values of each parameter based on the combination of each resin member are listed in Table 10.

[Table 10]

| Table 10 | Unit | Example 63 | Example 64 | Example 65 | Example 66 | Example 67 | Comp. Ex. 5 | Comp. Ex. 6 | Comp. Ex. 7 | Comp. Ex. 8 |
|---|---|---|---|---|---|---|---|---|---|---|
| Types of acrylic resin compositions used in acrylic resin members | - | Composition (1) | Composition (1) | Composition (2) | Composition (2) | Composition (1) | Composition (1) | Composition (1) | Composition (1) | Composition (1) |
| Styrene-based resin composition used for styrene-based resin member | - | SC1 | SC2 | SC1 | SC2 | SC4 | S4 | S5 | S6 | S8 |
| HSP distance | - | 2.1 | 1.7 | 2.1 | 1.7 | 2.1 | 6.0 | 1.6 | 1.7 | 2.8 |
| \|Sδp+h - Sδp+h\| | - | 2.0 | 1.6 | 2.1 | 1.7 | 2.0 | 17.0 | 1.3 | 1.3 | 2.8 |
| Vicat softening temp erature difference | °C | 6 | 4 | 10 | 8 | 6 | 7 | 6 | 9 | 14 |
| Heat resistance | - | A | A | A | A | A | C | C | C | C |
| Joint strength | - | S | S | S | S | S | C | B | B | B |
| Mechanical strength | - | S | S | S | S | S | B | C | A | A |
| Assembly cycle property | - | S | S | S | S | S | C | B | B | B |

INDUSTRIAL APPLICABILITY

The styrene-based resin composition of the present embodiment is excellent in heat resistance, toughness, rigidity, and thermal weldability with acrylic resin materials. Therefore, the styrene-based resin composition of the present disclosure can be widely used in extrusion molding for non-foamed or foamed sheets, food packaging containers using those sheets, or molded articles by injection molding (electrical appliance parts, toys, daily necessities, various industrial parts), and is particularly useful for vehicle parts that require heat resistance, toughness, rigidity, and thermal weldability with acrylic resin materials, playing a significant role in the industrial field.

Moreover, the dissimilar resin composite member obtained in the present disclosure is excellent in the strength of the welded portion, heat resistance, rigidity, and assembly cycle property. Therefore, the dissimilar resin composite member of the present disclosure is useful for lighting housings and housings for vehicle lights, particularly for vehicle rear lamp housings, and plays a significant role in the industrial field.

## Claims

1. A styrene-based resin composition comprising a styrene-unsaturated carboxylic acid-based resin (A) containing a styrene-based monomer unit (al) and an unsaturated carboxylic acid-based monomer unit (a2), and core-shell structured rubbery particles (B) containing a (meth)acrylic acid ester monomer unit (b1),
wherein a content of the styrene-unsaturated carboxylic acid-based resin (A) is 40 to 95 mass% and a content of the rubbery particles (B) is 5 to 60 mass%, relative to a total amount (100 mass%) of the styrene-based resin composition.

2. The styrene-based resin composition according to claim 1, wherein the core-shell structured rubbery particles (B) further contain a styrene-based monomer unit (b4), and a content of the styrene-based monomer unit (b4) is 5 mass% or less relative to a total amount (100 mass%) of the core-shell structured rubbery particles (B).

3. The styrene-based resin composition according to claim 1 or 2, wherein a content of the (meth)acrylic acid ester monomer unit (b1) contained in the core-shell structured rubbery particles (B) is 3 to 40 mass% relative to the total amount (100 mass%) of the core-shell structured rubbery particles (B).

4. The styrene-based resin composition according to claim 1 or 2, wherein the core-shell structured rubbery particles (B) further contain a conjugated diene-based monomer unit (b2), and a content of the conjugated diene-based monomer unit (b2) is 50 to 90 mass% relative to the total amount (100 mass%) of the core-shell structured rubbery particles (B).

5. The styrene-based resin composition according to claim 1 or 2, the styrene-based resin composition further contains 0.5 to 30 mass% of an impact-resistant styrene-based resin (C).

6. The styrene-based resin composition according to claim 1 or 2, further comprising 0.05 to 3.00 mass% of a lubricating oil (G).

7. The styrene-based resin composition according to claim 6, wherein the core-shell structured rubbery particles (B) further contain a styrene-based monomer unit (b4), and
$Y/X \leq 10$ is satisfied where a content of the styrene-based monomer units (b4) is denoted as Y and a content of the lubricating oil (G) is denoted as X.

8. The styrene-based resin composition according to claim 1 or 2, wherein the lubricating oil (G) is a silicone oil.

9. The styrene-based resin composition according to claim 1 or 2, wherein the core-shell structured rubbery particles (B) further contain one or two or more selected from the group consisting of a conjugated diene-based monomer unit (b2) and a siloxane-based monomer unit (b3), and a total content of the conjugated diene-based monomer unit (b2) and the siloxane-based monomer unit (b3) is 50 mass% or more relative to the total amount (100 mass%) of the core-shell structured rubbery particles (B).

10. The styrene-based resin composition according to claim 1 or 2, wherein a notched Charpy impact strength (in accordance with ISO 179, under a test condition of 1 eA) is 4.0 kJ/$m^2$ or more.

11. The styrene-based resin composition according to claim 1 or 2, wherein a content of all styrene-based monomer units is 72 mass% or less relative to the total amount (100 mass%) of the styrene-based resin composition.

**12.** The styrene-based resin composition according to claim 1 or 2, further comprising 0.5 mass% or more of one or two or more selected from the group consisting of an impact-resistant styrene-based resin (C), a styrene-based elastomer (D), and an acrylic elastomer (E), relative to the total amount (100 mass%) of the styrene-based resin composition.

**13.** The styrene-based resin composition according to claim 1 or 2, further comprising 1.0 mass% or more of an acrylic resin (F) relative to the total amount (100 mass%) of the styrene-based resin composition.

**14.** The styrene-based resin composition according to claim 1 or 2, having a lightness (L*) of 50 or less.

**15.** An injection molded article produced by injection molding the styrene-based resin composition according to claim 1 or 2.

**16.** The injection molded article according to claim 15, which is to be welded with an acrylic resin member produced from an acrylic resin composition.

**17.** The injection molded article according to claim 14, which is used for vehicles.

**18.** A dissimilar resin composite member comprising an acrylic resin member produced from an acrylic resin composition and a styrene-based resin member made of the styrene-based resin composition according to claim 1 or 2, welded together,

wherein a content of all methyl methacrylate monomer units in the acrylic resin composition is more than 50 mass%,
a content of all styrene-based monomer units included in the styrene-based resin composition is more than 50 mass%, and a content of all methacrylic acid monomer units included in the styrene-based resin composition is 3 mass% or more, and
a three-dimensional plot distance (HSP distance) between Hansen solubility parameter (HSP) values [($\delta_{ds}$, $\delta_{ps}$, $\delta_{hs}$) $(J/cm^3)^{1/2}$] of a methyl ethyl ketone-soluble fraction of the styrene-based resin composition and Hansen solubility parameter (HSP) values [($\delta_{da}$, $\delta_{pa}$, $\delta_{ha}$) $(J/cm^3)^{1/2}$] of a chloroform-soluble fraction of the acrylic resin composition satisfy the following mathematical formula (I):
[Math. 1]

$$\text{HSP distance} = \{(\delta_{ds} - \delta_{da})^2 + (\delta_{ps} - \delta_{pa})^2 + (\delta_{hs} - \delta_{ha})^2\}^{1/2} \leq 4.0 \quad \text{... (Formula 1)}$$

in the above formula 1, $\delta_{ds}$ represents a dispersion force component $(J/cm^3)^{1/2}$ of the styrene-based resin composition, $\delta_{ps}$ $(J/cm^3)^{1/2}$ represents a polar component of the styrene-based resin composition, $\delta_{hs}$ $(J/cm^3)^{1/2}$ represents a hydrogen bonding component of the styrene-based resin composition, $\delta_{da}$ $(J/cm^3)^{1/2}$ represents a dispersion force component of the acrylic resin composition, $\delta_{pa}$ $(J/cm^3)^{1/2}$ represents a polar component of the acrylic resin composition, and $\delta_{ha}$ $(J/cm^3)^{1/2}$ represents a hydrogen bonding component of the acrylic resin composition.

**19.** The dissimilar resin composite member according to claim 17, wherein a Vicat softening temperature of the styrene-based resin composition is 105 °C or higher.

FIG. 1

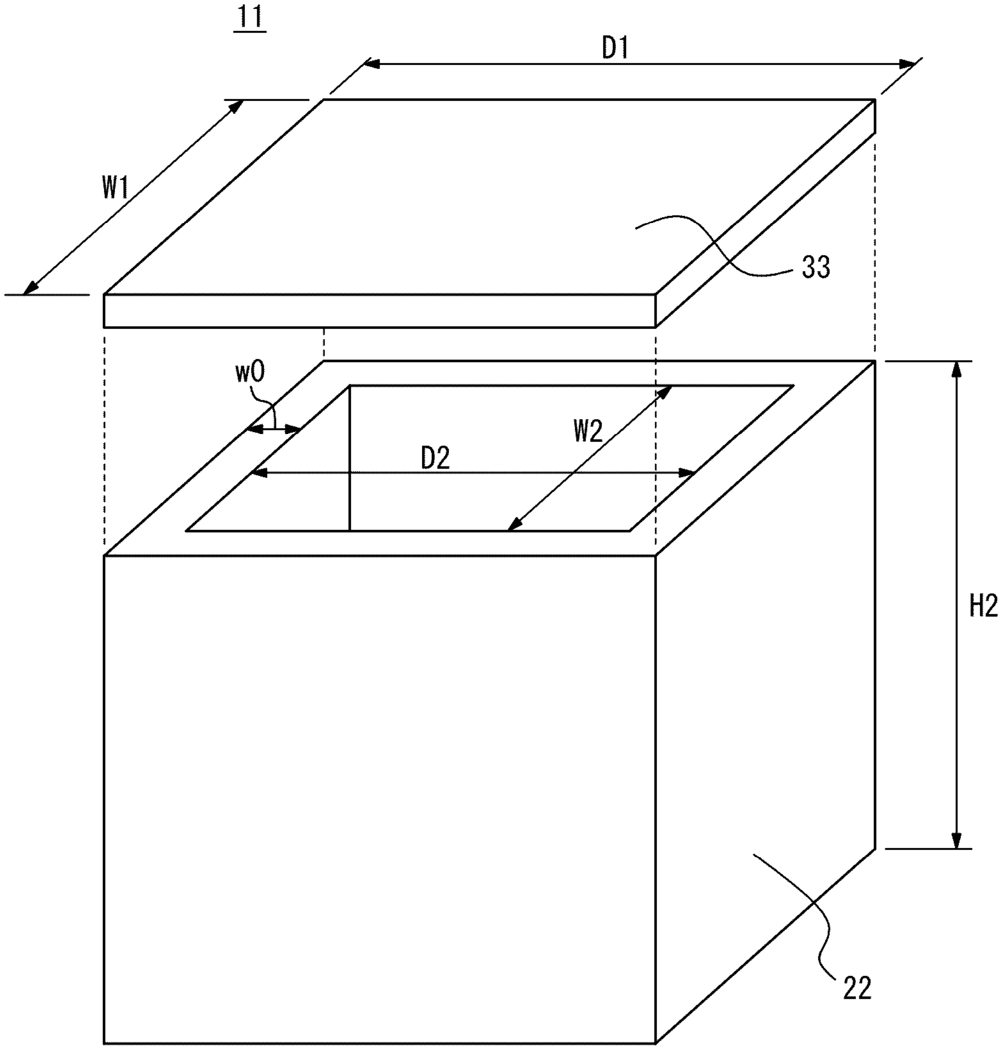

FIG. 2

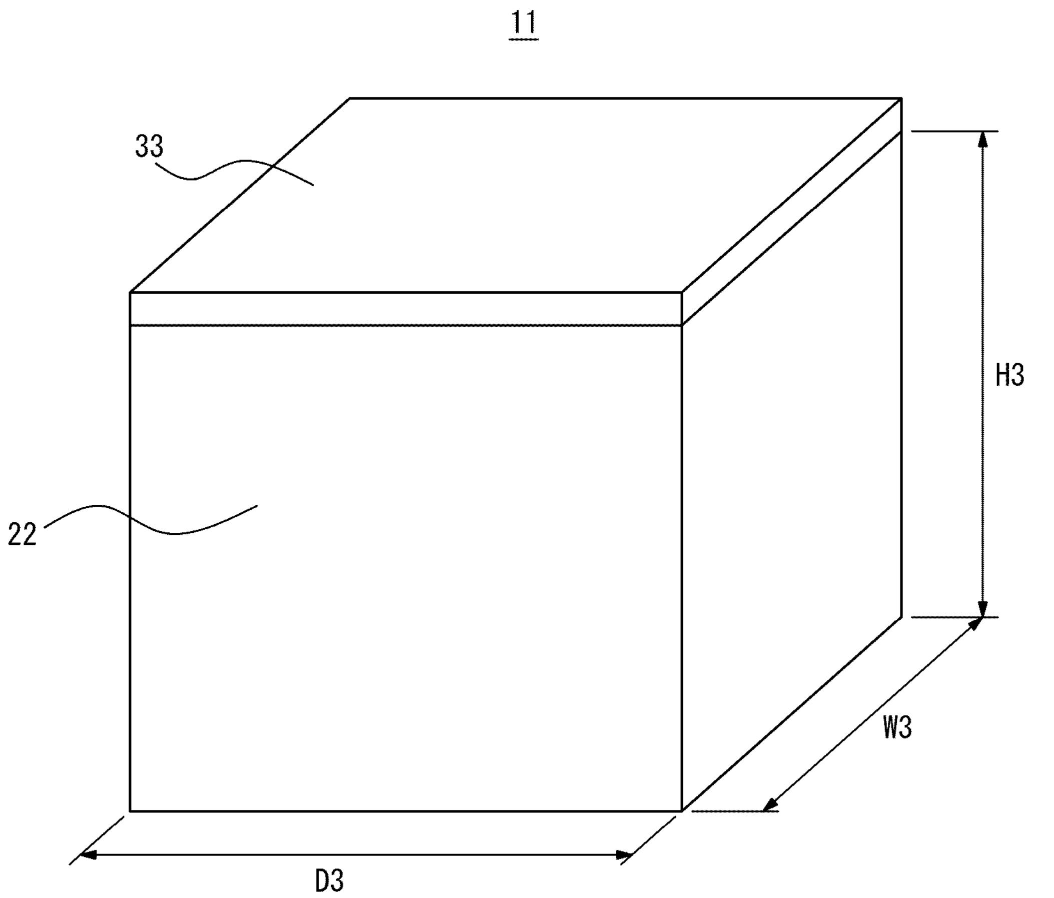

FIG. 3

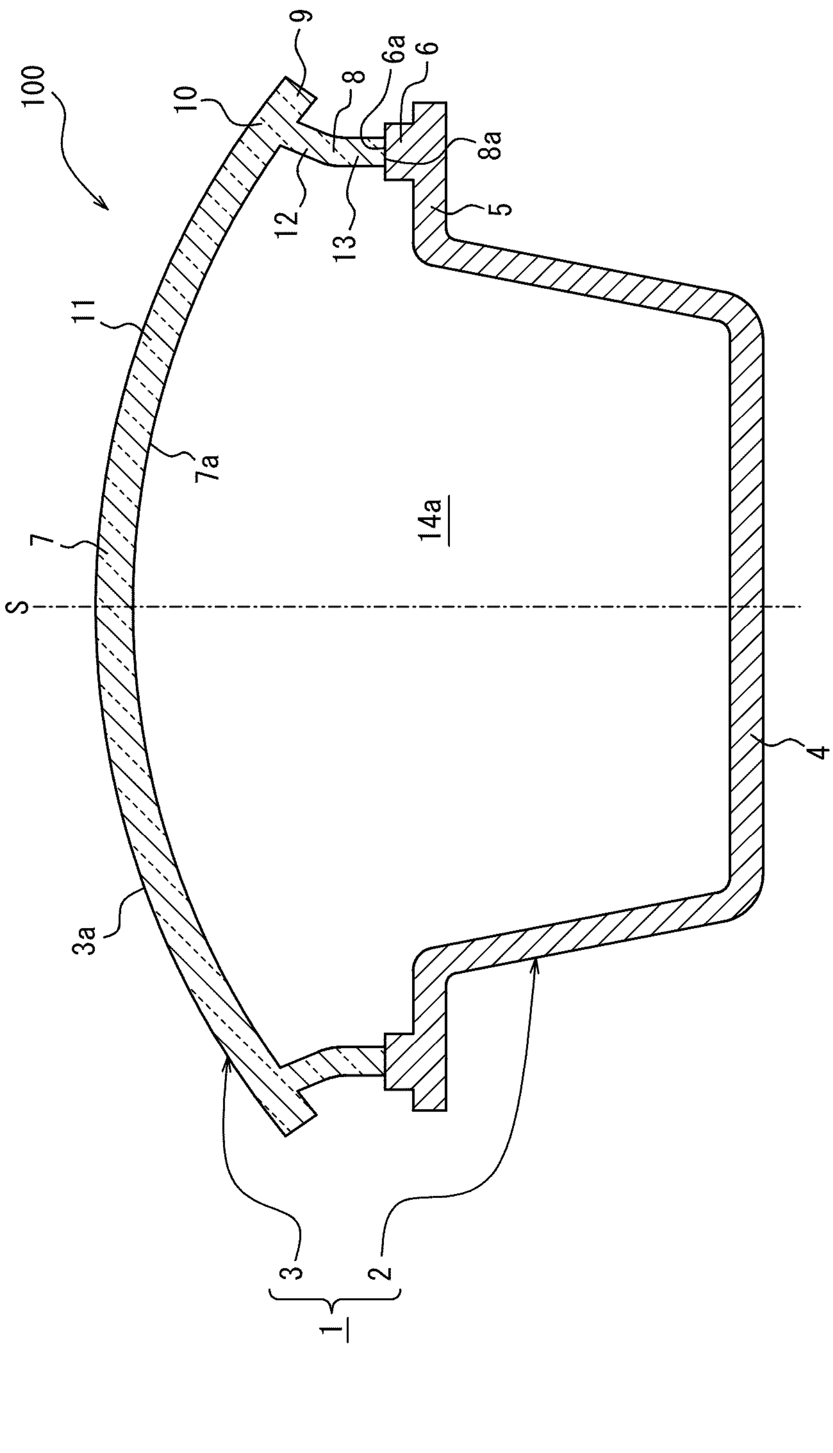

FIG. 4

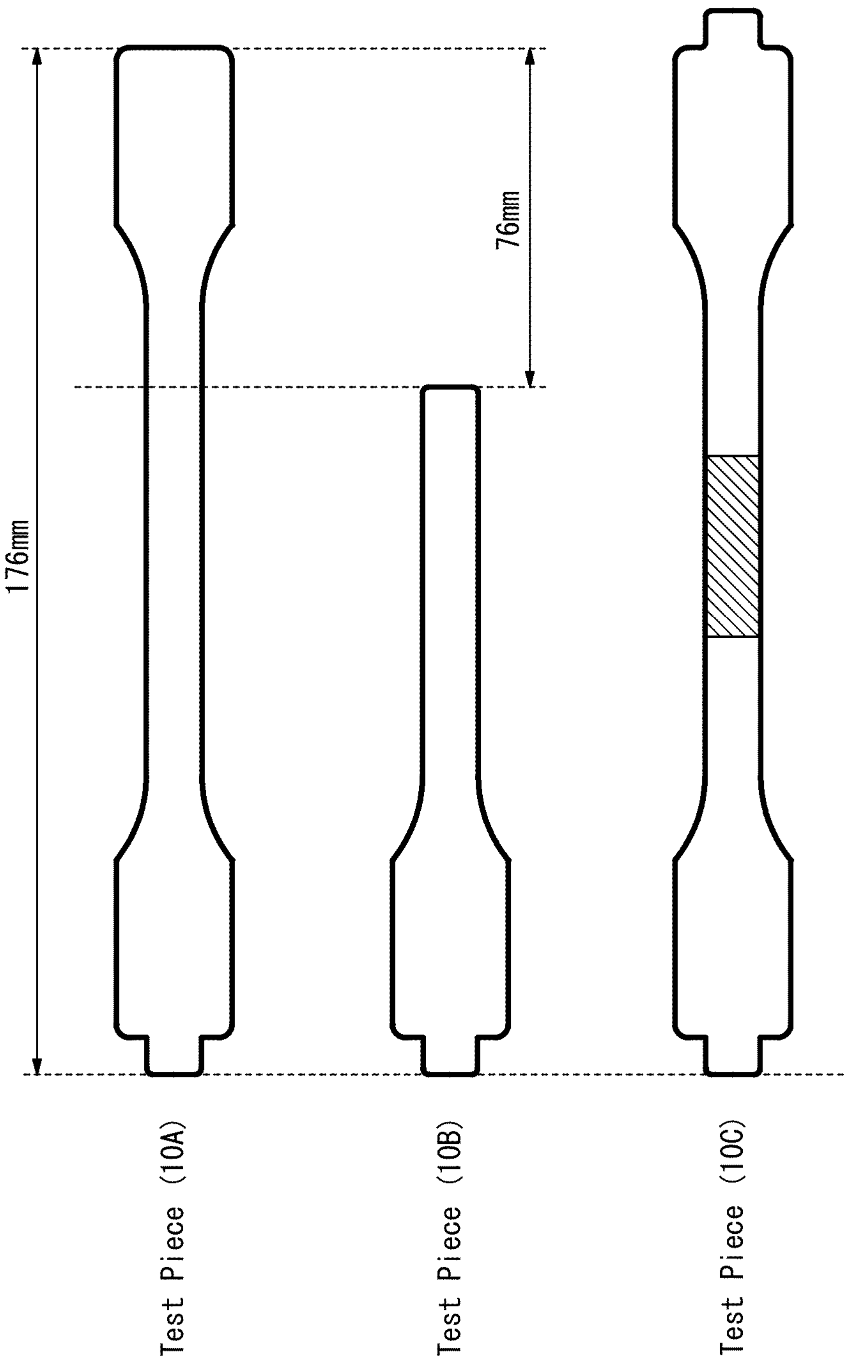

## INTERNATIONAL SEARCH REPORT

International application No.
**PCT/JP2024/013996**

### A. CLASSIFICATION OF SUBJECT MATTER

***C08L 25/08***(2006.01)i; ***C08K 5/01***(2006.01)i; ***C08L 51/04***(2006.01)i; ***C08L 83/04***(2006.01)i
FI: C08L25/08; C08K5/01; C08L51/04; C08L83/04

According to International Patent Classification (IPC) or to both national classification and IPC

### B. FIELDS SEARCHED

Minimum documentation searched (classification system followed by classification symbols)

C08L25/08; C08K5/01; C08L51/04; C08L83/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-101403 A (PS JAPAN CORPORATION) 05 June 2014 (2014-06-05)<br>claims, paragraph [0039], examples | 1-5, 9-15<br>6-8, 13, 16-19 |
| X<br>Y | JP 2018-090753 A (PS JAPAN CORPORATION) 14 June 2018 (2018-06-14)<br>claims, paragraphs [0028]-[0031], examples | 1-5, 9-15<br>4-8, 13, 16-19 |
| X<br>Y | JP 2014-169391 A (PS JAPAN CORPORATION) 18 September 2014 (2014-09-18)<br>claims, paragraphs [0028]-[0030], examples | 1-5, 9-15<br>4-8, 13, 16-19 |
| X<br>Y | JP 2014-201605 A (PS JAPAN CORPORATION) 27 October 2014 (2014-10-27)<br>claims, paragraphs [0041]-[0044], examples | 1-5, 9-15<br>4-8, 13, 16-19 |

☑ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/013996**

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2017-133040 A (PS JAPAN CORPORATION) 03 August 2017 (2017-08-03) claims, paragraphs [0028]-[0030], examples | 1-5, 9-15<br>4-8, 13, 16-19 |
| X<br>Y<br>A | JP 2020-063393 A (PS JAPAN CORPORATION) 23 April 2020 (2020-04-23) claims, paragraphs [0043]-[0051], [0070], examples | 1-9, 11-15<br>6-8, 16-19<br>10 |
| X<br>Y | JP 2019-108506 A (TOYO STYRENE CO., LTD.) 04 July 2019 (2019-07-04) claims, paragraphs [0027]-[0029], [0033], [0042], examples | 1-12, 14-15<br>6-8, 13, 16-19 |
| X<br>Y | JP 2019-156880 A (TOYO STYRENE CO., LTD.) 19 September 2019 (2019-09-19) claims, paragraphs [0024]-[0026], [0030], [0036], examples | 1-12, 14-15<br>6-8, 13, 16-19 |
| X<br>Y | JP 2019-156881 A (TOYO STYRENE CO., LTD.) 19 September 2019 (2019-09-19) claims, paragraphs [0024]-[0026], [0032], [0038], examples | 1-12, 14-15<br>6-8, 13, 16-19 |
| Y<br>A | JP 2002-212377 A (HITACHI CHEMICAL CO., LTD.) 31 July 2002 (2002-07-31) claims, paragraphs [0034]-[0038] | 16-19<br>1-15 |
| Y<br>A | JP 2004-051900 A (MITSUBISHI RAYON CO., LTD.) 19 February 2004 (2004-02-19) claims, paragraphs [0024]-[0028] | 16-19<br>1-15 |

Form PCT/ISA/210 (second sheet) (July 2022)

**INTERNATIONAL SEARCH REPORT**
**Information on patent family members**

International application No.
**PCT/JP2024/013996**

| Patent document cited in search report | Publication date (day/month/year) | Patent family member(s) | Publication date (day/month/year) |
|---|---|---|---|
| JP 2014-101403 A | 05 June 2014 | (Family: none) | |
| JP 2018-090753 A | 14 June 2018 | (Family: none) | |
| JP 2014-169391 A | 18 September 2014 | (Family: none) | |
| JP 2014-201605 A | 27 October 2014 | (Family: none) | |
| JP 2017-133040 A | 03 August 2017 | (Family: none) | |
| JP 2020-063393 A | 23 April 2020 | (Family: none) | |
| JP 2019-108506 A | 04 July 2019 | CN 110003582 A | |
| JP 2019-156880 A | 19 September 2019 | (Family: none) | |
| JP 2019-156881 A | 19 September 2019 | (Family: none) | |
| JP 2002-212377 A | 31 July 2002 | (Family: none) | |
| JP 2004-051900 A | 19 February 2004 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018044086 A
- JP H07282602 A
- WO 2021006265 A1
- JP 2014217434 A